(19) **Europäisches Patentamt / European Patent Office / Office européen des brevets**

(11) **EP 2 393 012 A1**

(12) # EUROPEAN PATENT APPLICATION
published in accordance with Art. 153(4) EPC

(43) Date of publication:
**07.12.2011  Bulletin 2011/49**

(51) Int Cl.:
***G06F 13/00*** *(2006.01)*

(21) Application number: **10735861.6**

(22) Date of filing: **28.01.2010**

(86) International application number:
**PCT/JP2010/051117**

(87) International publication number:
**WO 2010/087396 (05.08.2010 Gazette 2010/31)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.01.2009  JP 2009018612**
**30.01.2009  JP 2009020089**
**30.01.2009  JP 2009020102**
**09.03.2009  JP 2009055093**

(71) Applicant: **Sharp Kabushiki Kaisha**
**Osaka-shi, Osaka 545-8522 (JP)**

(72) Inventors:
• **KUTSUMI, Takeshi**
**Osaka 545-8522 (JP)**
• **MIYANO, Yasuhiro**
**Osaka 545-8522 (JP)**
• **FUKUTOMI, Hiroshi**
**Osaka 545-8522 (JP)**
• **TAKEHARA, Masaaki**
**Osaka 545-8522 (JP)**

(74) Representative: **Jones, Nicolas Guy**
**R.G.C. Jenkins & Co**
**26 Caxton Street**
**London SW1H 0RJ (GB)**

(54) **ELECTRONIC EQUIPMENT, SERVER, COMMUNICATION SYSTEM, DISPLAY CONTROL METHOD, DATA COMMUNICATION METHOD, ELECTRONIC DEVICE CONTROL METHOD, AND PROGRAM**

(57)    An electronic device provided which is capable of displaying an advertisement at an appropriate timing on a second display panel different from a first display-panel. The electronic device (100) includes: a storage device (90) for storing therein application software and first information associated with the software for specifying a server; a display control unit (11) for dispaying an operation screen of tje software on a liquid crystal panel (140) based on launch of the software; a detecting unit (13) for detecting that an input for operating the software has been received; a generating unit (14) for generating, based on the detection, a signal to be transmitted to the advertisement server (8000) specified by the first information; a transmitting unit (15) for transmitting the generated signal to the advertisement server (8000); and a receiving unit (16) for receiving, based on the transmission, advertisement image data indicating a advertisement from the advertisement server (8000). The display control unit (11) displays the advertisement that is on the advertisement image data, on a liquid crystal panel (240).

FIG.21

**Description**

TECHNICAL FIELD

The present invention relates to an electronic device having a touch panel, a server communicating with the electronic device, a communication system having the electronic device and the server, a display control method in the electronic device, a data communication method in the server, a program for controlling the electronic device, and a program for controlling the server. The present invention also relates to an electronic device having a plurality of display screens, a control method therefor, and a program for displaying information.

BACKGROUND ART

A communication system is conventionally known which includes an electronic device for displaying an advertisement received via a network, and a server for transmitting the advertisement to the electronic device via the network.

Meanwhile, an advertising method called "affiliate" is conventionally known. The affiliate is an advertising method in which when a viewer of a website visits another website via a link provided in the website and purchases a commercial product there, a reward is paid to a hosting person of the website having the link thereto.

Japanese Patent Laying-Open No. 2003-87420 (Patent Document 1) discloses an advertisement display system for transmitting and receiving advertisements as described above. The advertisement display system includes a mobile communication terminal and an advertisement display server. The mobile communication terminal includes a main display unit and a sub display unit provided at a rear side relative to the main display unit. The mobile communication terminal receives an advertisement from the advertisement display server and displays it on the sub display unit. By displaying the advertisement thereon, the mobile communication terminal can advertise to a third party other than the user of the mobile communication terminal.

As a device for displaying such an advertisement, Japanese Patent Laying-Open No. 2003-108282 (Patent Document 2) discloses a content display device for displaying a first advertisement image and a second advertisement image. The content display device selects an advertisement image corresponding to an attribute of the content display device, and displays the advertisement image thus selected.

As a system for displaying such an advertisement, Japanese Patent Laying-Open No. 2007-150946 (Patent Document 3) discloses a display system in which while reproducing a recorded television broadcasting (video content), a commercial recorded together with the video content is displayed in a designated location at a predetermined timing. Patent Document 3 also discloses an art for displaying advertisement information targeted for a viewing user, information of whom has been input in advance to a receiving terminal.

Japanese Patent Laying-Open No. 2007-164710 (Patent Document 4) discloses a banner distribution system for inserting banner data indicative of such an advertisement into content data distributed via the Internet. The banner distribution system measures how frequent attention is drawn to the banner data, and charges a fee in accordance with the frequency of attention drawn. Patent Document 4 also discloses a system for charging a fee based on occurrence of an event such as mouseover in an information terminal having the banner advertisement displayed thereon.

Each of Japanese Patent Laying-Open No. 2002-197361 (Patent Document 5), Japanese Patent Laying-Open No. 2008-9950 (Patent Document 6), and Japanese Patent Laying-Open No. 2008-90499 (Patent Document 7) discloses an art concerned with the above-described affiliate. Patent Document 5 discloses a reward giving system for fairly extracting a payee of a reward (one to be given a reward). Patent Document 6 discloses an affiliate server for identifying a shop via which access has been made, and calculating an affiliate advertisement fee for each shop. Patent Document 7 discloses an advertisement agent server for limiting an area targeted for an advertisement, based on the location of an advertiser.

PRIOR ART DOCUMENTS

PATENT DOCUMENTS

Patent Document 1: Japanese Patent Laying-Open No. 2003-87420
Patent Document 2: Japanese Patent Laying-Open No. 2003-108282
Patent Document 3: Japanese Patent Laying-Open No. 2007-150946
Patent Document 4: Japanese Patent Laying-Open No. 2007-164710
Patent Document 5: Japanese Patent Laying-Open No. 2002-197361
Patent Document 6: Japanese Patent Laying-Open No. 2008-9950

Patent Document 7: Japanese Patent Laying-Open No. 2008-90499

SUMMARY OF THE INVENTION

PROBLEMS TO BE SOLVED BY THE INVENTION

The advertisement display system disclosed in Patent Document 1 is capable of displaying an advertisement on the sub display unit of the mobile communication terminal in accordance with a status of the mobile communication terminal such as a location, a time period, whether or not it is folded, or whether or not it is being electrically charged. However, it cannot be expected that the advertisement using the sub display unit in the advertisement display system has an effect, because the advertisement is displayed thereon even when the third party does not see the mobile communication terminal. Further, in the advertisement display system, an advertisement desired by the user of the mobile communication terminal cannot be displayed on the sub display unit. Each of the apparatuses (devices and systems) of Patent Documents 2 to 7 is not provided with a sub display unit, so no advertisement can be displayed on the sub display unit in the first place.

In the arts disclosed in Patent Documents 5 and 6, the advertisement information is displayed together with the content on the same screen, which may result in inconvenience of the user who wishes to view the content.

In the art disclosed in Patent Document 7, the viewer of the advertisement information displayed on the display device provided at the rear side is different from the user who views the content displayed on the main screen. Accordingly, such a method of advertisement is incapable of specifying a person who views the advertisement, thereby failing to achieve targeted distribution of advertisement information. Further, in these arts, a user of a mobile phone advertises to a third party using his/her mobile phone for the sake of the advertiser. Hence, the user of the mobile phone may disable the display on the display device provided at the rear side thereof so as to stop displaying advertisement information not so necessary for him/her. As such, the advertisement information is less likely to be surely displayed.

The invention of the present application is made in view of the foregoing problems, and its object is to provide an electronic device capable of displaying an advertisement at an appropriate timing on a second display panel different from a first display panel; a server for providing the advertisement to the electronic device; a communication system including the electronic device and the server; a display control method in the electronic device; a data communication method in the server device; a program executable by the electronic device; and a program executable by the server.

Another object thereof is to provide an electronic device capable of displaying an advertisement concerned with information displayed on a first display panel, on a second display panel at an appropriate timing; a server for providing the advertisement to the electronic device; a communication system including the electronic device and the server; a display control method in the electronic device, a data communication method in the server device, a program executable by the electronic device, a program executable by the server.

Still another object thereof is to provide an electronic device capable of displaying an advertisement at an appropriate timing on a second display panel different from a first display panel; a server for providing the advertisement to the electronic device; a communication system including the electronic device and the server; a display control method in the electronic device; a data communication method in the server; a program executable by the electronic device; and a program executable by the server.

Yet another object thereof is to provide an electronic device capable of displaying an advertisement desired by a user on a second display panel different from a first display panel; a server for providing the advertisement to the electronic device; a communication system including the electronic device and the server; a display control method in the electronic device; a data communication method in the server device; a program executable by the electronic device; and a program executable by the server.

Still another object thereof is to surely display, on an electronic device, advertisement information included in a content to be displayed on the electronic device.

MEANS FOR SOLVING THE PROBLEMS

(1) According to an aspect of the present invention, an electronic device including a first display panel and a second display panel includes: a storage device for storing therein application software executable by the electronic device, and first information, associated with the application software, for specifying a server; display control means for displaying an operation screen of the application software on the first display panel based on launch of the application software; first detecting means for detecting that the electronic device receives a first input concerned with an operation to the application software; generating means for generating, based on the detection, a signal to be transmitted to the server specified by the first information; transmitting means for transmitting the signal generated, to the server; and receiving means for receiving first image data indicating an advertisement from the server, based on the transmission, the display control means displaying an image that is based on the first image data, on the second display panel.

Preferably, the storage device further stores therein second information for identifying the second display panel. As the signal, the generating means generates a signal including the second information. The transmitting means transmits the signal including the second information, to the server. As the first image data, the receiving means receives, from the server, image data generated by the server based on the second information.

Preferably, the first detecting means further detects that a second input for selecting the image that is based on the first image data is received. Based on the detection of the second input, the transmitting means transmits information indicating that the selection has been made and the second information to the server.

Preferably, the second display panel is a touch panel. The second input is an input to the touch panel.

Preferably, the storage device further stores therein second image data indicating a fingerprint of each user of the electronic device, and attribute information indicating an attribute of the user, in association with each other. The touch panel includes a plurality of photosensors built therein along a screen of the touch panel. The electronic device further includes determining means for determining whether or not the storage device stores therein second image data matching with image data sensed by the photosensors. When it is determined that the storage device stores therein the second image data matching therewith, the transmitting means further transmits, to the server, attribute information associated with the second image data thus determined to match therewith.

Preferably, the electronic device further includes second detecting means for detecting that an input for operating the electronic device has not been received for a predetermined period of time. When the second detecting means performs the detection while the operation screen of the application software is displayed on the first display panel, the display control means displays the image that is based on the first image data, on the second display panel.

Preferably, the display control means enables display on the second display panel when receiving a first command, and the display control means disables the display on the second display panel when receiving a second command. When the receiving means receives the first image data while the display control means disables the display on the second display panel due to reception of the second command, the receiving means transmits the first command to the display control unit, and the display control means displays, based on the first command, the image that is based on the first image data, on the second display panel.

Preferably, as the signal, the generating means generates a signal including information indicating the application software. The transmitting means transmits to the server the signal including the information indicating the application software. As the first image data, the receiving means receives, from the server, image data indicating an advertisement concerned with the application software executed.

Preferably, the first input is an input for launching the application software or an input for informing the server of an error taking place when executing the application software.

According to another aspect of the present invention, a server communicating with an electronic device including a first display panel and a second display panel includes: a storage device for storing therein first image data indicating an advertisement; first receiving means for receiving from the electronic device a signal including first information for identifying the first display panel and second information for identifying the second display panel; first transmitting means for transmitting the second information to another server; second receiving means for receiving device information of the second display panel from the another server based on the transmission, the device information of the second display panel being specified by the another server based on the second information; generating means for generating second image data from the first image data based on the device information received; and second transmitting means for transmitting the second image data generated, to the electronic device.

According to still another aspect of the present invention, a communication system includes an electronic device including a first display panel and a second display panel, and a first server. The electronic device includes: a first storage device for storing therein application software executable by the electronic device, first information, associated with the application software, for specifying the first server, and second information for identifying the second display panel; display control means for displaying an operation screen of the application software on the first display panel based on launch of the application software; first detecting means for detecting that the electronic device receives an input concerned with an operation to the application software; first generating means for generating, based on the detection, a signal including the second information and to be transmitted to the first server specified by the first information; and first transmitting means for transmitting the signal generated, to the first server. The first server includes: a second storage device for storing therein first image data indicating an advertisement; first receiving means for receiving the signal including the second information, from the electronic device; second transmitting means for transmitting the second information to a second server; second receiving means for receiving device information of the second display panel from the second server based on the transmission, the device information of the second display panel being specified by the second server based on the second information; second generating means for generating second image data from the first image data based on the device information received; and third transmitting means for transmitting the second image data generated, to the electronic device. The electronic device further includes third receiving means for receiving the second image data from the first server. The display control means displays an image that is based on the second image data, on the second display panel.

Preferably, the communication system further includes the second server. The second server includes fourth receiving means for receiving the second information from the first server, and fourth transmitting means for transmitting the device information of the second display panel to the first server, the device information of the second display panel being specified based on the second information.

According to yet another aspect of the present invention, a display control method in an electronic device including a first display panel and a second display panel, includes the steps of: displaying an operation screen of application software on the first display panel based on launch of the application software in the electronic device; detecting that the electronic device receives a first input concerned with an operation to the application software; generating, based on the detection, a signal to be transmitted to a server specified by information associated with the application software; transmitting the signal generated, to the server; receiving image data indicating an advertisement from the server, based on the transmission; and displaying an image that is based on the image data, on the second display panel.

Preferably, in the step of generating the signal, a signal including second information for identifying the second display panel is generated. In the step of transmitting the signal, the signal including the second information is transmitted to the server. In the step of receiving the image data, image data generated by the server based on the second information is received from the server.

Preferably, the display control method further includes the steps of: detecting that a second input for selecting the image that is based on the image data is received; and based on the detection of the second input, transmitting information indicating that the selection has been made and the second information to the server.

Preferably, in the step of generating the signal, a signal including information indicating the application software is generated. In the step of transmitting the signal, the signal including the information indicating the application software is transmitted to the server. In the step of receiving the image data, image data indicating an advertisement concerned with the application software executed is received from the server.

Preferably, the first input is an input for launching the application software or an input for informing the server of an error taking place when executing the application software.

According to still another aspect of the present invention, a data communication method in a server communicating with an electronic device including a first display panel and a second display panel includes the steps of: from the electronic device, receiving a signal including first information for identifying the first display panel and second information for identifying the second display panel; transmitting the second information to another server; from the another server, receiving device information of the second display panel based on the transmission, the device information of the second display panel being specified by the another server based on the second information; generating second image data from first image data indicating an advertisement, based on the device information received; and transmitting the second image data generated, to the electronic device.

According to yet another aspect of the present invention, a program for controlling an electronic device including a first display panel and a second display panel causes the electronic device to perform the steps of: displaying an operation screen of application software on the first display panel based on launch of the application software in the electronic device; detecting that the electronic device receives an input concerned with an operation to the application software; generating, based on the detection, a signal to be transmitted to a server specified by information associated with the application software; transmitting the signal generated, to the server; receiving image data indicating an advertisement, from the server based on the transmission; and displaying an image that is based on the image data, on the second display panel.

According to still another aspect of the present invention, a program for controlling a server communicating with an electronic device including a first display panel and a second display panel causes the server to perform the steps of: from the electronic device, receiving a signal including first information for identifying the first display panel and second information for identifying the second display panel; transmitting the second information to another server; from the another server, receiving device information of the second display panel based on the transmission, the device information of the second display panel being specified by the another server based on the second information; generating second image data from first image data indicating an advertisement, based on the device information received; and transmitting the second image data generated, to the electronic device.

(2)According to yet another aspect of the present invention, an electronic device includes: a first display panel; a second display panel; a storage device for storing therein software executable by the electronic device and specifying information for specifying server; display control means for displaying an operation screen of the software on the first display panel based on launch of the software; generating means for generating, based on occurrence of an error when executing the software, a signal including error information indicating the error, the signal being to be transmitted to the server specified by the specifying information; transmitting means for transmitting the signal generated, to the server; and receiving means for receiving first image data indicating an advertisement, from the server based on the transmission. The storage device further stores therein second image data indicating a message concerned with the error, and the display control means displays an image that is based on the first image data and an image that is based on the second image data, on the second display panel.

Preferably, from the server, the receiving means receives image data indicating a message concerned with the error, and stores the image data received, in the storage device as the second image data.

Preferably, the storage device further stores therein identification information for identifying the second display panel. As the signal, the generating means generates a signal further including the identification information. The transmitting means transmits the signal including the identification information, to the server. From the server, the receiving means receives image data generated by the server based on the identification information, as the first image data and the second image data.

Preferably, the electronic device further includes detecting means for detecting that an input for selecting the image that is based on the first image data is received. Based on the detection of the input, the transmitting means transmits information indicating that the selection has been made and the identification information to the server.

Preferably, the second display panel is a touch panel, and the input is an input to the touch panel.

Preferably, the storage device further stores therein third image data indicating a fingerprint of a user of the electronic device, and attribute information indicating an attribute of the user, in association with the user. The touch panel includes a plurality of photosensors built therein along a screen of the touch panel. The electronic device further includes determining means for determining whether or not the storage device stores therein third image data matching with image data obtained by sensing performed by the photosensor. When it is determined that the third image data matching therewith is stored in the storage device, the transmitting means further transmits, to the server, attribute information associated with the third image data determined to match therewith.

Preferably, the display control means enables display on the second display panel when receiving a first command, and disables the display on the second display panel when receiving a second command. When the receiving means receives the first image data while the display control means disables the display on the second display panel due to reception of the second command, the receiving means transmits the first command to the display control unit, and based on the first command, the display control means displays an image that is based on the first image data and an image that is based on the second image data, on the second display panel.

According to still another aspect of the present invention, a server communicating with an electronic device including a first display panel and a second display panel, and a first communication device includes: a storage device for storing therein device information of the second display panel and first image data indicating an advertisement; first receiving means for receiving from the electronic device a signal including error information indicating an error taking place when executing software in the electronic device; first transmitting means for transmitting the error information to the first communication device; second receiving means for receiving second image data indicating a message concerned with the error, from the first communication device based on the transmission of the error information; generating means for generating third image data from the first image data and generating fourth image data from the second image data, based on the device information; and second transmitting means for transmitting the second image data and the fourth image data to the electronic device.

Preferably, the server further includes third receiving means for receiving image data indicating an advertisement from a second communication device, and storing the image data received, in the storage device as the first image data.

Preferably, the storage device stores therein identification information for identifying the second display panel, in association with the device information. The first receiving means receives, as the signal, a signal further including the identification information. The generating means generates the third image data and the fourth image data based on the device information associated with the identification information received.

According to yet another aspect of the present invention, a communication system includes an electronic device including a first display panel and a second display panel, and a first communication device. The electronic device includes a first storage device for storing therein software executable by the electronic device, specifying information for specifying the first communication device, and identification information for identifying the second display panel; display control means for displaying an operation screen of the software on the first display panel based on launch of the software; generating means for generating, based on occurrence of an error when executing the software, a signal including error information indicating the error and the identification information, the signal being to be transmitted to the first communication device specified by the specifying information; and first transmitting means for transmitting the signal generated, to the first communication device. The first communication device includes a second storage device for storing therein device information of the second display panel and the identification information in association with each other, and storing therein first image data indicating an advertisement; first receiving means for receiving the signal including the error information and the identification information, from the electronic device; second transmitting means for transmitting the error information to a second communication device; second receiving means for receiving second image data indicating a message concerned with the error, from the second communication device based on the error information; second generating means for generating third image data from the first image data and generating fourth image data from the second image data based on the device information associated with the identification information received; and third transmitting means for transmitting the second image data and the fourth image data to the electronic device. The electronic device further includes third receiving means for receiving the second image data and the fourth image data from the first communication device, and the display control means displays an image that is based on the second image data and an image that is based on the fourth image data, on the second display panel.

Preferably, the communication system further includes the second communication device. The second communication device includes fourth receiving means for receiving the error information from the first communication device, and fourth transmitting means for transmitting the second image data to the first communication device.

According to another aspect of the present invention, a display control method in an electronic device including a first display panel and a second display panel includes the steps of: displaying an operation screen of software on the first display panel based on launch of the software in the electronic device; generating, based on occurrence of an error when executing the software, a signal including error information indicating the error, the signal being to be transmitted to a server specified by information stored in the electronic device; transmitting the signal generated, to the server; receiving first image data indicating an advertisement, from the server based on the transmission; and displaying, on the second display panel, an image that is based on the first image data and an image that is based on second image data indicating a message concerned with the error and stored in a storage device of the electronic device.

Preferably, the display control method further includes the steps of: from the server, receiving image data indicating a message concerned with the error; and storing the image data received, in the storage device as the second image data.

Preferably, the signal including the error information further includes identification information for identifying the second display panel. Each of the first image data and the second image data is image data generated by the server based on the identification information.

Preferably, the display control method further includes the steps of: detecting that an input for selecting the image that is based on the first image data is received; and based on the detection of the input, transmitting information indicating that the selection has been made and the identification information to the server.

According to still another aspect of the present invention, a data communication method in a server communicating with an electronic device including a first display panel and a second display panel, and a first communication device includes the steps of: from the electronic device, receiving a signal including error information indicating an error taking place when executing software in the electronic device; transmitting the error information to the first communication device; from the first communication device, receiving first image data indicating a message concerned with the error, based on the transmission of the error information; generating second image data from the first image data and generating fourth image data from third image data indicating an advertisement and stored in a storage device of the server, based on device information of the second display panel; and transmitting the second image data and the fourth image data to the electronic device.

Preferably, the data communication method further includes the steps of: receiving image data indicating an advertisement, from a second communication device; and storing the image data received, in the storage device as the third image data.

Preferably, the signal including the error information further includes identification information for identifying the second display panel. The second image data and the fourth image data are generated based on device information associated with the identification information received.

According to yet another aspect of the present invention, a program for controlling an electronic device including a first display panel and a second display panel causes the electronic device to perform the steps of: displaying an operation screen of software on the first display panel based on launch of the software in the electronic device; generating, based on occurrence of an error when executing the software, a signal including error information indicating the error, the signal being to be transmitted to a server specified by information stored in the electronic device; transmitting the signal generated, to the server; receiving first image data indicating an advertisement, from the server based on the transmission; and displaying, on the second display panel, an image that is based on the first image data and an image that is based on second image data indicating a message concerned with the error and stored in a storage device of the electronic device.

According to still another aspect of the present invention, a program for controlling a second communication device communicating with an electronic device including a first display panel and second display panel, and a first communication device causes the second communication device to perform the steps of: from the electronic device, receiving a signal including error information indicating an error taking place when executing software in the electronic device; transmitting the error information to the first communication device; from the first communication device, receiving first image data indicating a message concerned with the error, based on the transmission of the error information; generating second image data from the first image data and generating fourth image data from third image data indicating an advertisement and stored in a storage device of the second communication device, based on device information of the second display panel; and transmitting the second image data and the fourth image data to the electronic device.

(3) According to yet another aspect of the present invention, an electronic device including a first display panel and a second display panel includes: transmitting means for transmitting, to a first server, a first signal requesting transmission of first information for displaying a web page including a first advertisement; receiving means for receiving the first information, and second information, associated with the first advertisement, for specifying second server, from the first server based on the transmission of the first signal; display control means for displaying the web page on the first display panel based on the first information; first detecting means for detecting that the electronic device receives a first input for selecting the first advertisement in the web page displayed; and generating means for generating, based on the detection, a second signal to be transmitted to the server specified by the second information. When the detection is performed, the transmitting means further transmits the second signal generated, to the second server. Based on the transmission of the second signal, the receiving means further receives, from the second server, first image data including more detailed information than information indicated by the first advertisement selected. The display control means displays a second advertisement that is based on the first image data, on the second display panel.

Preferably, the receiving means receives the first image data via the first server.

Preferably, the electronic device further includes a storage device for storing therein third information for identifying the second display panel. The generating means generates, as the second signal, a signal including the third information. The transmitting means transmits the signal including the third information, to the second server. As the first image data, the receiving means receives image data generated by the second server based on the third information, from the second server.

Preferably, the electronic device further includes second detecting means for detecting that the electronic device receives a second input for selecting the second advertisement displayed on the second display panel. Based on the detection of the second input, the generating means generates a third signal including information indicating that the selection has been made and the third information. The transmitting means transmits the third signal to the second server.

Preferably, the second display panel is a touch panel. The second input is an input to the touch panel.

Preferably, the storage device stores therein second image data indicating a fingerprint of each user of the electronic device and attribute information indicating an attribute of the user, in association with each other. The touch panel includes a plurality of photosensors built therein along a screen of the touch panel. The electronic device further includes determining means for determining whether or not the storage device stores therein second image data matching with image data sensed by the photosensors. When it is determined that the storage device stores therein the second image data matching therewith, the transmitting means further transmits attribute information associated with the second image data determined to match therewith, to the second server.

Preferably, the electronic device further includes third detecting means for detecting that an input for operating the electronic device has not been received for a predetermined period of time. When the third detecting means performs the detection while the first advertisement is displayed on the first display panel, the display control means displays the second advertisement on the second display panel.

Preferably, the display control means enables display on the second display panel when receiving a first command, and disables the display on the second display panel when receiving a second command. When the receiving means receives the first image data while the display control means disables the display on the second display panel due to reception of the second command, the receiving means transmits the first command to the display control unit, and the display control means displays the second advertisement on the second display panel based on the first command.

According to yet another aspect of the present invention, an electronic device including a first display panel and a second display panel includes: transmitting means for transmitting, to a first server, a first signal requesting transmission of first information for displaying a web page including a first advertisement; receiving means for receiving the first information, and second information, associated with the first advertisement, for specifying a second server, from the first server based on the transmission of the first signal; display control means for displaying the web page on the first display panel based on the first information; and first detecting means for detecting that the electronic device receives a first input for selecting the first advertisement in the web page displayed. Based on the transmission of the first signal, the receiving means receives, from the second server specified based on the second information, first image data for displaying a second advertisement including more detailed information than information indicated by the first advertisement. When the detection is performed, the display control means displays the second advertisement that is based on the first image data, on the second display panel.

According to still another aspect of the present invention, a server communicating with an electronic device including a first display panel and a second display panel includes: a storage device for storing therein first information for displaying a web page including a first advertisement, and second information, associated with the first advertisement, for specifying another server; transmitting means for transmitting the first information and the second information to the electronic device based on reception of a signal from the electronic device, the signal requesting transmission of the first information to the electronic device; and receiving means for receiving a signal including third information for identifying the first display panel and fourth information for identifying the second display panel, from the electronic device based on the transmission. Based on the reception, the transmitting means transmits the third information and the fourth information to the another server.

Preferably, based on the transmission of the third information and the fourth information, the receiving means receives, from the another server, image data generated by the another server based on the fourth information and including more detailed information than information indicated by the first advertisement. The transmitting means further transmits the image data received, to the electronic device.

According to yet another aspect of the present invention, a server communicating with an electronic device including a first display panel and a second display panel includes: a storage device for storing therein first image data indicating a first advertisement, second image data associated with the first image data and including more detailed information than information indicated by the first advertisement, and device information of the second display panel; receiving means for receiving, from the electronic device via another server, information indicating that the first advertisement displayed in the electronic device is selected, first information for identifying the first display panel, and second information for identifying the second display panel; generating means for generating third image data from the second image data based on device information of the second display panel, the device information of the second display panel being specified by the second information; and transmitting means for transmitting the third image data to the electronic device.

Preferably, the transmitting means transmits the third image data to the electronic device via the another server.

According to still another aspect of the present invention, a communication system includes a first server and an electronic device including a first display panel and a second display panel. The first server includes a storage device for storing therein first information for displaying a web page including a first advertisement, and second information, associated with the first advertisement, for specifying a second server, and first transmitting means for transmitting the first information and the second information to the electronic device, based on reception of a first signal from the electronic device, the first signal requesting transmission of the first information to the electronic device. The electronic device includes second transmitting means for transmitting the first signal to the first server, first receiving means for receiving the first information and the second information from the first server based on the transmission of the first signal, display control means for displaying the web page on the first display panel based on the first information received, and detecting means for detecting that the electronic device receives a first input for selecting the first advertisement in the web page displayed, when the detection is performed, the second transmitting means further transmitting a second signal to the second server specified based on the second information, the first receiving means further receiving first image data including more detailed information than information indicated by the first advertisement selected, from the second server based on the transmission of the second signal, the display control means displaying a second advertisement that is based on the first image data, on the second display panel.

Preferably, the communication system further includes the second server. The second server includes: a storage device for storing therein second image data indicating the first advertisement, third image data associated with the second image data and including more detailed information than the information indicated by the first advertisement, and device information of the second display panel; second receiving means for receiving, from the electronic device via the first server, information indicating that the first advertisement displayed in the electronic device has been selected, third information for identifying the first display panel, and fourth information for identifying the second display panel, generating means for generating the first image data from the third image data based on the device information of the second display panel, the device information of the second display panel being specified based on the fourth information; and third transmitting means for transmitting the first image data to the electronic device.

According to yet another aspect of the present invention, a display control method in an electronic device including a first display panel and a second display panel includes the steps of: transmitting, to a first server, a first signal requesting transmission of first information for displaying a web page including a first advertisement; receiving the first information, and second information, associated with the first advertisement, for specifying a second server, from the first server based on the transmission of the first signal; displaying the web page on the first display panel based on the first information; detecting that the electronic device receives an input for selecting the first advertisement in the web page displayed; generating, based on the detection, a second signal to be transmitted to the server specified by the second information; transmitting the second signal generated, based on the detection; receiving image data including more detailed information than information indicated by the first advertisement selected, from the second server based on the transmission of the second signal; and displaying a second advertisement that is based on the image data, on the second display panel.

According to still another aspect of the present invention, a display control method in an electronic device including a first display panel and a second display panel includes the steps of: transmitting, to a first server, a first signal requesting transmission of first information for displaying a web page including a first advertisement; receiving the first information, and second information, associated with the first advertisement, for specifying a second server, from the first server based on the transmission of the first signal; receiving, based on the transmission of the first signal, image data for displaying a second advertisement including more detailed information than information indicated by the first advertisement, from the second server specified based on the second information; displaying the web page on the first display panel based on the first information; detecting that the electronic device receives an input for selecting the first advertisement in the web page displayed; and when the detection is performed, displaying the second advertisement that is based on the image data, on the second display panel.

According to yet another aspect of the present invention, a data communication method in a server communicating with an electronic device including a first display panel and a second display panel includes the steps of: based on reception of a signal from the electronic device to request transmission of first information for displaying a web page including an advertisement, transmitting to the electronic device the first information, and second information, associated with the advertisement, for specifying another server; based on the transmission, receiving from the electronic device a signal including third information for identifying the first display panel and fourth information for identifying the second display panel; and based on the reception, transmitting the third information and the fourth information to the another server.

According to still another aspect of the present invention, a data communication method in a server for communicating with an electronic device including a first display panel and a second display panel includes the steps of: from the electronic device via another server, receiving information indicating that an advertisement displayed in the electronic device has been selected, first information for identifying the first display panel, and second information for identifying the second display panel; based on device information of the second display panel specified by the second information, generating third image data from second image data including more detailed information than information indicated by the advertisement and associated with first image data indicating the advertisement; and transmitting the third image data to the electronic device.

According to yet another aspect of the present invention, a program for controlling an electronic device including a first display panel and a second display panel causes the electronic device to perform the steps of: transmitting, to a first server, a first signal requesting transmission of first information for displaying a web page including a first advertisement; receiving the first information, and second information, associated with the first advertisement, for specifying a second server, from the first server based on the transmission of the first signal; displaying the web page on the first display panel based on the first information; detecting that the electronic device receives an input for selecting the first advertisement in the web page displayed; generating, based on the detection, a second signal to be transmitted to the server specified by the second information; transmitting the second signal generated, based on the detection; receiving image data including more detailed information than information indicated by the first advertisement selected, from the second server based on the transmission of the second signal; and displaying a second advertisement that is based on the image data, on the second display panel.

According to still another aspect of the present invention, a program for controlling an electronic device including a first display panel and a second display panel causes the electronic device to perform the steps of: transmitting, to a first server, a first signal requesting transmission of first information for displaying a web page including a first advertisement; receiving the first information, and second information, associated with the first advertisement, for specifying a second server, from the first server based on the transmission of the first signal; receiving, based on the transmission of the first signal, image data for displaying a second advertisement including more detailed information than information indicated by the first advertisement, from the second server specified based on the second information; displaying the web page on the first display panel based on the first information; detecting that the electronic device receives an input for selecting the first advertisement in the web page displayed; and when the detection is performed, displaying the second advertisement that is based on the image data, on the second display panel.

According to yet another aspect of the present invention, a program for controlling a server communicating with an electronic device including a first display panel and a second display panel causes the server to perform the steps of: based on reception of a signal from the electronic device to request transmission of first information for displaying a web page including an advertisement, transmitting to the electronic device the first information, and second information, associated with the advertisement, for specifying another server; based on the transmission, receiving from the electronic device a signal including third information for identifying the first display panel and fourth information for identifying the second display panel; and based on the reception, transmitting the third information and the fourth information to the another server.

According to still another aspect of the present invention, a program for controlling a server communicating with an electronic device including a first display panel and a second display panel causes the server to perform the steps of: from the electronic device via another server, receiving information indicating that an advertisement displayed in the electronic device has been selected, first information for identifying the first display panel, and second information for identifying the second display panel; based on device information of the second display panel specified by the second information, generating third image data from second image data including more detailed information than information indicated by the advertisement and associated with first image data indicating the advertisement; and transmitting the third image data to the electronic device.

(4) According to yet another aspect of the present invention, an electronic device includes: first display means for displaying an image thereon; second display means for displaying an image thereon; storage means for storing therein content data to be displayed on the first display means; extracting means for extracting data of an image given a specific attribute, from the content data stored; generating means for, based on the data of the image given the specific attribute thus extracted by the extracting means, generating data for displaying the image on the second display means; and control means for displaying the image given the specific attribute, on the second display means based on the data generated by the generating means.

Preferably, the electronic device further includes determining means for determining whether or not the image given the specific attribute is displayed on the first display means. The extracting means extracts the data of the image given the specific attribute, when the determining means determines that the image given the specific attribute is not displayed on the first display means.

Preferably, the storage means stores therein programs of a plurality of applications including a first application for displaying the content data on the first display means. The electronic device further includes application executing means for executing a program of an application stored in the storage means. The determining means determines that the image given the specific attribute is not displayed on the first display means, when the first application and another application different from the first application are launched and a display screen of the another application is displayed on the first display means so as to lie over a display location of the image given the specific attribute in a display screen of the first application.

Preferably, the extracting means extracts a plurality of pieces of data of images given the specific attribute, from the content data. The generating means generates pieces of data for displaying the images on the second display means, respectively for the plurality of pieces of data of the images thus extracted by the extracting means. Based on the plurality of pieces of data thus generated by the generating means for displaying the images on the second display means, the control means alternately displays the plurality of images given the specific attribute on the second display means.

Preferably, the specific attribute includes link information. The second display means has a touch sensor built therein. The electronic device further includes access means for accessing the link information when a touch operation is performed onto the second display means while the second display means displays the image given the specific attribute.

Preferably, the touch sensor is constituted by a photosensor.

Preferably, the generating means generates the data such that the image given the specific attribute is displayed in a size corresponding to the second display means.

According to still another aspect of the present invention, a control method for an electronic device including a first display means and a second display means each for displaying an image thereon includes the steps of: storing content data to be displayed on the first display means; extracting data of an image given a specific attribute, from the content data stored; generating data for displaying the image on the second display means, based on the data of the image given the specific attribute thus extracted; and based on the data generated, displaying the image given the specific attribute on the second display means.

According to yet another aspect of the present invention, a computer readable program for information display is executed by an electronic device including first display means and second display means each for displaying an image thereon. The program causes the electronic device to perform the steps of: storing content data to be displayed on the first display means; extracting data of an image given a specific attribute, from the content data stored; generating data for displaying the image on the second display means, based on the data of the image given the specific attribute thus extracted; and based on the data generated, displaying the image given the specific attribute on the second display means.

EFFECTS OF THE INVENTION

According to the present invention, an advertisement can be displayed at an appropriate timing on a second display panel different from a first display panel. Also, according to the present invention, an advertisement concerned with information displayed on the first display panel can be displayed on the second display panel at the appropriate timing. Also, according to the present invention, advertisement desired by a user of the electronic device can be displayed on the second display panel different from the first display panel.

According to the present invention, in the electronic device having a plurality of display means, data of an image given a specific attribute is extracted from content data to be displayed on first display means. Based on data generated based on the data of the image thus extracted, the image given the specific attribute in the content data is displayed on second display means. In this way, when an attribute concerned with advertisement information is set as the specific attribute, the image of the advertisement included in the content data is surely displayed on the second display means provided in the electronic device separately from the first display means, which is used by the user to display the content data or the like.

BRIEF DESCRIPTION OF THE DRAWINGS

Fig. 1 shows an appearance of an electronic device included in a communication system according to the present embodiment.
Fig. 2 is a block diagram showing a hardware configuration of the electronic device.
Fig. 3 shows a configuration of a liquid crystal panel of the electronic device, and peripheral circuits of the liquid crystal panel.
Fig. 4 is a cross sectional view of the liquid crystal panel and a backlight.
Fig. 5 shows a timing chart upon operating a photosensor circuit.
Fig. 6 is a cross sectional view of the liquid crystal panel and backlight, showing how a photo diode receives light from the backlight upon scanning.
Fig. 7 shows a schematic configuration of a command.
Fig. 8 illustrates a command of type "000".
Fig. 9 illustrates a command of type "001".
Fig. 10 illustrates a command of type "010".
Fig. 11 illustrates a command of type "011".
Fig. 12 illustrates a command of type "100".
Fig. 13 illustrates a command of type "101".
Fig. 14 shows a schematic configuration of response data.
Fig. 15 shows an image obtained by scanning a finger.
Fig. 16 is a circuit diagram of another photosensor built-in liquid crystal panel.
Fig. 17 is a cross sectional view showing how the photo diode receives external light upon scanning.
Fig. 18 is a block diagram showing a hardware configuration of a variation of the electronic device.
Fig. 19 is a schematic configuration of the communication system.
Fig. 20 is a block diagram showing a hardware configuration of a computer system serving as an advertisement server.
Fig. 21 shows functional blocks of the electronic device.
Fig. 22 shows functional blocks of the advertisement server.
Fig. 23 shows functional blocks of an ASP server.
Fig. 24 schematically shows hardware environment information.
Fig. 25 schematically shows device information of the liquid crystal panel.
Fig. 26 schematically shows server specifying information stored in a storage device of the electronic device.
Fig. 27 shows the electronic device executing spreadsheet application software.
Fig. 28 shows that the electronic device displays on the liquid crystal panel an advertisement that is based on advertisement image data.
Fig. 29 shows a sequence in the communication system.
Fig. 30 shows a control structure in the electronic device.
Fig. 31 shows a control structure in the advertisement server.
Fig. 32 shows a control structure in the ASP server.
Fig. 33 shows functional blocks of an electronic device, which is a variation of the electronic device.
Fig. 34 shows functional blocks of another electronic device, which is another variation of the electronic device.
Fig. 35 shows a schematic configuration of a communication system.
Fig. 36 shows blocks of an electronic device.
Fig. 37 shows blocks of an ASP server.
Fig. 38 shows blocks of another server.
Fig. 39 shows blocks of a terminal device.
Fig. 40 shows the electronic device executing spreadsheet application software.
Fig. 41 shows the electronic device displaying on the liquid crystal panel an image that is based on display image data.

Fig. 42 shows a sequence in the communication system.

Fig. 43 is a flowchart showing a control structure in the electronic device.

Fig. 44 is a flowchart showing a control structure in the ASP server.

Fig. 45 is a flowchart showing a control structure of another server.

Fig. 46 is a flowchart of a control structure in the terminal device.

Fig. 47 shows functional blocks of another electronic device, which is a variation of the electronic device.

Fig. 48 shows a schematic configuration of a communication system.

Fig. 49 shows functional blocks of an electronic device.

Fig. 50 shows functional blocks of a search server.

Fig. 51 shows functional blocks of an ASP server.

Fig. 52 shows functional blocks of a terminal device.

Fig. 53 shows the electronic device displaying a web page on another liquid crystal panel.

Fig. 54 shows a state after the electronic device displays a detailed advertisement that is based on detailed advertisement image data, on the liquid crystal panel.

Fig. 55 shows a sequence in the communication system.

Fig. 56 shows a control structure in the electronic device.

Fig. 57 shows a control structure in the search server.

Fig. 58 shows a control structure in the ASP server.

Fig. 59 shows a control structure in the terminal device.

Fig. 60 shows functional blocks of an electronic device, which is a variation of the electronic device.

Fig. 61 shows functional blocks of an electronic device, which is another variation of the electronic device.

Fig. 62 shows a sequence in another variation of the communication system.

Fig. 63 shows a control structure in the electronic device constituting the communication system.

Fig. 64 schematically shows one exemplary configuration of a network system including the electronic device of Fig. 1.

Fig. 65 schematically shows a functional configuration of the electronic device of Fig. 1.

Fig. 66 is a flowchart of a sub-screen advertisement display process performed by a first unit of the electronic device of Fig. 1.

Fig. 67 shows exemplary HTM data downloaded by the electronic device of Fig. 64.

Fig. 68 illustrates one exemplary format of an advertisement display source description generating command generated in the sub-screen advertisement display process of Fig. 64.

Fig. 69 is a flowchart of an advertisement display process executed by a second unit of Fig. 1.

Fig. 70 shows one exemplary advertisement display source description generated in the advertisement display process of Fig. 69.

Fig. 71 illustrates one exemplary main screen display command generated in the advertisement display process of Fig. 69.

Fig. 72 illustrates a first variation of the advertisement display function in the electronic device of Fig. 1.

Fig. 73 illustrates a second variation of the advertisement display function in the electronic device of Fig. 1.

Fig. 74 illustrates a second variation of the advertisement display function in the electronic device of Fig. 1.

Fig. 75 illustrates a third variation of the advertisement display function in the electronic device of Fig. 1.

Fig. 76 illustrates a fourth variation of the advertisement display function in the electronic device of Fig. 1.

Fig. 77 is a flowchart of the sub-screen advertisement display process performed by the first unit as a sixth variation of the advertisement display function in the electronic device of Fig. 1.

Fig. 78 is a schematic diagram showing an appearance of an information process system including the electronic device and one exemplary information processing terminal, each of which is one embodiment of the present invention.

MODES FOR CARRYING OUT THE INVENTION

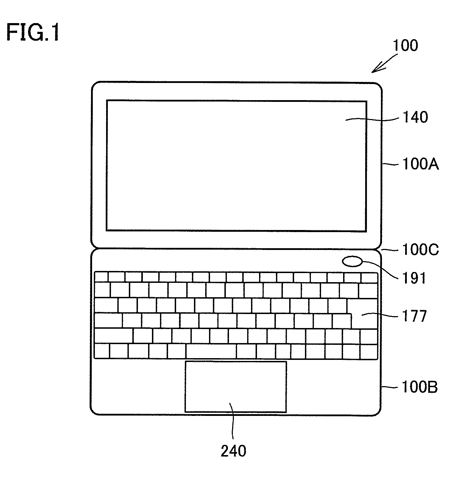

Embodiments of the present invention will be described with reference to figures. In the description below, the same components are given the same reference characters. Their names and functions are also the same. Hence, they are not repeatedly described in detail. The following describes one embodiment of an electronic device of the present invention with reference to Figs. 1-78.

Appearance of Electronic Device

Fig. 1 shows an appearance of an electronic device 100 of the present embodiment. Referring to Fig. 1, electronic device 100 includes a first casing 100A and a second casing 100B.

First casing 100A and second casing 100B are foldably connected to each other via a hinge 100C. First casing 100A includes a photosensor built-in liquid crystal panel 140. Second casing 100B includes a photosensor built-in liquid crystal panel 240. As such, electronic device 100 includes the two photosensor built-in liquid crystal panels.

Electronic device 100 is configured as a mobile device having a display function, such as a PDA (Personal Digital Assistant), a notebook type personal computer, a mobile phone, or an electronic dictionary.

As to Hardware Configuration

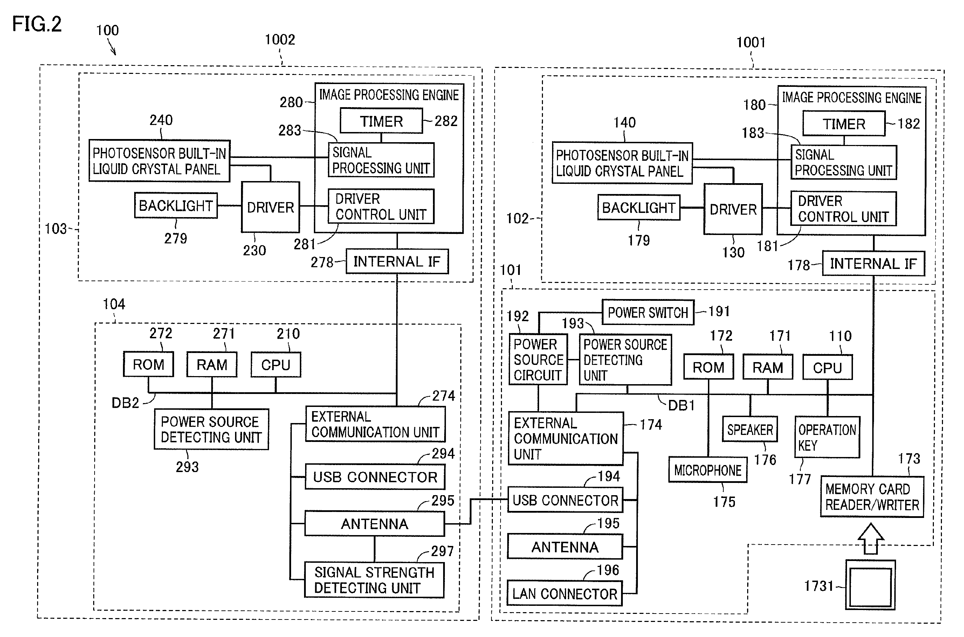

Next, referring to Fig. 2, one embodiment of a specific configuration of electronic device 100 will be described. Fig. 2 is a block diagram showing a hardware configuration of electronic device 100.

Electronic device 100 includes a first unit 1001 and a second unit 1002. Second unit 1002 is connected to first unit 1001 so that it is detachable from electronic device 100. First unit 1001 includes a main device 101 and a display device 102. Second unit 1002 includes a display device 103 and a main device 104.

First casing 100A contains display device 102 therein. Second casing 100B contains main device 101 therein. Second casing 100B also contains second unit 1002 therein.

As to First Unit

Main device 101 includes a CPU (Central Processing Unit) 110, a RAM (Random Access Memory) 171, a ROM (Read-Only Memory) 172, a memory card reader/writer 173, an external communication unit 174, a microphone 175, a speaker 176, an operation key 177, a power switch 191, a power source circuit 192, a power source detecting unit 193, a USB (Universal Serial Bus) connector 194, an antenna 195, and a LAN (Local Area Network) connector 196. These components (110, 171-177, 193) are connected to one another via a data bus DB 1. To memory card reader/writer 173, a memory card 1731 is inserted.

CPU 110 executes a program. Operation key 177 receives an instruction input from a user of electronic device 100. RAM 171 stores therein data generated by execution of a program by CPU 110 or input data provided via operation key 177, in a volatile manner. ROM 172 stores data therein in a nonvolatile manner. ROM 172 is a ROM in and from which data can be written and deleted, such as an EPROM (Erasable Programmable Read-Only Memory) or a flash memory.

External communication unit 174 communicates with another electronic device. Specifically, external communication unit 174 communicates with for example second unit 1002 via USB connector 194. Further, external communication unit 174 wirelessly communicates with for example second unit 1002 via antenna 195. Further, external communication unit 174 communicates with other electronic devices via LAN connector 196 in a wired manner.

Main device 101 may communicate with other electronic devices through wireless communication other than Bluetooth®. For example, external communication unit 174 may wirelessly communicate with another electronic device connected to the LAN, via a wireless LAN antenna not shown in the figure. Alternatively, external communication unit 174 may wirelessly communicate with another electronic device via an infrared port not shown in the figure.

Power switch 191 is a switch for launching electronic device 100.

When power switch 191 is turned on, power source circuit 192 supplies power via power source detecting unit 193 to the components and display device 102 each of which is connected to data bus DB 1. Further, when power switch 191 is turned on, power source circuit 192 supplies power to external communication unit 174 not via power source detecting unit 193.

Power source detecting unit 193 detects an output from power source circuit 192. Further, power source detecting unit 193 sends information concerned with the detected output (for example, a voltage value or a current value) to CPU 110.

USB connector 194 is used to connect first unit 1001 to second unit 1002. It should be noted that main device 101 may include another USB connector in addition to USB connector 194.

First unit 1001 transmits data to second unit 1002 via USB connector 194. Further, first unit 1001 receives data from second unit 1002 via USB connector 194. Furthermore, first unit 1001 supplies power to second unit 1002 via USB connector 194.

Antenna 195 is used for communication between first unit 1001 and other communication devices (for example, second unit 1002) in compliance with the Bluetooth® standard. LAN connector 196 is used to connect electronic device 100 to the LAN.

Display device 102 includes a driver 130, a photosensor built-in liquid crystal panel 140 (hereinafter, referred to as "liquid crystal panel 140"), an internal IF 178, a backlight 179, and an image processing engine 180.

Driver 130 is a driving circuit for driving liquid crystal panel 140 and backlight 179. Various driving circuits in driver 130 will be described later.

Liquid crystal panel 140 is a device including a function of a liquid crystal display and a function of a photosensor. In other words, liquid crystal panel 140 is capable of displaying an image using liquid crystal, and sensing using a photosensor. Details of liquid crystal panel 140 will be described later.

Internal IF (Interface) 178 interfaces exchanges of data between main device 101 1 and display device 102.

Backlight 179 is a light source provided at the back surface of liquid crystal panel 140. Backlight 179 emits uniform light to the back surface.

Image processing engine 180 controls operations of liquid crystal panel 140 via driver 130. This control is performed based on various data sent from main device 101 via internal IF 178. The various data includes below-described commands. Further, image processing engine 180 processes data sent from liquid crystal panel 140, and sends the processed data to main device 101 via internal IF 178. Further, image processing engine 180 includes a driver control unit 181, a timer 182, and a signal processing unit 183.

Driver control unit 181 sends a control signal to driver 130 to control operations of driver 130. Further, driver control unit 181 analyzes a command sent from main device 101. Further, driver control unit 181 sends to driver 130 a control signal that is based on a result of the analysis. Details of the operations of driver 130 will be described later.

Timer 182 generates time information and sends the time information to signal processing unit 183.

Signal processing unit 183 receives data sent from the photosensor. The data thus output from the photosensor is analog data, so signal processing unit 183 first converts the analog data into digital data. Then, signal processing unit 183 subjects the digital data to data processing corresponding to the content of a command sent from main device 101. Then, signal processing unit 183 sends to main device 101 data including the data (hereinafter, referred to as "response data") having been through the data processing and the time information obtained from timer 182. Further, signal processing unit 183 includes a RAM (not shown) capable of sequentially storing therein a plurality of pieces of scan data described below.

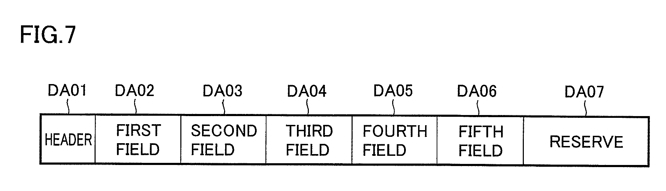

The commands include a sensing command for instructing the photosensor to perform sensing. Details of the sensing command and the response data will be described later (Fig. 7, Fig. 8, and Fig. 14).

It should be noted that timer 182 does not need to be necessarily provided in image processing engine 180. For example, timer 182 may be provided outside image processing engine 180 in display device 102. Alternatively, timer 182 may be provided in main device 101. Further, microphone 175 and speaker 176 does not need to be always provided in electronic device 100. In some embodiments of electronic device 100, one or both of microphone 175 and speaker 176 may not be provided.

Here, display device 102 includes a system LCD. The system LCD is a device obtained by forming peripheral devices of liquid crystal panel 140 in one piece on a glass substrate of liquid crystal panel 140. In the present embodiment, driver 130 (excluding a circuit for driving backlight 179), internal IF 178, and image processing engine 180 are formed in one piece on the glass substrate of liquid crystal panel 140. It should be noted that display device 102 does not need to be configured to use the system LCD, and driver 130 (excluding the circuit for driving backlight 179), internal IF 178, and image processing engine 180 may be provided on a substrate other than the glass substrate.

As to Second Unit

Second unit 1002 is supplied with power from first unit 1001. Specifically, by connecting a below-described USB connector 294 to USB connector 194 of first unit 1001, second unit 1002 is supplied with power from power source circuit 192 of first unit 1001.

Main device 104 includes a CPU 210, a RAM 271, a ROM 272, an external communication unit 274, a power source detecting unit 293, USB connector 294, an antenna 295, and a signal strength detecting unit 297. The components (210, 271, 272, 274, 293) are connected to one another via a data bus DB2.

CPU 210 executes a program. RAM 271 stores therein data generated by execution of the program by CPU 210, in a volatile manner. ROM 272 stores data therein in a nonvolatile manner. Further, ROM 272 is a ROM in and from which data can be written and deleted, such as an EPROM or a flash memory.

External communication unit 274 communicates with another electronic device. Specifically, external communication unit 274 communicates with for example first unit 1001 via USB connector 294. Further, external communication unit 274 communicates with for example first unit 1001 via antenna 295.

It should be noted that main device 104 may communicate with another electronic device (for example, first unit 1001) through wireless communication other than Bluetooth®. For example, external communication unit 274 may wirelessly communicate with another electronic device via an infrared port not shown in the figure.

Signal strength detecting unit 297 detects the strength of a signal received via antenna 295. Further, signal strength detecting unit 297 informs external communication unit 274 of the strength thus detected.

USB connector 294 is used to connect second unit 1002 to first unit 1001.

Second unit 1002 transmits data to first unit 1001 via USB connector 294. Further, second unit 1002 receives data from first unit 1001 via USB connector 294. Furthermore, second unit 1002 is supplied with power from first unit 1001 via USB connector 294 as described above. It should be noted that second unit 1002 stores, in a battery not shown in the figure, the power thus supplied from first unit 1001.

Antenna 295 is used for communication between second unit 1002 and for example first unit 1001, in compliance with the Bluetooth® standard.

Power source detecting unit 293 detects the power supplied via USB connector 294. Further, power source detecting unit 293 sends information concerned with the detected power, to CPU 210.

Further, main device 104 may have a function of infrared communication.

Display device 103 includes a driver 230, a photosensor built-in liquid crystal panel 240 (hereinafter, referred to as "liquid crystal panel 240"), an internal IF 278, a backlight 279, and an image processing engine 280. Image processing engine 280 includes a driver control unit 281, a timer 282, and a signal processing unit 283.

Display device 103 has a configuration similar to that of display device 102. Namely, driver 230, liquid crystal panel 240, internal IF 278, backlight 279, and image processing engine 280 respectively have the same configurations as those of driver 130, liquid crystal panel 140, internal IF 178, backlight 179, and image processing engine 180 of display device 102. Driver control unit 281, timer 282, and signal processing unit 283 respectively have the same configurations as those of driver control unit 181, timer 182, and signal processing unit 183 of display device 102. Hence, explanation is not repeated for each functional block in display device 103.

Meanwhile, the processes in electronic device 100 are implemented by hardware and software executed by CPU 110. Such software may be stored in ROM 172 in advance. Alternatively, the software may be stored in memory card 1731 or another storage medium and may be distributed as a program product. Alternatively, the software may be provided as a downloadable program product by an information providing business entity connected to the Internet. Such software is read from the storage medium by memory card reader/writer 173 or another reader, or is downloaded via external communication unit 174 or communication IF (not shown), and is then temporarily stored in ROM 172. The software thus temporarily stored is read from ROM 172 by CPU 110, and is then stored in RAM 171 in the form of an executable program. CPU 110 executes the program.

Each component constituting main device 101 of electronic device 100 shown in Fig. 2 is a general one. Hence, it can be said that an essential part of the present invention lies in the software stored in RAM 171, ROM 172, memory card 1731, and other storage media, or the software downloadable via the network. It should be noted that the operations of the hardware of main device 101 of electronic device 100 are well known and are not described repeatedly in detail.

It should be also noted that the storage medium is not limited to a memory card, but may be a medium storing a program in a fixed manner such as a CD-ROM (Compact Disk-Read Only Memory), a FD (Flexible Disk), a hard disk, a magnetic tape, a cassette tape, an optical disk (MO (Magnetic Optical Disc) / MD (Mini Disc) / DVD (Digital Versatile Disc)), an IC (Integrated Circuit) card (excluding a memory card), an optical card, and a semiconductor memory such as a mask ROM, an EPROM, an EEPROM (Electronically Erasable Programmable Read-Only Memory), and a flash ROM.

The term "program" herein includes not only a program directly executable by the CPU, but also a program in the form of a source program, a compressed program, an encrypted program, and the like.

As to Configuration and Driving of Photosensor Built-In Liquid Crystal Panel

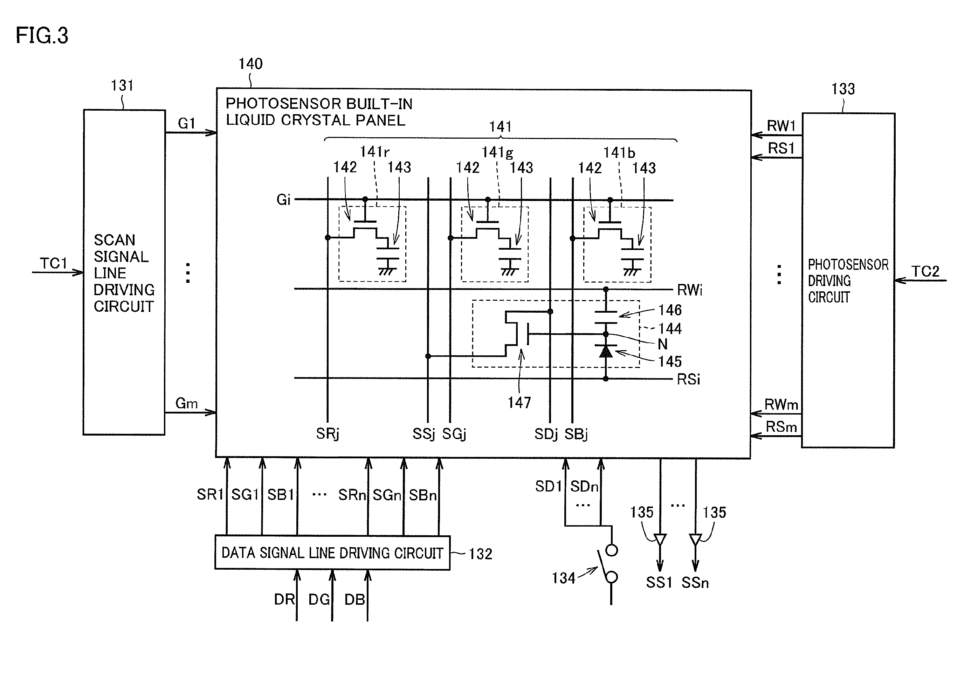

The following describes the configuration of liquid crystal panel 140 and configurations of circuits around liquid crystal panel 140. Fig. 3 shows the configuration of liquid crystal panel 140, and the configurations of the circuits around liquid crystal panel 140.

Referring to Fig. 3, liquid crystal panel 140 includes a pixel circuit 141, a photosensor circuit 144, scanning signal lines Gi, data signal lines SRj, data signal lines SGj, data signal lines SBj, sensor signal lines SSj, sensor signal lines SDj, read signal lines RWi, and reset signal lines RSi. It should be noted that i represents a natural number satisfying $1 \leq i \leq m$ whereas j represents a natural number satisfying $1 \leq j \leq n$.

Further, driver 130 of display device 102 shown in Fig. 2 includes a scan signal line driving circuit 131, a data signal line driving circuit 132, a photosensor driving circuit 133, a switch 134, and amplifiers 135, all of which are the circuits around liquid crystal panel 140.

Scan signal line driving circuit 131 receives a control signal TC1 from driver control unit 181 shown in Fig. 2. Based on control signal TC1, scan signal line driving circuit 131 applies a predetermined voltage to the scanning signal lines (Gl-Gm) one after another in an order from scanning signal line G1. More specifically, scan signal line driving circuit 131 selects one of the scanning signal lines (Gl-Gm) for every unit time, and applies to the selected scanning signal line a voltage (hereinafter, referred to as "high-level voltage") sufficient to turn on the gate of a TFT (Thin Film Transistor) 142. It should be noted that the scanning signal lines not selected are not fed with the high-level voltage but remains fed with a low-level voltage.

Data signal line driving circuit 132 receives image data (DR, DG, DB) from driver control unit 181 shown in Fig. 2. Then, for every unit time described above, data signal line driving circuit 132 sequentially feeds each of 3n data signal lines (SR1-SRn, SG1-SGn, SB1-SBn) with a voltage corresponding to image data for one row.

It should be noted that in the description herein, a driving method called "line sequential method" is employed, but the driving method is not limited to this.

Each of pixel circuits 141 is a circuit for setting a luminance (transmittance) of one pixel. Further, $m \times n$ pixel circuits 141 are arranged in the form of matrix. More specifically, m pixel circuits 141 are arranged in the vertical direction of Fig. 3 and n pixel circuits 141 are arranged in the horizontal direction.

Each of pixel circuits 141 is constituted by an R sub pixel circuit 141r, a G sub pixel circuit 141g, and a B sub pixel circuit 141b. Each of the three circuits (141r, 141g, 141b) includes a TFT 142, an electrode pair 143 made up of a pixel electrode and a counter electrode, and a capacitor not shown in the figure.

In display device 102, a polycrystalline silicon thin film transistor (p-Si TFT) is used as TFT 142 because the polycrystalline silicon thin film transistor allows for realization of a CMOS (Complementary Metal Oxide Semiconductor) with a n type transistor and a p type transistor and the polycrystalline silicon thin film transistor allows carriers (electrons or electron holes) to move faster by several hundred times than those in an amorphous silicon thin film transistor (a-Si TFT). It is assumed herein that TFT 142 is a field effect transistor with an n type channel. However, TFT 142 may be a field effect transistor with a p type channel.

TFT 142 in R sub pixel circuit 141r has a source connected to data signal line SRj. Further, TFT 142 has a gate connected to scanning signal line Gi. Furthermore, TFT 142 has a drain connected to the pixel electrode of electrode pair 143. Between the pixel electrode and the counter electrode, liquid crystal is provided. It should be noted that each of G sub pixel circuit 141g and B sub pixel circuit 141b has the same configuration as that of R sub pixel circuit 141r except that TFT 142 of each of them has a source connected to a different data signal line. Hence, explanation is not repeated for these two circuits (141g, 141b).

Now, how luminance is set in pixel circuit 141 will be described. First, the above-described high-level voltage is applied to scanning signal line Gi. The application of the high-level voltage turns on the gate of TFT 142. While the gate of TFT 142 is on, designated voltages (voltages corresponding to image data for one pixel) are respectively applied to the data signal lines (SRj, SGj, SBj). In this way, a voltage based on the designated voltages is applied to the pixel electrode. This results in a potential difference between the pixel electrode and the counter electrode. Based on the potential difference, the liquid crystal responds to set the luminance of the pixel to a predetermined luminance. The potential difference is maintained until scanning signal line Gi is selected in the next frame period by the capacitor (auxiliary capacitor) not shown in the figure.

Photosensor driving circuit 133 receives a control signal TC2 from driver control unit 181 shown in Fig. 2.

Based on control signal TC2, photosensor driving circuit 133 sequentially selects one signal line of the reset signal lines (RS1-RSm) for every unit time, and applies to the selected signal line a voltage VDDR that has a level higher than that of a usual one, at a predetermined timing. It should be noted that reset signal lines not selected remain fed with a voltage VSSR lower than the voltage applied to the selected reset signal line. For example, voltage VDDR may be set at 0 V whereas voltage VSSR may be set at -5 V.

In addition, based on control signal TC2, photosensor driving circuit 133 3 sequentially selects one signal line of the read signal lines (RW1-RWm) for every unit time, and applies to the selected signal line a voltage VDD that has a level higher than that of a usual one, at a predetermined timing. It should be noted that read signal lines not selected remain fed with voltage VSSR described above. The value of VDD may be set at, for example, 8 V.

The timing at which voltage VDDR is applied and the timing at which voltage VDD is applied will be described later.

Photosensor circuit 144 includes a photo diode 145, a capacitor 146, and a TFT 147. In the description below, it is assumed that TFT 147 is a field effect transistor with an n-type channel. However, TFT 147 may be a field effect transistor with a p type channel.

Photo diode 145 has an anode connected to reset signal line RSi. Photo diode 145 has a cathode connected to one electrode of capacitor 146. The other electrode of capacitor 146 is connected to read signal line RWi. In the description below, a connection point of photo diode 145 and capacitor 146 is referred to as "node N".

TFT 147 has a gate connected to node N. TFT 147 has a drain connected to sensor signal line SDj. TFT 147 has a source connected to sensor signal line SSj. Details of sensing using photosensor circuit 144 will be described later.

Switch 134 is provided for switching as to whether to apply a predetermined voltage to each of the sensor signal lines (SD1-SDn) or not to apply the predetermined voltage thereto. The switching operation of switch 134 is caused by photosensor driving circuit 133. The voltage applied to each of the sensor signal lines (SD1-SDn) when switch 134 is brought into a conductive state will be described later.

Amplifiers 13 5 amplify respective voltages sent from the sensor signal lines (SS1-SSn). Each of the voltages thus amplified is sent to signal processing unit 183 shown in Fig. 2.

It should be noted that image processing engine 180 controls the timing at which an image is displayed on liquid crystal panel 140 using pixel circuit 141 and the timing at which sensing is performed using photosensor circuit 144.

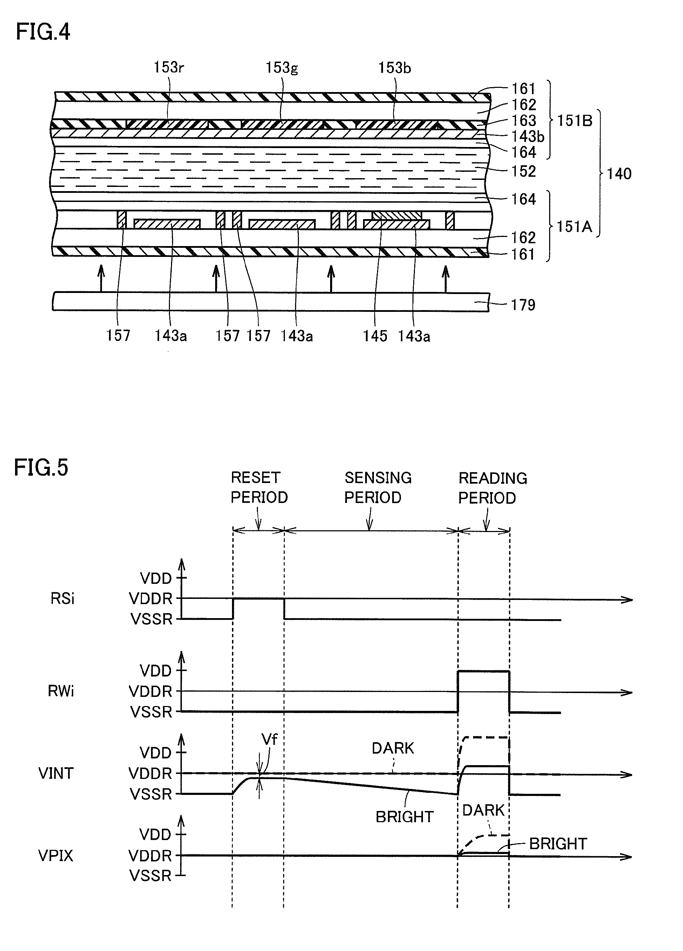

Fig. 4 is a cross sectional view of liquid crystal panel 140 and backlight 179. Referring to Fig. 4, liquid crystal panel 140 includes an active matrix substrate 151 A, a counter substrate 151B, and a liquid crystal layer 152. Counter substrate 151B is provided opposite to active matrix substrate 151A. Liquid crystal layer 152 is interposed between active matrix substrate 151 A and counter substrate 151B. Backlight 179 is provided at a side opposite to liquid crystal layer 152 so as to face active matrix substrate 151A.

Active matrix substrate 151A includes a polarizing filter 161, a glass substrate 162, pixel electrodes 143a constituting electrode pairs 143, photo diode 145, data signal lines 157, and an alignment film 164. Although not shown in Fig. 4, active matrix substrate 151A further includes capacitor 146, TFTs 147, TFTs 142, and scanning signal lines Gi, each of which is shown in Fig. 3.

In active matrix substrate 151 A, polarizing filter 161, glass substrate 162, pixel electrodes 143a, and alignment film 164 are formed in this order from the backlight 179 side thereof. Photo diode 145 and data signal lines 157 are formed on the liquid crystal layer 152 side of glass substrate 162.

Counter substrate 151B includes a polarizing filter 161, a glass substrate 162, a light shielding layer 163, color filters (153r, 153g, 153b), counter electrodes 143b constituting electrode pairs 143, and alignment film 164.

In counter substrate 151B, alignment film 164, counter electrode 143b, the color filters (153r, 153g, 153b), glass substrate 162, and polarizing filter 161 are formed in this order from the liquid crystal layer 152 side thereof. Light shielding layer 163 is formed at the same layer as the color filters (153r, 153g, 153b).

Color filter 153r is a filter allowing light in a wavelength of red to pass therethrough. Color filter 153g is a filter allowing light in a wavelength of green to pass therethrough. Color filter 153b is a filter to allow light in a wavelength of blue to pass therethrough. Here, photo diode 145 is provided at a location opposite to color filter 153b.

Liquid crystal panel 140 displays an image by shielding and passing the external light and light emitted from a light source such as backlight 179. Specifically, by applying a voltage between each pixel electrode 143a and each counter electrode 143b, orientations of liquid crystal molecules of liquid crystal layer 152 are changed in liquid crystal panel 140, thereby blocking or passing the light. However, the light cannot be completely blocked only by the liquid crystal, so polarizing filter 161 is provided to allow only light having a specific polarization direction to pass therethrough.

It should be noted that the location of photo diode 145 is not limited to the location described above and photo diode 145 may be provided at a location opposite to color filter 153r or a location opposite to color filter 153g.

Here, operations of photosensor circuit 144 will be described. Fig. 5 shows a timing chart upon operating photosensor circuit 144. In Fig. 5, a voltage VINT is a potential at node N in photosensor circuit 144. A voltage VPIX is an output voltage of each sensor signal line SSj shown in Fig. 3 before being amplified by amplifier 135.

The following individually describes a reset period for resetting photosensor circuit 144, a sensing period for sensing light using photosensor circuit 144, and a reading period for reading a result of the sensing.

First explained is the reset period. In the reset period, the voltage applied to reset signal line RSi is momentarily switched from the low level (voltage VSSR) to the high level (voltage VDDR). Meanwhile, the voltage applied to read signal line RWi remains at the low level (voltage VSSR). By applying the high-level voltage to reset signal line RSi in this way, a current starts to flow in the forward direction of photo diode 145 (from the anode side to the cathode side). Accordingly, voltage VINT, which is the potential of node N, has a value found by a below-described formula (1). It should be noted that in formula (1), an amount of decrease of voltage in the forward direction of photo diode 145 is indicated as Vf.

$$\mathrm{VINT = VSSR + |VDDR - VSSR| - Vf} \ldots (1)$$

Hence, the potential of node N has a value smaller than voltage VDDR by Vf as shown in Fig. 5.

Here, voltage VINT is not more than the threshold of turning on the gate of TFT 147, so no output is provided from sensor signal line SSj. Hence, voltage VPIX is not changed. Further, there is a difference between the electrodes of capacitor 146 by voltage VINT described above. Accordingly, charges corresponding to the difference are stored in capacitor 146.

Explained next is the sensing period. In the sensing period coming after the reset period, the voltage applied to reset signal line RSi is momentarily switched from the high level (voltage VDDR) to the low level (voltage VSSR). Meanwhile, the voltage applied to read signal line RWi remains at the low level (voltage VSSR).

By changing the voltage applied to reset signal line RSi to the low level as such, the potential of node N is higher than the voltage of reset signal line RSi and the voltage of read signal line RWi. Hence, in photo diode 145, the voltage at the cathode side is higher than the voltage at the anode side. Namely, photo diode 145 is in a state of reverse bias. When photo diode 145 receives light from the light source in such a state of reverse bias, a current starts to flow from the cathode side of photo diode 145 to the anode side thereof. As a result, as shown in Fig. 5, the potential of node N (i.e., voltage VINT) is decreased with passage of time.

Since voltage VINT keeps decreasing as such, the gate of TFT 147 is not turned on. Hence, there is no output from sensor signal line SSj. Accordingly, voltage VPIX is not changed.

Explained next is the reading period. In the reading period coming after the sensing period, the voltage applied to reset signal line RSi is maintained at the low level (voltage VSSR). Meanwhile, the voltage applied to read signal line RWi is momentarily switched from the low level (voltage VSSR) to the high level (voltage VDD). Here, voltage VDD has a value higher than that of voltage VDDR.

By momentarily applying the high-level voltage to read signal line RWi in this way, the potential of node N is raised through capacitor 146 as shown in Fig. 5. A value of the rise of the potential of node N corresponds to the voltage applied to read signal line RWi. Here, the potential of node N (i.e., voltage VINT) is raised to be equal to or higher than the threshold of turning on the gate of TFT 147, whereby the gate of TFT 147 is turned on.

On this occasion, if a fixed voltage is applied in advance to sensor signal line SDj (see Fig. 3) connected to the drain side of TFT 147, a voltage corresponding to the potential of node N is output from sensor signal line SSj connected to the source side of TFT 147 as shown in a graph of VPIX in Fig. 5.

Here, when an amount of light received by photo diode 145 (hereinafter, referred to as "amount of received light") is small, the slope of the straight line shown in the graph of VINT in Fig. 5 is gentle. As a result, voltage VPIX is higher than that when the amount of received light is large. As such, photosensor circuit 144 varies the value of the voltage to be sent to sensor signal line SSj, in accordance with the amount of light received by photo diode 145.

The description above deals with the operations of photosensor circuit 144 of the m × n photosensor circuits. In the description below, operations of the photosensor circuits in liquid crystal panel 140 will be described.

First, photosensor driving circuit 133 applies a predetermined voltage to all the n sensor signal lines (SD1-SDn). Then, photosensor driving circuit 133 applies to reset signal line RS 1 voltage VDDR having a level higher than that of an usual one. The other reset signal lines (RS2-RSm) and read signal lines (RW1-RWm) remain fed with the low-level voltage. In this way, n photosensor circuits in the first row in Fig. 3 are brought into the above-described reset period. Thereafter, the n photosensor circuits in the first row are brought into the sensing period. Then, the n photosensor circuits in the first row are brought into the reading period.

It should be noted that the timing of applying the predetermined voltage to all the n sensor signal lines (SD1-SDn) is not limited to the above-described timing, and may be any timing coming at least before the reading period.

When the reading period of the n photosensor circuits in the first row is ended, photosensor driving circuit 133 applies to reset signal line RS2 voltage VDDR having a level higher than an usual one. In other words, n photosensor circuits in the second row are brought into the reset period. When the reset period thereof is ended, the n photosensor circuits in the second row are brought into the sensing period, and then are brought into the reading period.

Thereafter, the above-described processes are performed onto n photosensor circuits in the third row, n photosensor circuits in the fourth row, ... n photosensor circuits in m-th row, in this order. As a result, from the sensor signal lines (SS 1-SSn), a sensing result for the first row, a sensing result for the second row, ..., a sensing result for m-th row are output in this order.

As such, in display device 102, sensing is performed for every row as described above, and a sensing result for every row is output from liquid crystal panel 140. Hence, in the description below, the data concerned with a total of the voltages for the first row to the m-th row output from liquid crystal panel 140 and having been through the above-described data processing by signal processing unit 183 is referred to as "scan data". In other words, the scan data refers to image data obtained by scanning a scan target object (for example, the user's finger). Further, an image displayed based on the scan data is referred to as "scan image". Furthermore, in the description below, the sensing is referred to as "scan (scanning)".

Further, the description above illustrates the configuration in which the m × n photosensor circuits are all used for scanning, but the present invention is not limited to this. A configuration may be employed in which an area of a part of the surface of liquid crystal panel 140 is scanned using photosensor circuits selected in advance.

In the description below, it is assumed that electronic device 100 can utilize either of the configurations. The configurations can be changed over in accordance with a command that is based on an input or the like provided via operation key 177 and sent from main device 101. In the case where an area in a part of the surface of liquid crystal panel 140 is to be scanned, image processing engine 180 sets an area to be scanned. The area to be scanned may be set and designated by the user via operation key 177.

In the case where the area in the part of the surface of liquid crystal panel 140 is to be scanned, there are the following manners of utilization thereof in displaying an image. The first one is to display an image in an area other than the area of that part (hereinafter, referred to as "scan area") in the surface. The second one is to display no image in the area of the surface other than the scan area. Adoption of the manners depends on a command sent from main device 101 to image processing engine 180.

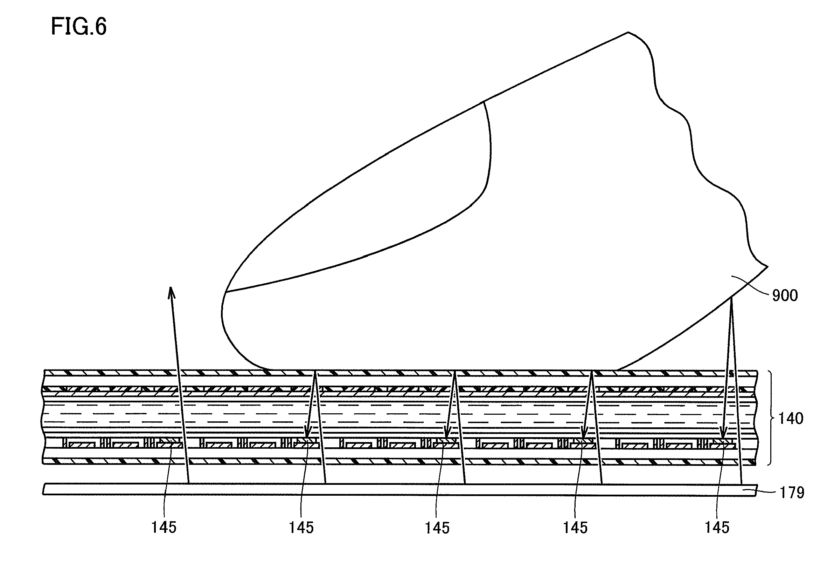

Fig. 6 is a cross sectional view of liquid crystal panel 140 and backlight 179, showing how photo diode 145 receives light from backlight 179 upon scanning.

Referring to Fig. 6, when the user's finger 900 touches the surface of liquid crystal panel 140, a part of light emitted from backlight 179 is reflected by the user's finger 900 (substantially flat surface) at the touched area. The light thus reflected is received by photo diode 145.

Further, even in an area not touched by finger 900, a part of the light emitted from backlight 179 is reflected by the user's finger 900. Also in this case, photo diode 145 receives the light thus reflected. However, because finger 900 does not touch the surface of liquid crystal panel 140 in the area, an amount of the light received by photo diode 145 is smaller than that in the area touched by finger 900. It should be noted that most of light emitted from backlight 179 but failing to reach the user's finger 900 cannot be received by photo diode 145.

Here, by lighting on backlight 179 at least during the sensing period, photosensor circuit 144 can output a voltage corresponding to the amount of light reflected by the user's finger 900, from sensor signal line SSj. As such, by controlling backlight 179 to light on and light off, the voltage output from each of the sensor signal lines (SS1 to SSn) is varied in liquid crystal panel 140 in accordance with the location touched by finger 900, a range touched by finger 900 (determined by pressing force of finger 900), a direction of finger 900 relative to the surface of liquid crystal panel 140, and the like.

In this way, display device 102 is capable of scanning an image (hereinafter, also referred to as "reflection image") obtained by reflecting the light by finger 900.

It should be noted that an exemplary scan target object other than finger 900 is a stylus or the like.

It should be also noted that in the present embodiment, the liquid crystal panel is illustrated as an exemplary display device of electronic device 100, but other panels such as an organic EL (Electro-Luminescence) panel may be used instead of the liquid crystal panel.

As to Data

The following describes commands exchanged between first unit 1001 and second unit 1002, and commands exchanged between main device 101 and display device 102 in first unit 1001.

Fig. 7 shows a schematic format of each command. Referring to Fig. 7, the command includes a header DA01, a first field DA02, a second field DA03, a third field DA04, a fourth field DA05, a fifth field DA06, and a reserve data area DA07.

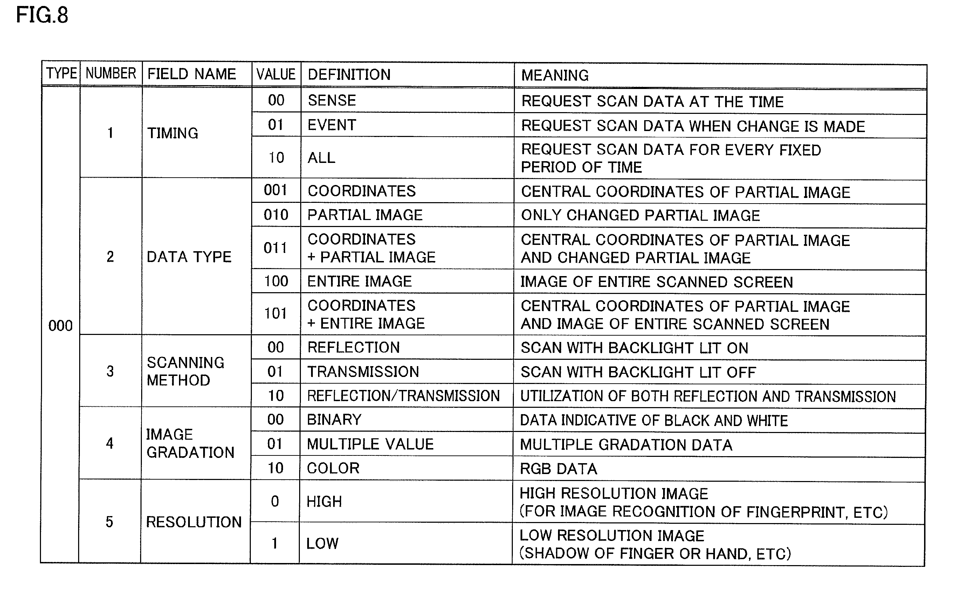

Fig. 8 illustrates a command of type "000" (i.e., sensing command). CPU 110 transmits the command of type "000" (hereinafter, referred to as "first command") from main device 101 of first unit 1001 to second unit 1002. Alternatively, CPU 110 transmits the first command from main device 101 to display device 102. The description below illustrates an exemplary case where CPU 110 transmits the first command from main device 101 of first unit 1001 to second unit 1002.

CPU 110 writes, in header DA01, the type ("000") of the command, a destination of transmission of the command, and the like. CPU 110 writes, in first field DA02, a value of timing corresponding to a number "1". CPU 110 writes in, second field DA03, a value of a data type corresponding to a number "2". CPU 110 writes, in third field DA04, a value of a scanning method corresponding to a number "3". CPU 110 writes, in fourth field DA05, a value of image gradation corresponding to a number "4". CPU 110 writes, in fifth field DA06, a value of resolution corresponding to a number "5".

A first command having first field DA02 set at "00" is to request image processing engine 280 to transmit scan data obtained at the moment. Specifically, the sensing first command is to request transmission of scan data obtained by scanning using the photosensor circuits of liquid crystal panel 240 after image processing engine 280 receives the first command. A first command having first field DA02 set at "01" is to request transmission of scan data obtained when there is a change in scan result. A first command having first field DA02 set at "10" is to request transmission of scan data for every fixed cycle.

A first command having second field DA03 set at "001" is to request transmission of coordinate values of the center coordinates of a partial image. A first command having second field DA03 set at "010" is to request transmission of a partial image changed in scan result. It should be noted that the expression "changed in scan result" indicates that the previous scan result and the current scan result are different from each other. A first command having second field DA03 set at "100" is to request transmission of an entire image.

The term "entire image" herein refers to an image generated by image processing engine 280 based on the output voltage of each photosensor circuit upon scanning with the m $\times$ n photosensor circuits. On the other hand, the term "partial image" herein refers to a portion of the entire image. Regarding the partial image, a reason of requesting the transmission of only the partial image changed in scan result will be described later.

Further, the coordinate values and the partial image or the entire image may be simultaneously requested. Furthermore, in the case where the area in the part of the surface of liquid crystal panel 240 is scanned, the entire image is an image corresponding to the scanned area.

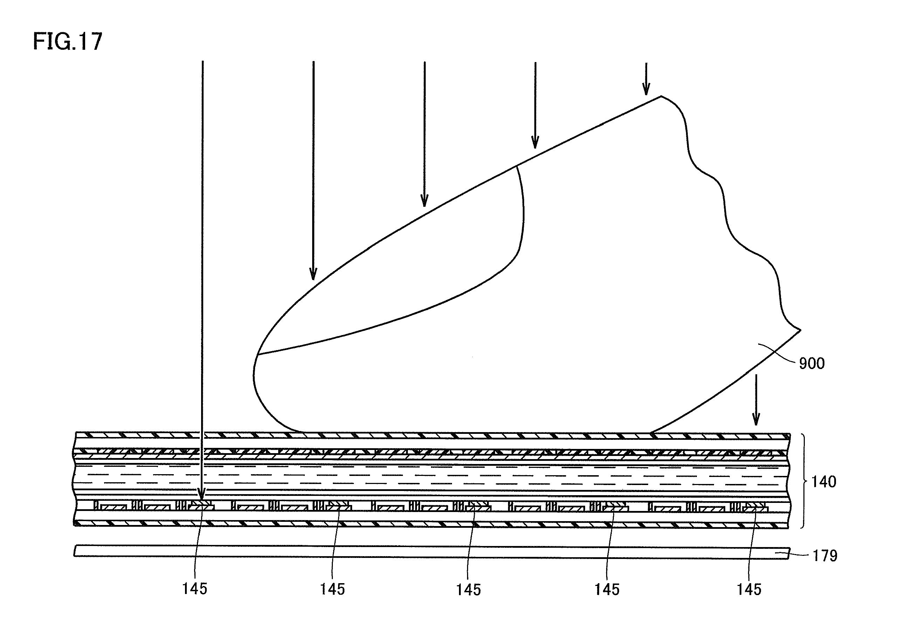

A sensing first command having third field DA04 set at "00" is to request to scan with backlight 279 lit on. On the other hand, a first command having third field DA04 set at "01" is to request to scan with backlight 279 lit off. A configuration of scanning with backlight 279 lit off will be described later (Fig. 17). A first command having third field DA04 set at "10" is to request scanning with both reflection and transmission of light. The expression "scanning with both reflection and transmission of light" indicates to scan a scan target object by switching between the method of scanning with backlight 279 lit on and the method of scanning with the backlight lit off.

A first command having fourth field DA05 set at "00" is to request binary image data of black or white. A first command having fourth field DA05 set at "01" is to request image data of multiple gradation. A first command having fourth field DA05 set at "10" is to request image data of RGB colors.

A first command having fifth field DA06 set at "0" is to request image data having a high resolution. A first command having fifth field DA06 set at "1" is to request image data having a low resolution.

Also described in the first command in addition to the data shown in Fig. 8 are designation of an area to be scanned (area of pixels in which photosensor circuits 144 are to be driven), a timing of scanning, a timing of lighting on backlight 179, and the like.

Image processing engine 280 analyzes the content of the first command, and returns to main device 101 data generated in accordance with a result of the analysis (i.e., response data).

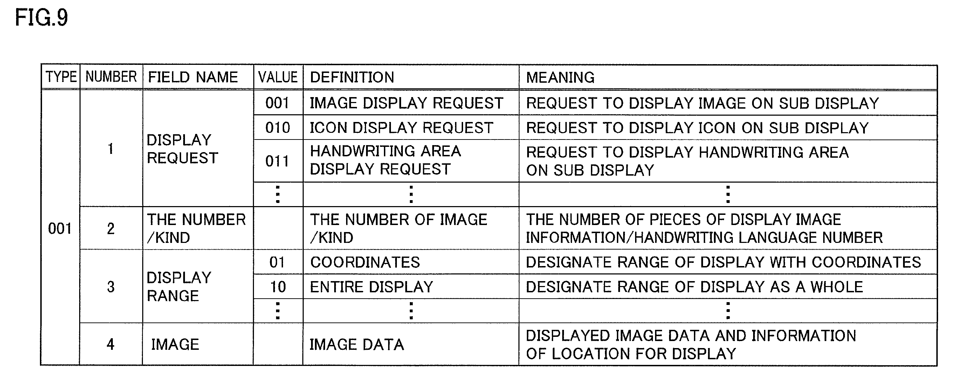

Fig. 9 illustrates a command of type "001" (hereinafter, referred to as "second command"). CPU 110 transmits the second command from main device 101 of first unit 1001 to second unit 1002.

CPU 110 writes, in a header DA01, the type ("001 ") of the command, a destination of transmission of the command, and the like. CPU 110 writes, in a first field DA02, a value of display request corresponding to a number "1". CPU 110 writes, in a second field DA03, information regarding the number/kind and corresponding to a number "2". CPU 110 writes, in a third field DA04, a value of a range of display corresponding to a number "3". CPU 110 writes, in a fourth field DA05, information regarding image data and corresponding to a number "4".

A second command having first field DA02 set at "001" is to request image processing engine 280 to display an image on liquid crystal panel 240 (sub screen). A second command having first field DA02 set at "010" is to request image processing engine 280 to display an icon on liquid crystal panel 240. A second command having first field DA02 set at "011" is to request image processing engine 280 to display a handwriting area on liquid crystal panel 240.

Recorded in second field DA03 is the number of images to be displayed on liquid crystal panel 240, and a number designating a kind of language used in handwriting. Image processing engine 280 performs processing according to the number of the images and the kind of language.

A second command having third field DA04 set at "01" is to request image processing engine 280 to designate the range of display in liquid crystal panel 240 using coordinates. A second command having third field DA04 set at "10" is to request image processing engine 280 to set the entire display area as the range of display in liquid crystal panel 240.

Recorded in fourth field DA05 are image data to be displayed on liquid crystal panel 240 and location information used in displaying the image data. Image processing engine 280 performs processing to display the image data at a location specified by the location information.

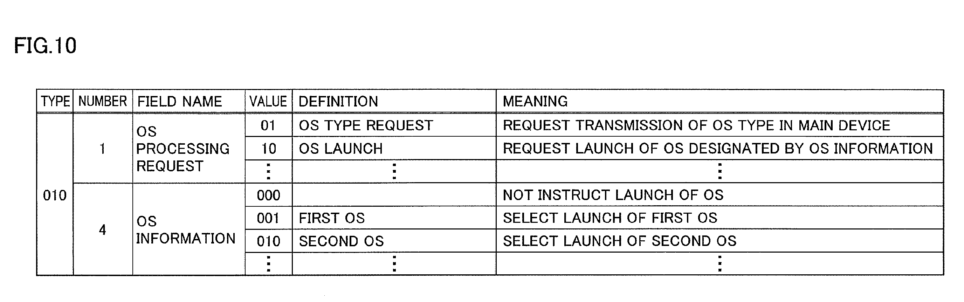

Fig. 10 illustrates a command of type "010" (hereinafter, referred to as "third command"). CPU 110 transmits the third command from main device 101 of first unit 1001 to second unit 1002. Alternatively, CPU 210 transmits the third command from main device 104 of second unit 1002 to first unit 1001.

CPU 110 or 210 writes, in a header DA01, a type ("001") of the command, a destination of the transmission of the command, and the like. CPU 110 or 210 writes, in a first field DA02, a value of OS (Operating System) processing request corresponding to a number "1". CPU 110 or 210 writes, in a second field DA03, a value of OS information corresponding to a number "2".

A third command having first field DA02 set at "01" or "10" is transmitted from second unit 1002 to first unit 1001.

The third command having first field DA02 set at "01" is to request first unit 1001 to transmit information indicating a type of an OS employed in first unit 1001 (main device). The third command having first field DA02 set at "10" is to request first unit 1001 to launch the OS designated by the OS information.

A third command having second field DA03 set at "000", "001", or "010" is transmitted from second unit 1002 to first unit 1001.

The third command having second field DA03 set at "000" is not to request first unit 1001 to launch an OS. The third command having second field DA03 set at "001" indicates that second unit 1002 has selected to launch a first OS. The third command having second field DA03 set at "010" indicates that second unit 1002 has selected to launch a second OS.

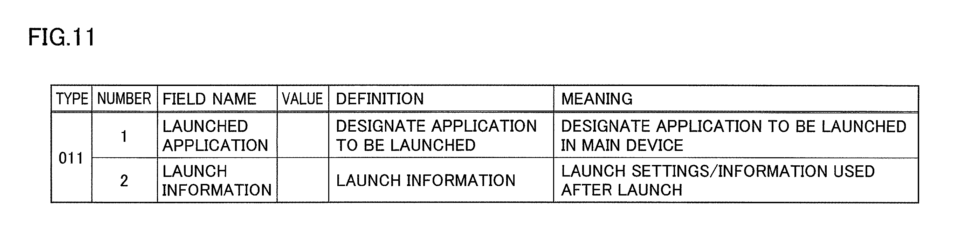

Fig. 11 illustrates a command of type "011" " (hereinafter, referred to as "fourth command"). CPU 210 transmits the fourth command from main device 104 of second unit 1002 to first unit 1001.

CPU 210 writes, in a header DA01, the type of the command ("011"), a destination of the transmission of the command, and the like. CPU 210 writes, in a first field DA02, information regarding an application to be launched and corresponding to a number "1". CPU 210 writes, in a second field DA03, launch information corresponding to a number "2".

Recorded in first field DA02 is information designating the application to be launched in first unit 1001. Recorded in second field DA03 are information used upon setting of launch and information used after the launch thereof.

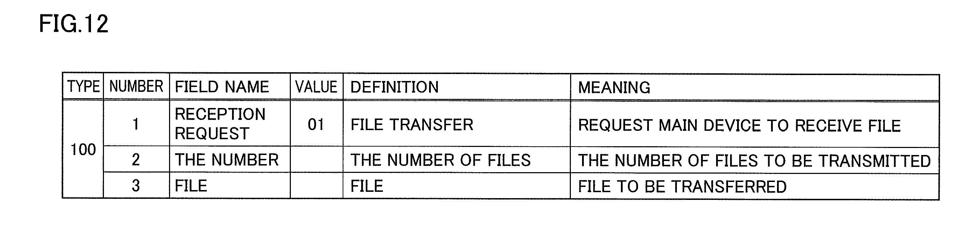

Fig. 12 illustrates a command of type "100" (hereinafter, referred to as "fifth command"). CPU 210 transmits the fifth command from main device 104 of second unit 1002 to first unit 1001.

CPU 210 writes, in a header DA01, the type of the command ("100"), a destination of transmission of the command, and the like. CPU 210 writes, in a first field DA02, information regarding a reception request and corresponding to a number "1". CPU 210 writes, in second field DA03, information regarding the number and corresponding to a number "2". CPU 210 writes, in a third field DA04, information regarding files and corresponding to a number "3".

A fifth command having first field DA02 set at "01" is to request first unit 1001 to receive a file. Recorded in second field DA03 is the number of files to be transmitted by second unit 1002 to first unit 1001. Recorded in third field DA04 are the files to be transmitted by second unit 1002 to first unit 1001.

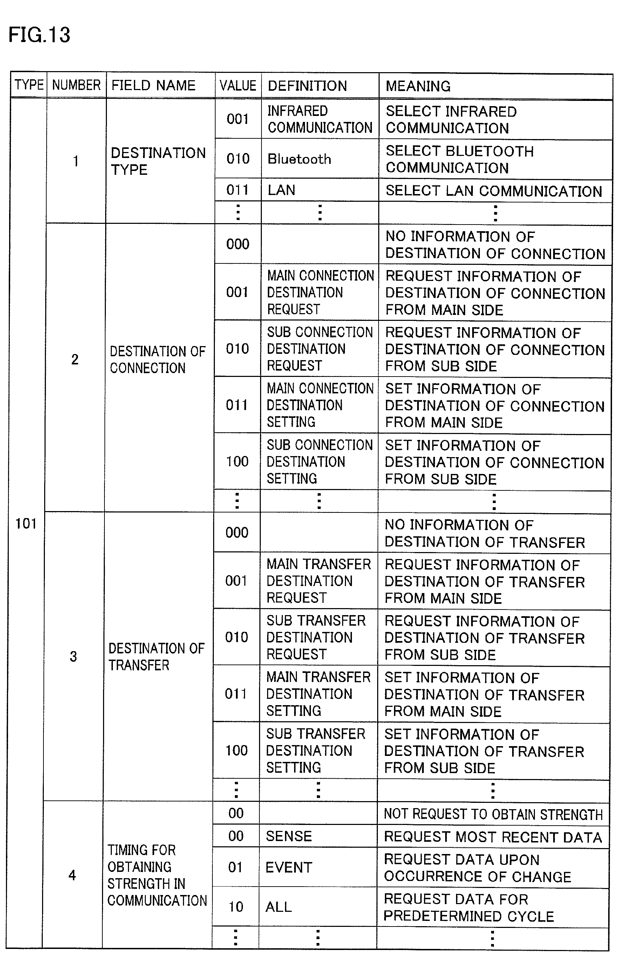

Fig. 13 illustrates a command of type "101" (hereinafter, referred to as "sixth command"). CPU 110 sends the sixth command from main device 101 of first unit 1001 to second unit 1002. Alternatively, CPU 210 sends the sixth command from main device 104 of second unit 1002 to first unit 1001.

CPU 110 or 210 writes, in a header DA01, the type of the command ("101"), a destination of transmission of the command, and the like. CPU 110 or 210 writes, in a first field DA02, a value of a communication type corresponding to a number "1". CPU 110 or 210 writes, in a second field DA03, a value of a destination of connection corresponding to a number "2". CPU 110 or 210 writes, in a third field DA04, a value of a destination of transfer corresponding to a number "3". CPU 110 or 210 writes, in fourth field DA05, a value of an obtaining timing for strength of a signal corresponding to a number "4".

A sixth command having first field DA02 set at "001" is to request a device of its counterpart to make infrared ray communication therewith. A sixth command having first field DA02 set at "010" is to request the device of its counterpart to make wireless communication therewith using Bluetooth®. A sixth command having first field DA02 set at "011" is to request the device of its counterpart to make communication therewith using a LAN.

A sixth command having second field DA03 set at "000" indicates that it has no information designating the destination of connection in the communication.

A sixth command having second field DA03 set at "001" is transmitted by first unit 1001 to a device connected to first unit 1001. Such a sixth command is to request transmission of information regarding the device to which first unit 1001 is connected.

A sixth command having second field DA03 set at "010" is transmitted by second unit 1002 to first unit 1001 connected to second unit 1002. Such a sixth command is to request information regarding first unit 1001 to which second unit 1002 is connected.

A sixth command having second field DA03 set at "011" is transmitted by second unit 1002 to first unit 1001 to which second unit 1002 is connected. Such a sixth command is to request to set information regarding second unit 1002 as device information of the destination of connection.

A sixth command having second field DA03 set at "100" is transmitted by first unit 1001 to a device (for example, second unit 1002) connected to first unit 1001. Such a sixth command is to request to set information regarding first unit 1001 as device information of the destination of connection.

A sixth command having third field DA04 set at "000" indicates that it has no information designating a transfer destination of data such as a file.

A sixth command having third field DA04 set at "001" is transmitted by first unit 1001 to a device that is a data transfer destination. Such a sixth command is to request transmission of information of the device that is the data transfer destination.

A sixth command having third field DA04 set at "010" is transmitted by second unit 1002 to first unit 1001 that is a data transfer destination. Such a sixth command is to request transmission of information regarding first unit 1001 that is the data transfer destination.

A sixth command having third field DA04 set at "011" is transmitted by second unit 1002 to first unit 1001 that is a data transfer destination. Such a sixth command is to request to set information regarding second unit 1002 as information of device that will transfer the data.

A sixth command having third field DA04 set at "100" is transmitted by first unit 1001 to a device (for example, second unit 1002) that is a data transfer destination. Such a sixth command is to request to set information regarding first unit 1001 as information of the device that will transfer the data.

A sixth command having fourth field DA05 set at "00", "01", "10", or "11" is transmitted by first unit 1001 to second unit 1002.

The sixth command having fourth field DA05 set at "00" is not to request second unit 1002 to transmit data indicating strength of a signal. The sixth command having fourth field DA05 set at "01" is to request signal strength detecting unit 297 to transmit data indicating the strength of the signal at the moment. The sixth command having fourth field DA05 set at "10" is to transmit data indicating strength of the signal when there is a change in signal strength. The sixth command having fourth field DA05 set at "11" is to request transmission of data indicating strength of the signal for every fixed cycle.

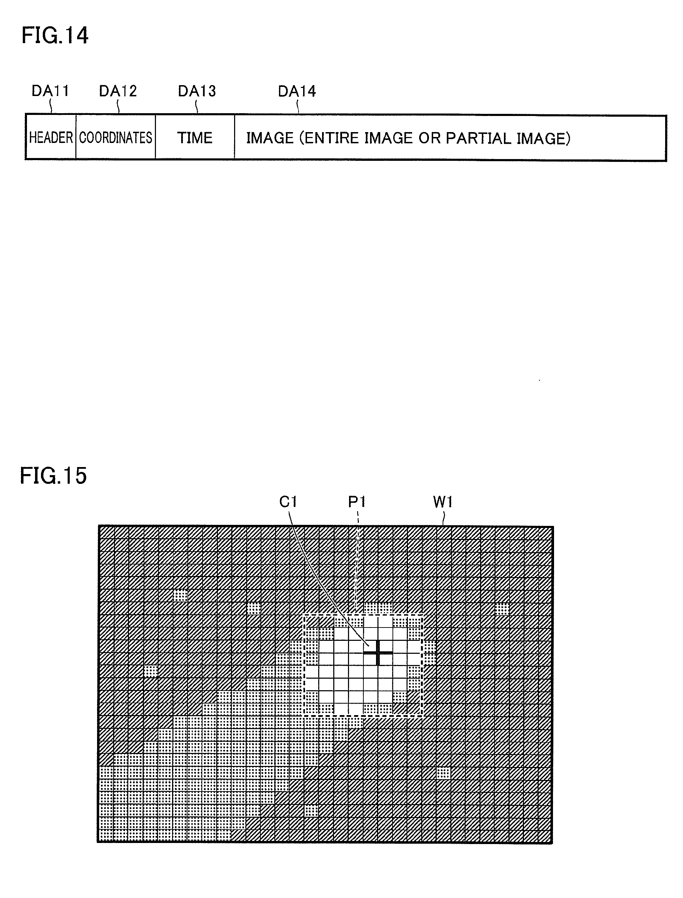

Fig. 14 shows a schematic format of the response data. The response data is data that is based on the content of the first command (sensing command).

When the first command is transmitted from main device 101 to second unit 1002, CPU 210 transmits the response data from display device 103 to first unit 1001. On the other hand, when the first command is transmitted from main device 101 to display device 102 of first unit 1001, image processing engine 180 transmits the response data from image processing engine 180 to main device 101. In the description below, the case where the first command is transmitted from main device 101 to second unit 1002 is illustrated and exemplified.

Referring to Fig. 14, the response data includes a data area DA11 for its header, a data area DA12 indicating coordinates, a data area DA13 indicating time, and a data area DA14 indicating an image. In data area DA12 indicating coordinates, the center coordinates of a partial image is written. In the data area indicating time, time information obtained from timer 282 of image processing engine 280 is written. In the data area indicating an image, image data (i.e., scan data) having been processed by image processing engine 280 is written.

Fig. 15 shows an image (i.e., scan image) obtained by scanning finger 900. Referring to Fig. 15, the entire image corresponds to an image of an area W1 surrounded by a thick solid line, whereas the partial image corresponds to an image of an area P 1 surrounded by a dashed line. The center coordinates correspond to a central point C 1 of a cross indicated by thick lines.

In the present embodiment, the area of the partial image is a rectangular area including all the pixels each having a photosensor circuit and having an output voltage of not less than a predetermined value from sensor signal line SSj (i.e., pixels having not less than a predetermined gradation or a predetermined luminance).

The center coordinates are coordinates determined in consideration of gradation of the pixels in the area of the partial image. Specifically, the center coordinates are determined by weighting the pixels in the partial image based on the gradation of the pixels as well as a distance between each of the pixels and the central point (i.e., centroid) of the rectangle. Namely, the center coordinates does not necessarily coincide with the centroid of the partial image.

However, the location of the center coordinates is not necessarily limited to the above-described location, but the center coordinates may be the coordinates of the centroid or coordinates near the centroid.

When "001" " is set in the data area indicating a data type of the first command, image processing engine 280 writes the values of the center coordinates in data area DA12 indicating coordinates. In this case, image processing engine 280 does not write image data in data area DA14 indicating an image. After writing the values of the center coordinates, image processing engine 280 sends the response data including the values of the center coordinates to main device 104. Main device 104 sends the response data including the values of the center coordinates to main device 101 of first unit 1001. As such, when "001" is set in the data area indicating a data type, the first command is not to request output of image data but is to request output of the values of the center coordinates.

When "010" is set in the data area indicating a data type of the first command, image processing engine 280 writes, in data area DA14 indicating an image, image data of a partial image changed in scan result. In this case, image processing engine 280 does not write the values of the center coordinates in data area DA12 indicating coordinates. After writing the image data of the partial image changed in scan result, image processing engine 280 sends the response data including the image data of the partial image to main device 104. Main device 104 sends the response data including the image data of the partial image to main device 101 of first unit 1001. As such, when "010" is set in the data area indicating a data type, the first command is not to request the output of the values of the center coordinates, but is to request output of the image data of the partial image changed in scan result.

A reason for transmitting only the partial image changed in scan result as described above lies in that the scan data of the area of the partial image is data more important than those of the other areas in the scan data, and that scan data of an area corresponding to the area of the partial image is likely to be changed depending on a state of contact with a scan target object such as finger 900.

When "011" is set in the data area indicating a data type of the first command, image processing engine 280 writes the values of the center coordinates in data area DA12 indicating coordinates, and writes, in data area DA14 indicating an image, the image data of the partial image changed in scan result. Thereafter, image processing engine 280 sends the response data including the values of the center coordinates and the image data of the partial image, to main device 104. Main device 104 sends the response data including the values of the center coordinates and the image data of the partial image, to main device 101 of first unit 1001. As such, when "011" is set in the data area indicating a data type, the first command is to request output of the values of the center coordinates and output of the image data of the partial image changed in scan result.

When "100" is set in the data area indicating a data type of the first command, image processing engine 280 writes the image data of the entire image in data area DA14 indicating an image of the response data shown in Fig. 14. In this case, image processing engine 280 does not write the values of the center coordinates in data area DA12 indicating coordinates. After writing the image data of the entire image, image processing engine 280 sends the response data including the image data of the entire image to main device 104. Main device 104 sends the response data including the image data of the entire image to main device 10 1 of first unit 1001. As such, when "100" is set in the data area indicating a data type, the first command is not to request output of the values of the center coordinates but is to request output of the image data of the entire image.

When "101" is set in the data area indicating a data type of the first command, image processing engine 280 writes the values of the center coordinates in data area DA12 indicating coordinates, and writes the image data of the entire image in data area DA14 indicating an image. Thereafter, image processing engine 280 sends response data including the values of the center coordinates and the image data of the entire image, to main device 104. Main device 104 sends the response data including the values of the center coordinates and the image data of the entire image, to main device 101 of first unit 1001. As such, when "101" is set in the data area indicating a data type, the first command is to request output of the values of the center coordinates and output of the image data of the entire image.

As to First Variation of Configuration

The configuration of liquid crystal panel 140 is not limited to the one shown in Fig. 3. The following describes a liquid crystal panel different in configuration from the one shown in Fig. 3.

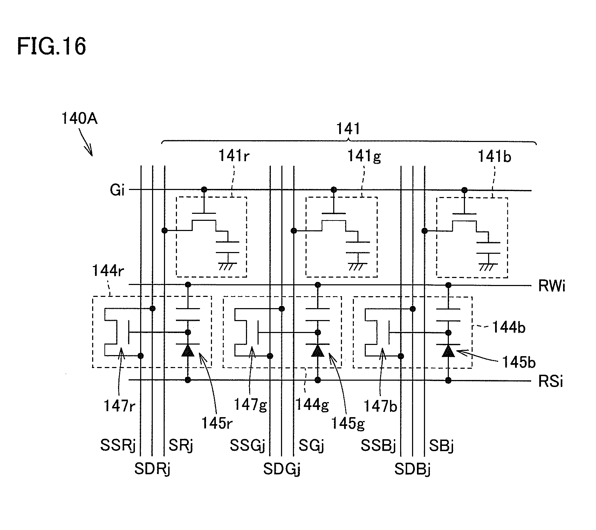

Fig. 16 is a circuit diagram of a photosensor built-in liquid crystal panel 140A different in configuration as described above. Referring to Fig. 16, photosensor built-in liquid crystal panel 140A (hereinafter, referred to as "liquid crystal panel 140A") includes three photosensor circuits (144r, 144g, 144b) in each pixel. As such, liquid crystal panel 140A including the three photosensor circuits (144r, 144g, 144b) in each pixel is thus different from liquid crystal panel 140 including one photosensor circuit for each pixel. It should be noted that the configuration of photosensor circuit 144 is the same as each of the three photosensor circuits (144r, 144g, 144b).

Moreover, the three photo diodes (145r, 145g, 145b) in each pixel are respectively provided at locations opposite to color filter 153r, color filter 153g, and color filter 153b. Hence, photo diode 145r receives red light, photo diode 145g receives green light, and photo diode 145b receives blue light.

Meanwhile, since only one photosensor circuit 144 is provided in each pixel in liquid crystal panel 140, the two data signal lines, i.e., sensor signal line SSj and sensor signal line SDj, are arranged in each pixel for TFT 147. On the other hand, liquid crystal panel 140A includes three photosensor circuits (144r, 144g, 144b) in each pixel, six data signal lines are arranged in each pixel for TFTs (147r, 147g, 147b).

Specifically, for TFT 147r connected to the cathode of photo diode 145r provided at the location opposite to color filter 153r, a sensor signal line SSRj and a sensor signal line SDRj are arranged. For TFT 147g connected to the cathode of photo diode 145g provided at the location opposite to color filter 153g, a sensor signal line SSGj and a sensor signal line SDGj are arranged. For TFT 147b connected to the cathode of photo diode 145b provided at the location opposite to color filter 153b, a sensor signal line SSBj and a sensor signal line SDBj are arranged.

In such a liquid crystal panel 140A, white light emitted from backlight 179 passes through the three color filters (153r, 153g, 153b), and red light, green light, and blue light are mixed at the surface of liquid crystal panel 140A, thus obtaining white light. When the white light is reflected by the scan target object, a portion of the white light is absorbed in a pigment of the surface of the scan target object, and a portion thereof is reflected by the surface thereof. The light thus reflected passes through the three color filters (153r, 153g, 153b) again.

On this occasion, color filter 153r allows light in a wavelength of red to pass therethrough and photo diode 145r receives the light in the wavelength of red. Color filter 153g allows light in a wavelength of green to pass therethrough and photo diode 145g receives the light in the wavelength of green. Color filter 153b allows light in a wavelength of blue to pass therethrough and photo diode 145b receives the light of the wavelength of blue. In other words, the light reflected by the scan target object is separated by the three color filter (153r, 153g, 153b) into light beams of three primary colors (R, G, B), and the photo diodes (145r, 145g, 145b) respectively receive the light beams of corresponding colors.

When a portion of the white light is absorbed in the pigment of the surface of the scan target object, respective amounts of light received by the photo diodes (145r, 145g, 145b) are different among the photo diodes (145r, 145g, 145b). Hence, respective output voltages of sensor signal line SSRj, sensor signal line SSGj, and sensor signal line SSBj are different from one another.

In accordance with the respective output voltages, image processing engine 180 determines gradation of R, gradation of G, and gradation of B, whereby image processing engine 180 can send a color image of RGB to main device 101.

As described above, in electronic device 100 including liquid crystal panel 140A, the scan target object can be scanned in color.

The following describes a scanning method different from the above-described scanning method (i.e., the method of scanning a reflection image as shown in Fig. 6) with reference to Fig. 17.

Fig. 17 is a cross sectional view showing how the photo diodes receive external light. As shown in the figure, the external light is partially blocked by finger 900. Hence, photo diodes arranged below a contact area with finger 900 in the surface of liquid crystal panel 140 can hardly receive the external light. Photo diodes below an area shaded by finger 900 in the surface thereof can receive a certain amount of the external light, but the amount of the external light received is smaller than that in areas not shaded in the surface.

Here, by lighting off backlight 179 at least during the sensing period, photosensor circuit 144 can output a voltage from sensor signal line SSj in accordance with the location of finger 900 relative to the surface of liquid crystal panel 140. By controlling backlight 179 to light on and off in this way, in liquid crystal panel 140, a voltage from each of the sensor signal lines (SS 1 to SSn) is changed in accordance with the touch location of finger 900, a range touched by finger 900 (determined by pressing force of finger 900), a direction of finger 900 relative to the surface of liquid crystal panel 140, and the like.

In this way, display device 102 can scan an image (hereinafter, also referred to as "shadow image") obtained by finger 900 blocking the external light.

Further, display device 102 may be configured to scan with backlight 179 lit on, and then scan again with backlight 179 lit off. Alternatively, display device 102 may be configured to scan with backlight 179 lit off, and then scan again with backlight 179 lit on.

In this case, the two scanning methods are used, so two pieces of scan data can be obtained. Hence, accuracy can be higher as compared with a case where one scanning method is employed for scanning.

As to Display Device

As with the operation of display device 102, an operation of display device 103 is controlled in accordance with a command from main device 101 (for example, first command). Display device 103 is configured in the same way as display device 102. Hence, when display device 103 receives from main device 101 the same command as the command provided to display device 102, display device 103 operates in the same way as display device 102 operates. Hence, explanation is not repeated for the operation and configuration of display device 103.

It should be noted that main device 101 can send different commands to display device 102 and display device 103. In this case, display device 102 and display device 103 operate in different ways. Further, main device 101 may send a command to either of display device 102 and display device 103. In this case, one of the display devices operates in accordance with the command. Further, main device 101 may send the same command to display device 102 and display device 103. In this case, display device 102 and display device 103 operate in the same way.

It should be also noted that the size of liquid crystal panel 140 of display device 102 may be the same as or different from the size of liquid crystal panel 240 of display device 103. Further, the resolution of liquid crystal panel 140 may be the same as or different from the resolution of liquid crystal panel 240.

As to Second Variation of Configuration

Described in the present embodiment is a configuration in which electronic device 100 includes the liquid crystal panels each having photosensors built therein, such as liquid crystal panel 140 and liquid crystal panel 240. However, only one of the liquid crystal panels may have photosensors built therein.

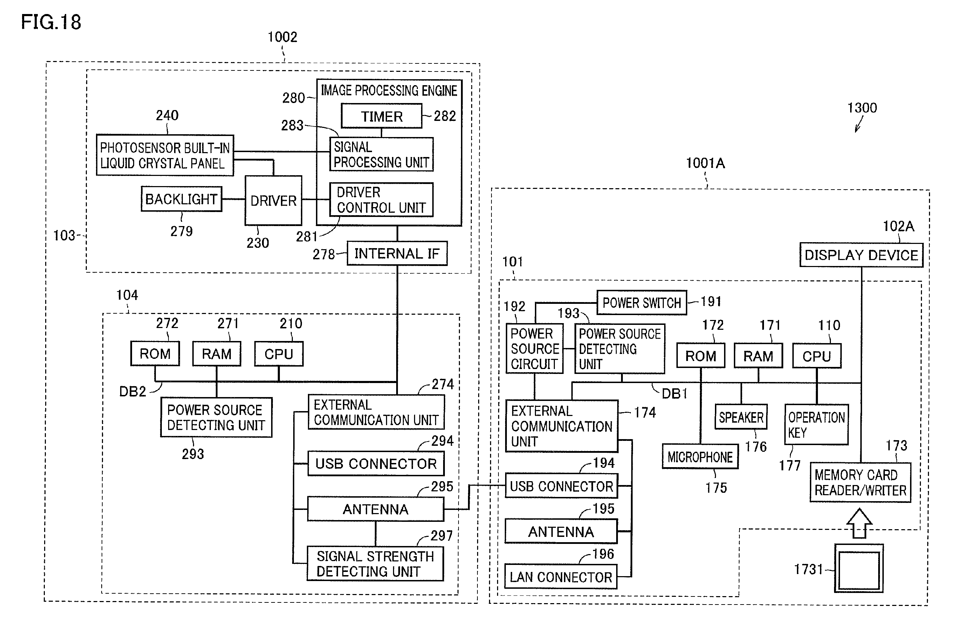

Fig. 18 is a block diagram of a hardware configuration of an electronic device 1300. As with electronic device 100, electronic device 1300 includes a first casing 100A and a second casing 100B. Referring to Fig. 18, electronic device 1300 further includes a first unit 1001A and a second unit 1002. First unit 1001A includes a main device 101 and a display device 102A. Second unit 1002 includes a main device 104 and a display device 103.

Display device 102A includes a liquid crystal panel which does not have photosensors built therein (i.e., a liquid crystal panel only having a display function). In electronic device 1300, first unit 1001A includes the liquid crystal panel including no photosensors built therein. In this point, electronic device 1300 is different from electronic device 100 in which first unit 1001 includes liquid crystal panel 240 having the built-in photosensors. Such an electronic device 1300 performs the above-described sensing using display device 103 of second unit 1002.

Instead of liquid crystal panel 140 having the built-in photosensors, first unit 1001 may include, for example, a touch panel employing a resistance film method or a capacitive method.

In the present embodiment, it is assumed that display device 102 includes a timer 182 and display device 103 includes a timer 282, but display device 102 and display device 103 may be configured to share one timer.

In the present embodiment, it is assumed that electronic device 100 is a foldable type device, but electronic device 100 is not necessarily limited to the foldable type. For example, electronic device 100 may be a slidable type device in which first casing 100A is slid relative to second casing 100B.

In electronic device 100 according to the present embodiment and configured as above, second unit 1002 is attachable to and detachable from first unit 1001 via USB connectors 194, 294.

Electronic device 100 according to the present embodiment can perform the following function for example when powered on. When a user presses down a power switch 191 of first unit 1001, first unit 1001 utilizes power from power source circuit 192 to launch BIOS (Basic Input/Output System).

Second unit 1002 obtains power from first unit 1001 via USB connectors 194, 294. Second unit 1002 utilizes the power to transmit data to and receive data from first unit 1001. On this occasion, CPU 210 of second unit 1002 utilizes power from each of USB connectors 194, 294 so as to display types of OSs on liquid crystal panel 240 in a selectable manner.

Through liquid crystal panel 240, the user selects an OS to be launched. In accordance with the user's selection, CPU 210 transmits a command designating the OS to be launched (for example, "first OS" command shown in Fig. 10), to first unit 1001 via USB connectors 194, 294. In accordance with the command, first unit 1001 launches the OS.

Further, second unit 1002 transmits data to and receives data from an external mobile phone or the like via an antenna 295, for example. Via antenna 295, CPU 210 of second unit 1002 obtains picture image data or corresponding thumbnail data from the external mobile phone, and stores the picture image data or corresponding thumbnail data in RAM 271 or the like. CPU 210 reads out the thumbnail data from RAM 271, and displays a thumbnail image of the picture on liquid crystal panel 240 in a selectable manner.

In accordance with a selection instruction from outside, CPU 210 displays the picture image on liquid crystal panel 240. Alternatively, CPU 210 displays the picture image on liquid crystal panel 140 or display device 102A via USB connector 294.

It should be noted that as described above, second liquid crystal panel 240 of electronic device 100 may be a usual touch panel having a tablet function and a display function.

First Specific Implementation

Schematic Configuration of Communication System 1

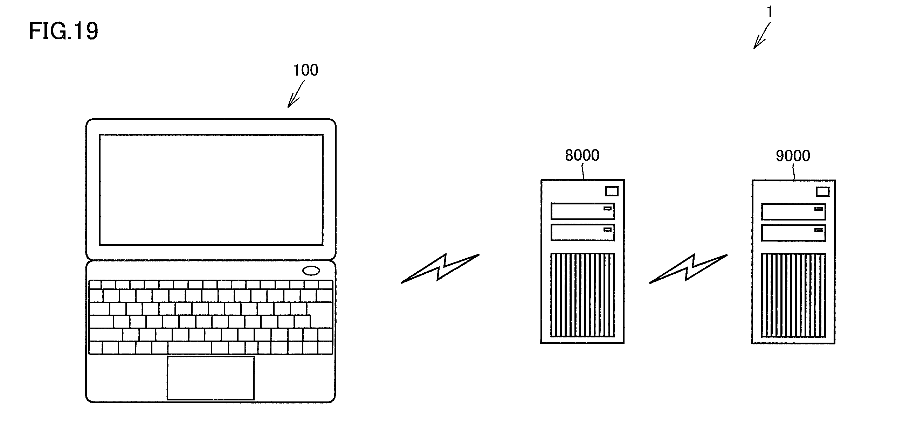

Fig. 19 shows a schematic configuration of communication system 1. Referring to Fig. 19, communication system 1 includes electronic device 100, a server 8000, and a server 9000. It should be noted that in the description below, electronic device 100 is illustrated and exemplified as a notebook type personal computer.

Server 8000 communicates with electronic device 100 and server 9000. Server 8000 belongs to, for example, a business entity that provides software. Alternatively, server 8000 belongs to, for example, a business entity that provides a search engine. Although described in detail below, server 8000 transmits image data indicating an advertisement to electronic device 100. Hereinafter, server 8000 is referred to as "advertisement server 8000".

Server 9000 communicates with server 8000. Server 9000 is a server owned by an application service provider (hereinafter, abbreviated as "ASP"), and is used to provide an application service. Alternatively, server 9000 is a server owned by a storage service provider (hereinafter, abbreviated as "SSP"), and is used to provide a storage service. In the description below, server 9000 is illustrated and exemplified as a server used to provide an application service. Also in the description below, server 9000 is referred to as "ASP server 9000".

It should be noted that the ASP is, for example, a business entity that provides components of electronic devices to assembly manufacturers. In the present embodiment, the ASP is a business entity that provides liquid crystal panel 240 of electronic device 100 to an assembly manufacturer. The ASP may be a business entity that manufactures components of electronic devices by itself and manufactures electronic devices using the components thus manufactured.

Hardware Configurations of Advertisement Server 8000 and ASP Server 9000

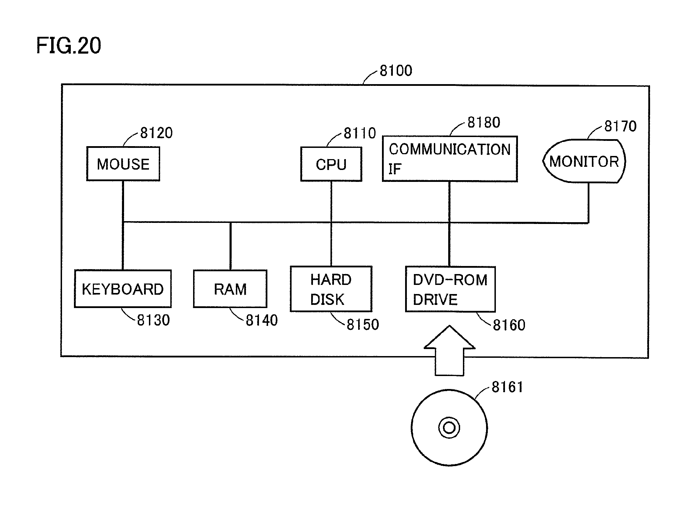

Fig. 20 is a block diagram showing a hardware configuration of a computer system 8100, which functions as advertisement server 8000.

Computer system 8100 includes, as main components, a CPU 8110 for executing a program; a mouse 8120 and a keyboard 8130 each for receiving an instruction from a user of computer system 8100; a RAM 8140 for storing, in a volatile manner therein, data generated by CPU 8110 executing the program or data entered via mouse 8120 or keyboard 8130; a hard disk 8150 for storing data therein in a nonvolatile manner; a DVD-ROM drive 8160; a monitor 8170; and a communication IF 8180. The components are connected to one another via a data bus. In DVD-ROM drive 8160, a DVD-ROM 8161 is placed.

Processes in computer system 8100 are implemented by hardware and software executed by CPU 8110. Such software may be stored in advance in hard disk 8150. Alternatively, the software may be stored in DVD-ROM 8161 or other storage media and may be distributed as a program product. Alternatively, the software may be provided as a downloadable program product by an information providing business entity connected to the Internet. Such software is read by DVD-ROM drive 8160 or other reading devices from the storage medium, or is downloaded via communication IF 8180 and then is stored in hard disk 8150 temporarily. The software is read out from hard disk 8150 by CPU 8110, and is stored in RAM 8140 in the form of an executable program. CPU 8110 executes the program.

Each component shown in Fig. 20 and constituting computer system 8100 is a general one. Hence, it can be said that an essential part of the present invention lies in the software stored in RAM 8140, hard disk 8150, DVD-ROM 8161 or other storage media, or the software downloadable via the network. It should be noted that operations of the hardware of computer system 8100 are well known and therefore explanation is not repeated therefor.

The storage medium is not limited to a DVD-ROM, a CD-ROM, a FD, or a hard disk, but may be a medium holding the program in a fixed manner, such as a magnetic tape, a cassette tape, an optical disk (MO / MD / DVD), an IC card (inclusive of a memory card), an optical card, or a semiconductor memory such as a mask ROM, an EPROM, an EEPROM, or a flash ROM.

The term "program" herein includes not only a program directly executable by a CPU, but also a program in the form of a source program, a compressed program, an encrypted program, and the like.

ASP server 9000 has a hardware configuration similar to that of advertisement server 8000, so repeated explanation is not given for the hardware configuration of ASP server 9000.

Functional Blocks of Electronic Device 100

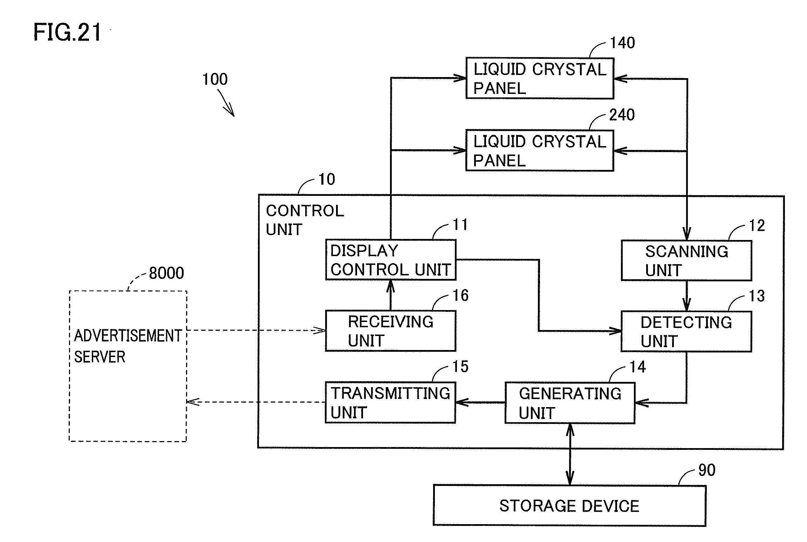

Fig. 21 shows functional blocks of electronic device 100. Referring to Fig. 21, electronic device 100 includes a control unit 10, liquid crystal panels 140, 240, and a storage device 90. Control unit 10 includes a display control unit 11, a scanning unit 12, a detecting unit 13, a generating unit 14, a transmitting unit 15, and a receiving unit 16.

Storage device 90 is constituted by RAM 171 and the hard disk (not shown). Storage device 90 stores therein application software executable by electronic device 100, and information, associated with the application software, for specifying advertisement server 8000 (hereinafter, referred to as "server specifying information"). Further, storage device 90 stores therein information indicating hardware environment of electronic device 100 (hereinafter, referred to as "hardware environment information"). Although described in detail below, the hardware environment information includes information for identifying liquid crystal panel 140, and information for identifying liquid crystal panel 240 (hereinafter, referred to as "identification information of liquid crystal panel 240").

Display control unit 11 displays images on display surface of each of liquid crystal panels 140, 240, based on image data stored in a VRAM (not shown) in storage device 90. Display control unit 11 displays an operation screen of the application software on liquid crystal panel 140 based on launch of the application software. Further, display control unit 11 sends, to detecting unit 13, location information indicating the location of the displayed image in the display surface of liquid crystal panel 140, as well as location information indicating the location of the displayed image in the display surface of liquid crystal panel 240.

Scanning unit 12 scans liquid crystal panels 140, 240. Scanning unit 12 sends scan data to detecting unit 13.

Based on the scan data, detecting unit 13 detects that electronic device 100 has received an input concerned with an operation for the application software. Alternatively, detecting unit 13 detects that electronic device 100 has received an input concerned with the operation via operation key 177. Preferably, detecting unit 13 detects that electronic device 100 has received a predetermined one of inputs concerned with operations for the application software. Detecting unit 13 sends a result of the detection to generating unit 14.

It should be noted that the term "predetermined input" herein is, for example, an input for launching the application software. Alternatively, the term "predetermined input" is an input for informing advertisement server 8000 of an error having occurred upon executing the application software. Alternatively, the term "predetermined input" is an input for saving a file prepared using the application software.

Based on the detection by detecting unit 13, generating unit 14 generates a signal, which is to be transmitted to the server specified by the above-described server specifying information. Specifically, generating unit 14 reads from storage device 90 the hardware environment information and information indicating the application executed. Thereafter, generating unit 14 generates a signal including the readout information indicating the application and the hardware environment information. Generating unit 14 sends the generated signal to transmitting unit 15. It should be noted that the "information indicating the application" is information for identifying which application is the executed application. In the description below, the information indicating the application software is referred to as "application software information".

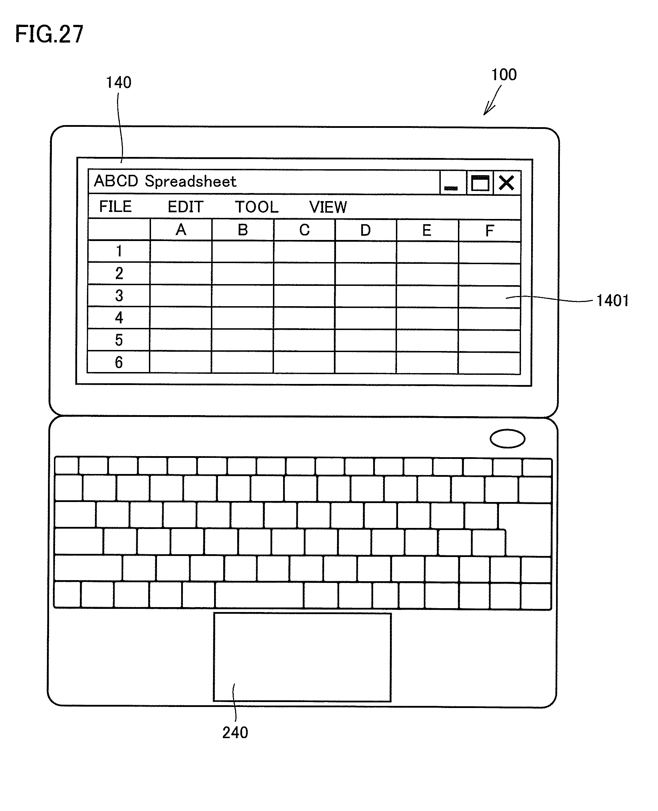

Transmitting unit 15 transmits the signal generated by generating unit 14, to advertisement server 8000. Based on the transmission of the signal, receiving unit 16 receives from advertisement server 8000 first image data (hereinafter, referred to as "advertisement image data") indicating an advertisement. More specifically, receiving unit 16 receives from advertisement server 8000 advertisement image data concerned with the application software executed (see Fig. 27). Receiving unit 16 sends the advertisement image data to display control unit 11.

Display control unit 11 displays on liquid crystal panel 240 an image (i.e., advertisement) that is based on the advertisement image data. In the description below, the image that is based on the advertisement image data is referred to as "advertisement that is based on the advertisement image data".

Further, detecting unit 13 detects that an input for selecting the advertisement displayed on liquid crystal panel 240 has been received. The input for selecting the advertisement is, for example, an input that is based on the user's operation input to the screen of liquid crystal panel 240.

Based on the detection, transmitting unit 15 transmits to advertisement server 8000 information indicating that the advertisement has been selected and the identification information of liquid crystal panel 240. The "selection of an advertisement" refers to a process in which for example the user uses a pointing device such as liquid crystal panel 240 to select an arbitrary location or predetermined location in a display area of liquid crystal panel 240 on which the advertisement is displayed. The term "predetermined location" refers to, for example, the location of an image displayed on liquid crystal panel 240 to receive the user's instruction of obtaining (for example purchasing) a commercial product displayed as the advertisement.

Functional Blocks of Server 8000

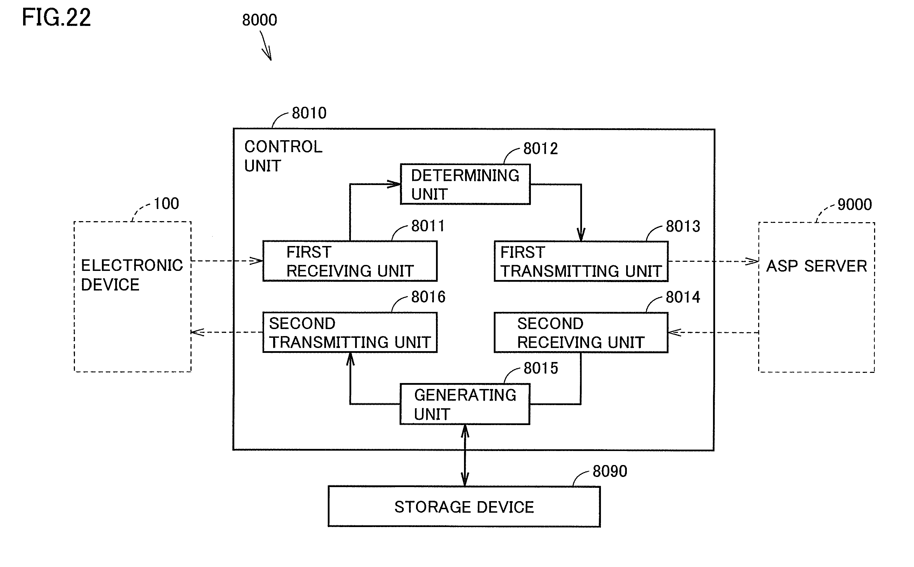

Fig. 22 shows functional blocks of advertisement server 8000. Referring to Fig. 22, advertisement server 8000 includes a control unit 8010 and a storage device 8090. Control unit 8010 includes a first receiving unit 8011, a determining unit 8012, a first transmitting unit 8013, a second receiving unit 8014, a generating unit 8015, and a second transmitting unit 8016.

Storage device 8090 is constituted by RAM 8140, hard disk 8150, and the like (see Fig. 20). Storage device 8090 stores therein second image data indicating the above-described advertisement.

First receiving unit 8011 receives from electronic device 100 the signal including the hardware environment information and the application software information. First receiving unit 8011 sends the hardware environment information to determining unit 17.

Based on the hardware environment information, determining unit 17 determines whether or not electronic device 100 has a sub liquid crystal panel. When determining unit 17 determines that electronic device 100 includes a sub liquid crystal panel, determining unit 17 sends the identification information of liquid crystal panel 240 to first transmitting unit 8013.

First transmitting unit 8013 transmits the identification information of liquid crystal panel 240 to ASP server 9000. In ASP server 9000, device information of liquid crystal panel 240 is specified based on the identification information thereof, and second receiving unit 8014 receives the device information of liquid crystal panel 240 from ASP server 9000. Second receiving unit 8014 sends the received device information to generating unit 8015. The device information will be described in detail later.

Generating unit 8015 reads out image data associated with the application software information, from among the second image data stored in storage device 8090. From the second image data thus read out, generating unit 8015 generates the advertisement image data based on the device information. In other words, advertisement image data is generated which is associated with the application software executed in electronic device 100. More specifically, generating unit 8015 generates the advertisement image data from the second image data based on information indicating an screen size and/or information indicating a resolution, both of which are included in the device information. Generating unit 8015 sends the generated advertisement image data to second transmitting unit 8016. Second transmitting unit 8016 transmits the generated advertisement image data to electronic device 100.

Functional Blocks of Server 9000

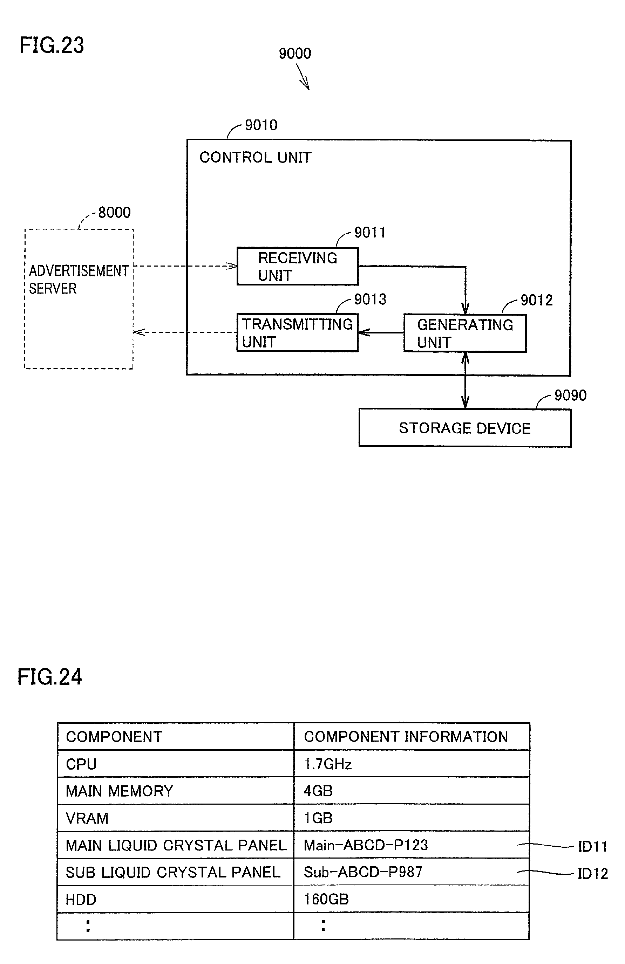

Fig. 23 shows functional blocks of ASP server 9000. Referring to Fig. 23, ASP server 9000 includes a control unit 9010 and a storage device 9090. Control unit 9010 includes a receiving unit 9011, a generating unit 9012, and a transmitting unit 9013.

Storage device 9090 is constituted by a RAM (not shown), a hard disk (not shown), and the like. Storage device 9090 stores therein respective pieces of device information concerned with liquid crystal panels provided by the business entity, in association with the respective pieces of identification information of the liquid crystal panels. Storage device 9090 stores therein the device information of liquid crystal panel 240, which is one of the plurality of pieces of device information, in association with the identification information of liquid crystal panel 240.

Receiving unit 9011 receives the identification information of liquid crystal panel 240 from advertisement server 8000. Receiving unit 9011 sends the received identification information to generating unit 9012.

Based on the device information of liquid crystal panel 240 specified based on the identification information, generating unit 9012 reads out the device information of liquid crystal panel 240 from storage device 9090. Generating unit 9012 generates a signal including the device information thus read out. Generating unit 9012 sends the generated signal to transmitting unit 9013.

Transmitting unit 9013 transmits the signal generated by generating unit 9012, to advertisement server 8000.

Data

Fig. 24 schematically shows the hardware environment information. Referring to Fig. 24, the hardware environment information includes detailed information of the components included in electronic device 100. In the case of the hardware environment information shown in Fig. 24, the hardware environment information indicates that electronic device 100 includes the main liquid crystal panel and the sub liquid crystal panel as liquid crystal panels. Here, the identification information of the main liquid crystal panel is component information ID11. The identification information of sub liquid crystal panel 240 is component information ID12. In the present embodiment, advertisement server 8000 transmits component information ID12 to ASP server 9000 as the identification information of liquid crystal panel 240.

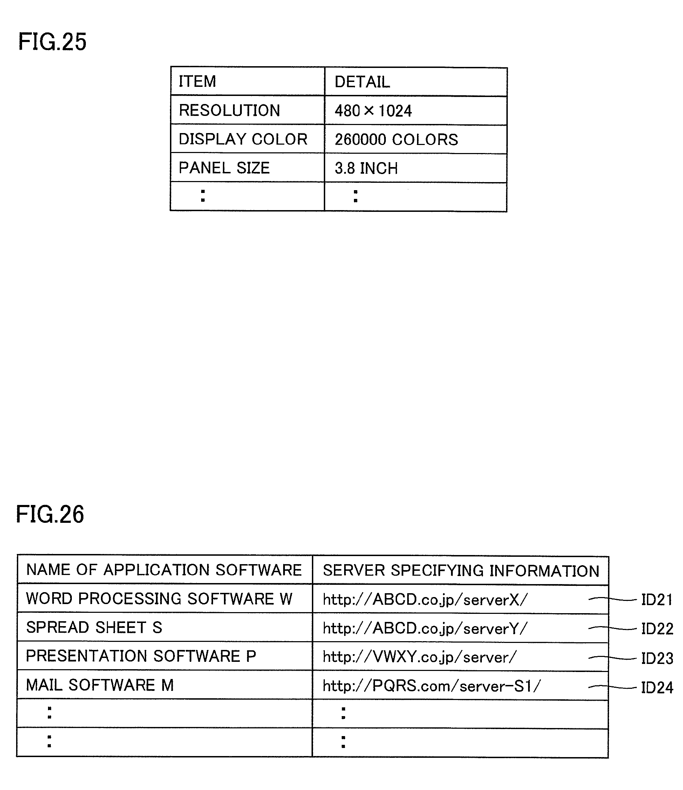

Fig. 25 schematically shows the device information of liquid crystal panel 240. Referring to Fig. 25, the device information of liquid crystal panel 240 includes information of the resolution of liquid crystal panel 240, information of colors that liquid crystal panel 240 is capable of displaying, and information indicating the panel size of liquid crystal panel 240. Based on each of the pieces of information included in the device information, advertisement server 8000 generates the above-described advertisement image data.

Fig. 26 schematically shows the server specifying information stored in storage device 90 of electronic device 100. Referring to Fig. 26, pieces of application software are respectively associated with pieces of server specifying information ID21-ID24. For example, when electronic device 100 receives an input concerned with an operation on a spreadsheet S, electronic device 100 sends a signal including the hardware environment information to a server specified by server specifying information ID22.

Transition of Screen

Fig. 27 shows electronic device 100 executing spreadsheet application software. More specifically, Fig. 27 shows that an operation screen 1401 of the spreadsheet application software is displayed on liquid crystal panel 140.

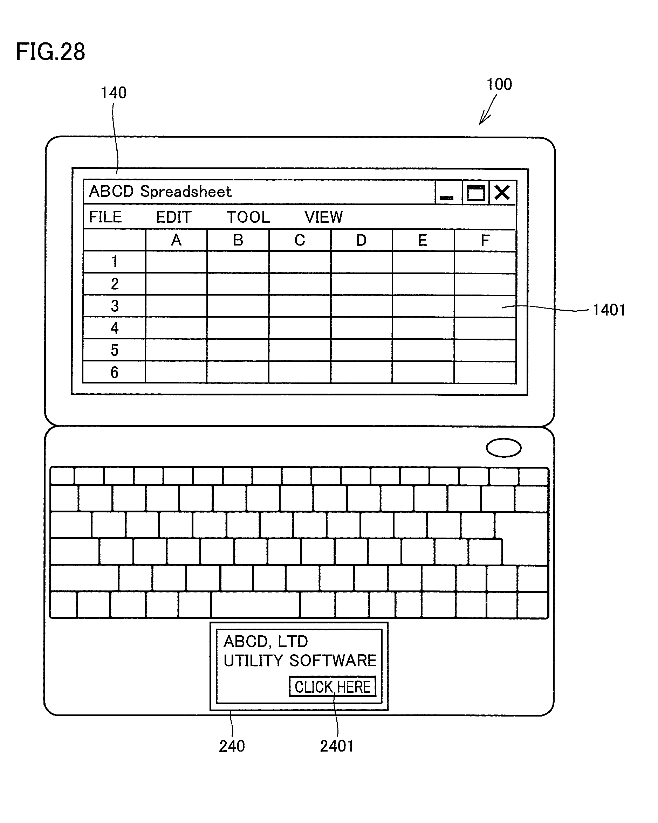

Fig. 28 shows that electronic device 100 displays the advertisement that is based on the advertisement image data, on liquid crystal panel 240. Referring to Fig. 28, for example, when the user operates to select an area 2401, electronic device 100 sends, to advertisement server 8000, information indicating that the advertisement has been selected and the identification information of liquid crystal panel 240.

Sequence in Communication System 1

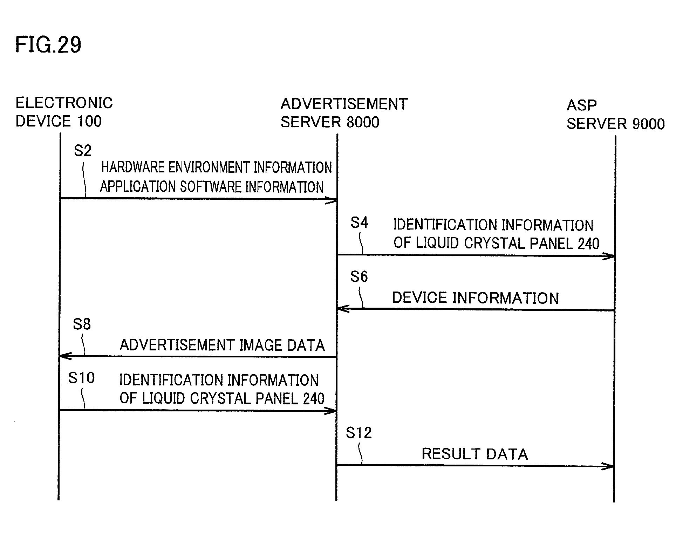

Fig. 29 shows a sequence in communication system 1. Referring to Fig. 29, in step S2, electronic device 100 sends the signal including the hardware environment information and the application software information, to advertisement server 8000. In step S4, advertisement server 8000 sends the identification information of liquid crystal panel 240 to ASP server 9000. In step S6, ASP server 9000 transmits the signal including the device information to advertisement server 8000.
In step S8, advertisement server 8000 sends the advertisement image data to electronic device 100. In step S 10, electronic device 100 transmits the information indicating that the advertisement displayed on liquid crystal panel 240 has been selected and the identification information of liquid crystal panel 240, to advertisement server 8000. Advertisement server 8000 transmits result data indicating a result of the selection to ASP server 9000. The result data is based on the information indicating that the advertisement has been selected.

Control Structure in Electronic Device 100

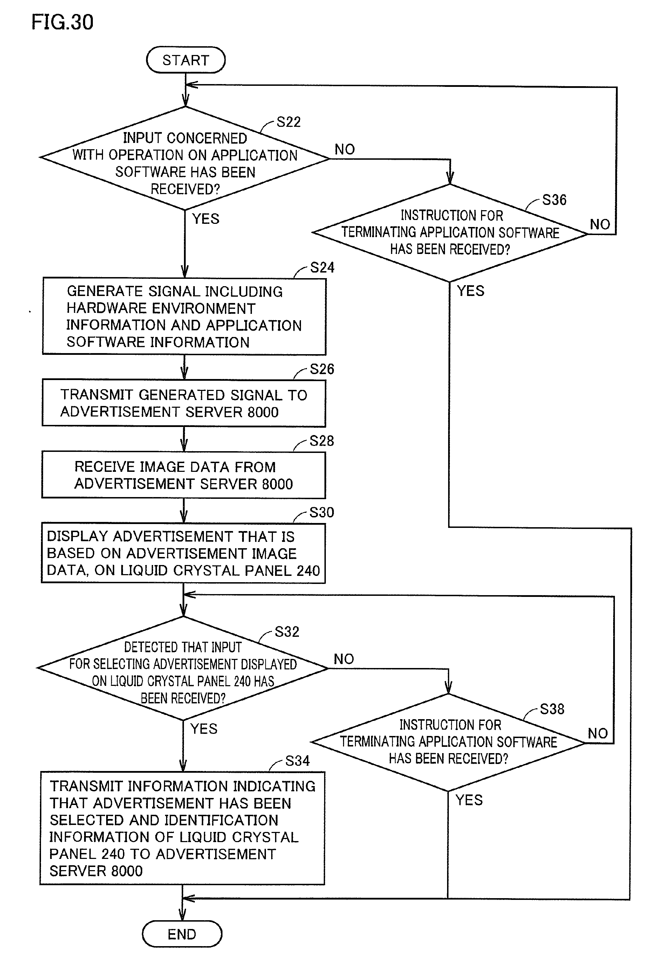

Fig. 30 shows a control structure in electronic device 100. Referring to Fig. 30, in step S22, electronic device 100 determines whether or not an input concerned with an operation on the application software has been received. When it is determined that electronic device 100 has received the input (YES in step S22), in step S24, electronic device 100 generates the signal including the hardware environment information and the application software information.
Meanwhile, when electronic device 100 determines that the input has not been received (NO in step S22), in step S36, electronic device 100 determines whether or not an instruction for terminating the application software has been received. When electronic device 100 determines that the instruction for terminating the application software has been received (YES in step S36), electronic device 100 terminates the series of processes. On the other hand, when electronic device 100 determines that the instruction for terminating the application software has not been received (NO in step S36), the process goes back to step S22.
In step S26, electronic device 100 transmits the generated signal to advertisement server 8000. In step S28, electronic device 100 receives the advertisement image data from advertisement server 8000. In step S30, electronic device 100 displays the advertisement that is based on the received advertisement image data, on liquid crystal panel 240.
In step S32, electronic device 100 determines whether or not an input for selecting the advertisement displayed on liquid crystal panel 240 has been received. When electronic device 100 determines that the input has been received (YES in step S32), in step S34, electronic device 100 transmits the information indicating that the advertisement has been selected and the identification information of liquid crystal panel 240, to advertisement server 8000.
On the other hand, when the electronic device determines that the input has not been received (NO in step S32), in step S38, electronic device 100 determines whether or not an instruction for terminating the application software has been received. When electronic device 100 determines that the instruction for terminating the application software has been received (YES in step S38), electronic device 100 terminates the series of processes. On the other hand, when electronic device 100 determines that the instruction for terminating the application software has not been received (NO in step S38), the process goes back to step S32.

Control Structure in Advertisement Server 8000

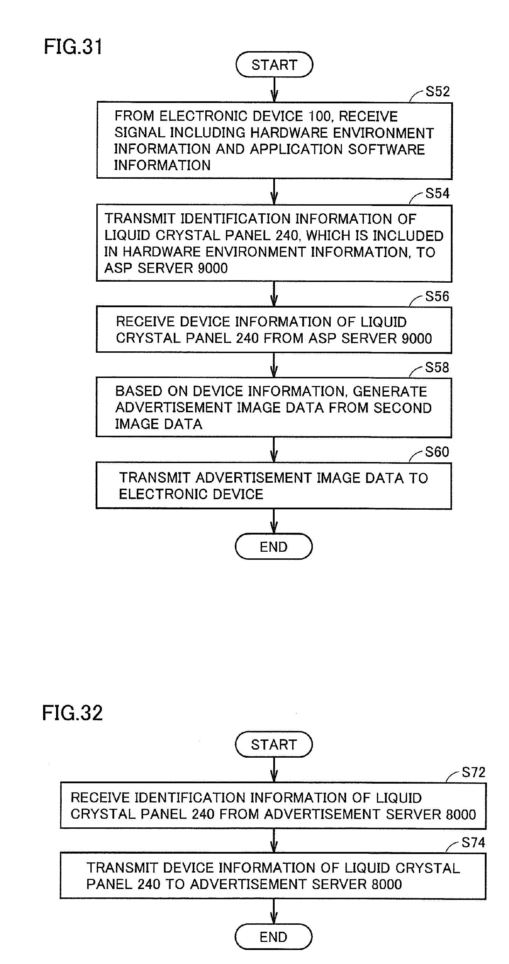

Fig. 31 shows a control structure in advertisement server 8000. Referring to Fig. 31, in step S52, advertisement server 8000 receives from electronic device 100 the signal including the hardware environment information and the application software information. In step S54, advertisement server 8000 transmits the identification information of liquid crystal panel 240, which is included in the hardware environment information, to ASP server 9000.

In step S56, advertisement server 8000 receives the device information of liquid crystal panel 240 from ASP server 9000. In step S58, based on the received device information, advertisement server 8000 generates the advertisement image data from the second image data. In step S60, advertisement server 8000 transmits the advertisement image data to electronic device 100.

Control Structure in ASP server 9000

Fig. 32 shows a control structure in ASP server 9000. Referring to Fig. 32, in step S72, ASP server 9000 receives the identification information of liquid crystal panel 240 from advertisement server 8000. In step S74, ASP server 9000 transmits the device information of liquid crystal panel 240 to advertisement server 8000.

Summary of First Specific Implementation

Electronic Device 100

(1) As described above, electronic device 100 at least includes display control unit 11, detecting unit 13, generating unit 14, transmitting unit 15, and receiving unit 16. Based on launch of application software, display control unit 11 displays an operation screen of the application software on liquid crystal panel 140. Detecting unit 13 detects that electronic device 100 has received an input concerned with an operation onto the application software. Based on the detection, generating unit 14 generates a signal (hereinafter, referred to as "signal Q"), which is to be transmitted to advertisement server 8000 specified by the server specifying information. Transmitting unit 15 transmits the signal generated by generating unit 14, to advertisement server 8000. Based on the transmission, receiving unit 16 receives the advertisement image data from advertisement server 8000. Display control unit 11 displays an advertisement that is based on the advertisement image data, on liquid crystal panel 240.

Thus, electronic device 100 displays the operation screen of the application software on liquid crystal panel 140. Based on the reception of the input concerned with the operation onto the application software, electronic device 100 displays the advertisement that is based on the advertisement image data, on liquid crystal panel 240.

As such, electronic device 100 displays the advertisement on liquid crystal panel 240, which is different from liquid crystal panel 140 on which the operation screen of the application software is displayed. In this way, electronic device 100 can display the advertisement on liquid crystal panel 240 while the user uses electronic device 100. As a result, electronic device 100 can display the advertisement on liquid crystal panel 240 at a timing at which an effect of the advertisement can be expected.

(2) As signal Q, generating unit 14 generates a signal including at least the identification information of liquid crystal panel 240. Transmitting unit 15 transmits the signal thus including the identification information of liquid crystal panel 240, to advertisement server 8000. As the advertisement image data, receiving unit 16 receives from advertisement server 8000 the advertisement image data generated by advertisement server 8000 based on the identification information of liquid crystal panel 240.

As such, on liquid crystal panel 240, electronic device 100 can display the advertisement image data generated by advertisement server 8000 based on the identification information of liquid crystal panel 240. When the advertisement image data is generated using the device information of liquid crystal panel 240, which is based on the identification information of liquid crystal panel 240, electronic device 100 can receive advertisement image data having a size or the like suitable for liquid crystal panel 240.

(3) Detecting unit 13 detects that an input for selecting the advertisement that is based on the advertisement image data has been received. Based on the detection of the input, transmitting unit 15 transmits the information indicating that the advertisement has been selected and the identification information of liquid crystal panel 240, to advertisement server 8000. The input is, for example, an input onto the panel surface (touch panel surface) of liquid crystal panel 240.

As such, electronic device 100 can transmit to advertisement server 8000 the identification information of liquid crystal panel 240 in addition to the information indicating that the advertisement has been selected. Hence, the owner of advertisement server 8000 can judge an effect of the advertisement based on whether or not the identification information of liquid crystal panel 240 is received. Since the owner of advertisement server 8000 can judge the effect of the advertisement as such, he/she can pay a reward worth the effect of the advertisement, to the owner of ASP server 9000.

(4) As signal Q described above, generating unit 14 generates the signal including the information indicating the application software. Transmitting unit 15 transmits to advertisement server 8000 the signal including the information indicating the application software. As the advertisement image data, receiving unit 16 receives from advertisement server 8000 the image data indicating the advertisement concerned with the application software executed.

As such, electronic device 100 can display on liquid crystal panel 240 the advertisement concerned with the application displayed on liquid crystal panel 140, at a timing at which an effect of the advertisement can be expected.

Advertisement Server 8000

As described above, advertisement server 8000 at least includes first receiving unit 8011, first transmitting unit 8013, second receiving unit 8014, and second transmitting unit 8016. First receiving unit 8011 receives from electronic device 100 the signal at least including the information for identifying liquid crystal panel 140 and the identification information of liquid crystal panel 240. First transmitting unit 8013 transmits the identification information of liquid crystal panel 240 to ASP server 9000. Based on the transmission of the identification information, second receiving unit 8014 receives from ASP server 9000 the device information of liquid crystal panel 240, which is specified by ASP server 9000 based on the identification information. Based on the received device information, generating unit 8015 generates the advertisement image data. Second transmitting unit 8016 transmits the generated advertisement image data to electronic device 100.

As such, advertisement server 8000 generates the advertisement image data based on the device information of liquid crystal panel 240. In this way, advertisement server 8000 can generate advertisement image data suitable for liquid crystal panel 240. Accordingly, electronic device 100 can receive the advertisement image data suitable for liquid crystal panel 240.

ASP server 9000

ASP server 9000 at least includes receiving unit 9011 and transmitting unit 9013. Receiving unit 9011 receives the identification information of liquid crystal panel 240 from advertisement server 8000. Transmitting unit 9013 transmits the device information of liquid crystal panel 240, which is specified based on the identification information of liquid crystal panel 240, to advertisement server 8000.

As such, ASP server 9000 can transmit the device information of the liquid crystal panel of electronic device 100 to advertisement server 8000. In this way, advertisement server 8000 can generate advertisement image data based on the device information.

Variations of Electronic Device 100

First Variation

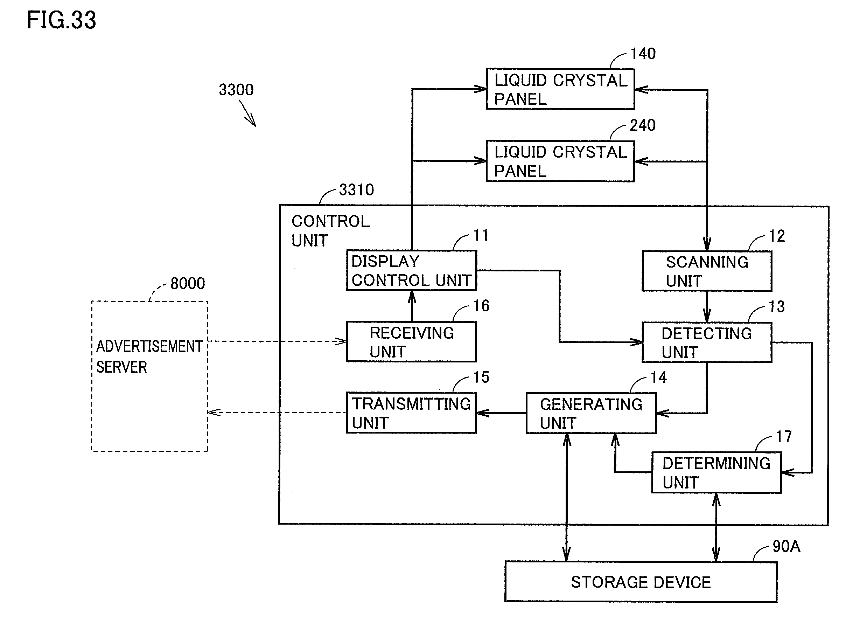

Fig. 33 shows functional blocks of an electronic device 3300, which is a variation of electronic device 100. Referring to Fig. 33, electronic device 3300 includes a control unit 3310, liquid crystal panels 140, 240, and a storage device 90A.

Storage device 90A is constituted by RAM 171 and a hard disk (not shown). In addition to the information stored in storage device 90, storage device 90A stores therein pieces of image data indicating fingerprints of users of electronic device 3300 (hereinafter, referred to as "fingerprint image data") and pieces of attribute information indicating attributes of the users in association with each other, respectively. The "attribute information" is information indicating each user's age, sex, postal address, job, and the like. The attribute information is recorded onto storage device 90A by, for example, the user's input to electronic device 3300.

Control unit 3310 includes display control unit 11, scanning unit 12, detecting unit 13, generating unit 14, transmitting unit 15, receiving unit 16, and a determining unit 17. Control unit 3310 is different from control unit 10 of electronic device 100 in that control unit 3310 includes determining unit 17.

Determining unit 17 receives scan data sent from scanning unit 12. Determining unit 17 determines whether or not fingerprint image data matching with the scan data is stored in storage device 90A. When determining unit 17 determines that the fingerprint data matching with the scan data is stored therein, determining unit 17 reads out, from storage device 90A, attribute information stored in association with the fingerprint image data thus determined to match therewith. Determining unit 17 sends the readout attribute information to generating unit 14.

Generating unit 14 incorporates the attribute information into the above-described signal to be transmitted to advertisement server 8000. Transmitting unit 15 transmits the signal thus including the attribute information, to advertisement server 8000. As such, when it is determined that the fingerprint data matching with the scan data is stored in storage device 90A, transmitting unit 15 transmits to advertisement server 8000 the attribute information associated with the fingerprint data determined to match with the scan data.

As such, electronic device 3300 transmits to advertisement server 8000 the information indicating that the advertisement has been selected, the identification information of liquid crystal panel 240, and the attribute information of the user who has selected the advertisement. In this way, advertisement server 8000 can obtain the attribute information of the user who has selected the advertisement. The owner of advertisement server 8000 utilizes the obtained attribute information as, for example, a marketing material.

Second Variation

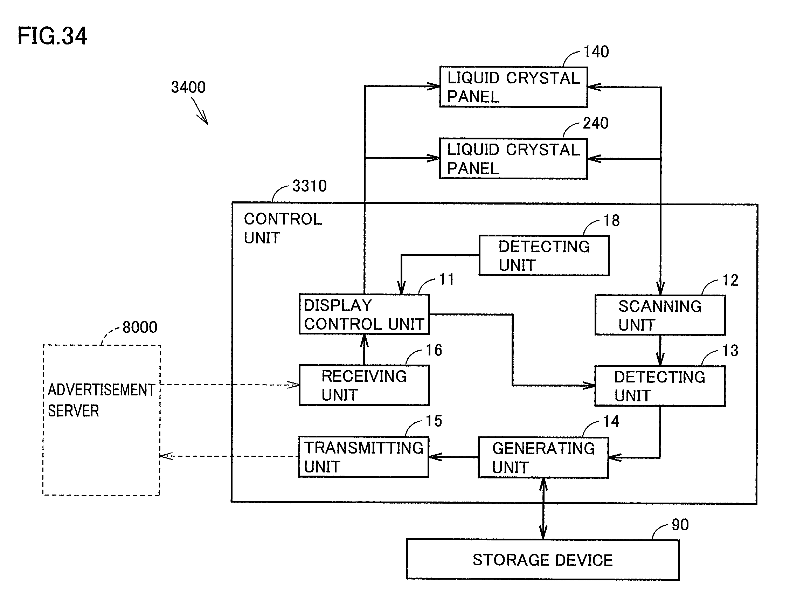

Fig. 34 shows functional blocks of an electronic device 3400, which is another variation of electronic device 100. Referring to Fig. 34, electronic device 3400 includes a control unit 3410, liquid crystal panels 140, 240, and storage device 90. Control unit 3410 includes display control unit 11, scanning unit 12, detecting unit 13, generating unit 14, transmitting unit 15, receiving unit 16, and a detecting unit 18. Control unit 3410 is different from control unit 10 of electronic device 100 in that control unit 3410 includes detecting unit 18.

Detecting unit 18 detects that no input for operating electronic device 3400 has been received for a predetermined period of time. For example, detecting unit 18 detects that no key operation input and no input onto the touch panel have been received for one minute. When detecting unit 18 performs the detection while the operation screen of the above-described application software is displayed on liquid crystal panel 140, display control unit 11 displays an advertisement that is based on advertisement image data, on liquid crystal panel 240.

As such, when no key operation or no input via liquid crystal panels 140, 240 have not been received from the user for the predetermined period of time while the operation screen of the application software is displayed on liquid crystal panel 140, electronic device 3400 displays the advertisement on liquid crystal panel 240.

Hence, while the user may not operate electronic device 3400, electronic device 3400 can display the advertisement on liquid crystal panel 240. As a result, electronic device 3400 can display the advertisement at a timing at which an effect of the advertisement is likely to be obtained.

Third Variation

Display control unit 11 and receiving unit 16 of electronic device 100 may be configured as follows. Display control unit 11 has a function of enabling the display on liquid crystal panel 240 when receiving a first command, and disabling the display on liquid crystal panel 240 when receiving a second command.

When receiving unit 16 receives the above-described advertisement image data while display control unit 11 disables the display on liquid crystal panel 240 due to reception of the second command, receiving unit 16 transmits the first command to display control unit 11. Based on the first command, display control unit 11 displays the advertisement that is based on the advertisement image data, on liquid crystal panel 240.

As such, when receiving the advertisement image data from advertisement server 8000 while the display function of liquid crystal panel 240 is disabled, electronic device 100 enables the display function. Hence, when the user has made settings to disable the display function of liquid crystal panel 240 but the advertisement image data is received, electronic device 100 can display the advertisement on liquid crystal panel 240. In this way, even when the display function of liquid crystal panel 240 is set to be disabled, the user can view and recognize the advertisement on liquid crystal panel 240.

Other

A supplier manufacturer of liquid crystal panel 240 supplies various liquid crystal panels 240 of types different in specification (screen size, resolution, display color, and the like) to an assembly manufacturer that assembles electronic device 100. Under such circumstances that various liquid crystal panels 240 different in specification are distributed in market, it can be said that the method for providing the advertisement as described in the present embodiment achieves a high advertisement effect.

Second Specific Implementation

Schematic Configuration of Communication System 1A

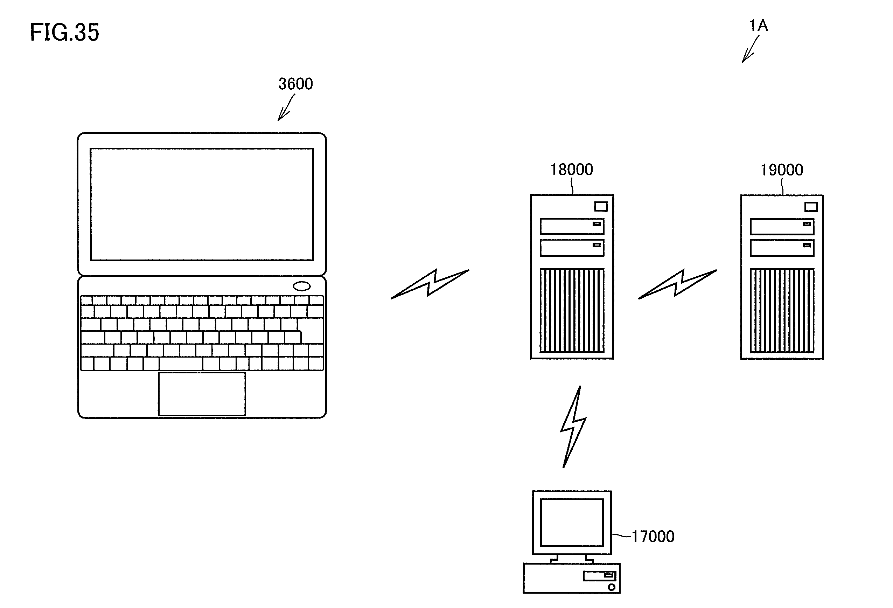

Fig. 35 shows a schematic configuration of a communication system 1A. Referring to Fig. 35, communication system 1A includes an electronic device 3 600, a terminal device 17000, a server 18000, and a server 19000. It should be noted that in the description below, electronic device 3600 is illustrated and exemplified as a notebook type personal computer.

As with electronic device 100, electronic device 3600 includes the configurations and the functions shown in Figs. 1-18. Hence, explanation given with reference to Figs. 1-18 will not be repeated here.

Electronic device 3600 communicates with server 18000. Terminal device 17000 communicates with server 18000. Terminal device 17000 belongs to, for example, an advertiser who requests an owner of server 18000 to place an advertisement via a network.

Server 18000 communicates with electronic device 3600, terminal device 17000, and server 19000. Server 18000 is a computer owned by an application service provider (hereinafter, abbreviated as "ASP"), and is used to provide an application service. Alternatively, server 18000 is a computer owned by a storage service provider (hereinafter, abbreviated as "SSP"), and is used to provide a storage service.

The application service and the storage service are provided by a business entity that provides components of the electronic device to an assembly manufacturer, for example. In the present embodiment, it is assumed that the application service and the storage service are provided by a company that provides liquid crystal panel 240 of electronic device 3600 to the assembly manufacturer. It should be noted that the application service and the storage service may be provided by a business entity that manufactures the components of the electronic device by itself and manufactures the electronic device using the components thus manufactured.

It should be noted that in the description below, server 18000 is illustrated and exemplified as a server used to provide the application service. It should be also noted that in the description below, server 18000 is referred to as "ASP server 18000".

Server 19000 communicates with ASP server 18000. Server 19000 is owned by, for example, a business entity that develops and sells software.

In the present embodiment, the term "image" refers to information output and displayed on a display surface of each of liquid crystal panels 140, 240. Specifically, the term "image" represents a concept including a drawing, a photo, a character string, and the like. It is assumed that an image is displayed on a screen based on image data.

Hardware Configurations of Servers 18000, 19000, and Terminal Device 17000

A computer system serving as ASP server 18000 has the same hardware configuration as that of computer system 8100 shown in Fig. 20. Hence, no repeated explanation is given for the hardware configuration of ASP server 18000.

Server 19000 has a hardware configuration similar to that of ASP server 18000. Hence, no repeated explanation is given for the hardware configuration of server 19000. Likewise, terminal device 17000 has a hardware configuration similar to that of ASP server 18000. Hence, no repeated explanation is given for the hardware configuration of terminal device 17000.

Blocks of Electronic Device 3600

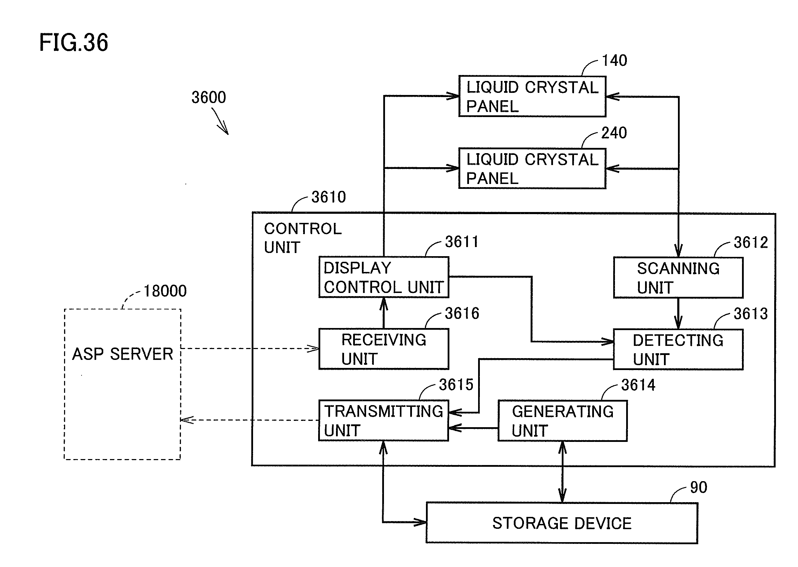

Fig. 36 shows blocks of electronic device 3600. Referring to Fig. 36, electronic device 3600 includes a control unit 3610, liquid crystal panels 140, 240, and a storage device 90. Control unit 3610 includes a display control unit 3611, a scanning unit 3612, a detecting unit 3613, a generating unit 3614, a transmitting unit 3615, and a receiving unit 3616.

Storage device 90 is constituted by a RAM 171 and a hard disk (not shown). Storage device 90 stores therein application software executable by electronic device 3600 and information for specifying ASP server 18000 (hereinafter, referred to as "server specifying information"). The server specifying information is, for example, information indicating the address of ASP server 18000 on the network. In addition, storage device 90 stores therein information (hardware environment information) indicating a hardware environment of electronic device 3600.

Display control unit 3611 displays images on display surfaces of liquid crystal panels 140, 240 based on image data stored in a VRAM (not shown) provided in storage device 90. Display control unit 3611 displays an operation screen of the application software on liquid crystal panel 140 based on launch of the application software. Further, display control unit 3611 sends to detecting unit 3613 location information indicating the location of the displayed image in the display surface of liquid crystal panel 140, and location information indicating the location of the displayed image in the display surface of liquid crystal panel 240.

Scanning unit 3612 scans liquid crystal panels 140, 240. Scanning unit 3612 sends scan data to detecting unit 3613.

Based on the scan data, detecting unit 3613 detects that electronic device 3600 has received an input for operating the application software. Alternatively, detecting unit 3613 detects that electronic device 3600 has received an input for operating it via operation key 177. When detecting unit 3613 detects the input, electronic device 3600 operates in accordance with the input.

Based on occurrence of an error upon executing the application software, generating unit 3614 generates a signal including error information indicating the error. The signal is to be transmitted to a server specified by the specifying information. Specifically, generating unit 3614 reads out the hardware environment information from storage device 90. Thereafter, generating unit 3614 generates a signal including the error information and the hardware environment information. Generating unit 3614 transmits the generated signal to transmitting unit 3615.

The term "error" herein includes an application error, which is a fatal error taking place while executing the application software, and a non-fatal error. The term "fatal error" herein refers to such an error that a process by the application software cannot be performed without terminating the application software and then launching the application software again, for example.

Transmitting unit 3615 transmits the signal generated by generating unit 3614 to ASP server 18000. Transmitting unit 3615 transmits the signal to ASP server 18000 via, for example, the Internet network.

Based on the transmission of the signal, receiving unit 3616 receives from ASP server 18000 image data (hereinafter, referred to as "display image data") including advertisement image data and help message image data. Receiving unit 3616 sends the display image data to display control unit 3611. The term "help message image data" herein refers to image data indicating a message concerned with the error. The term "message concerned with the error" refers to, for example, a message indicating a countermeasure for the error. In the description below, the advertisement image data is referred to as "display advertisement data" and the help message image data is referred to as "display message data".

Display control unit 3611 displays on liquid crystal panel 240 the image (i.e., the help message and the advertisement) that is based on the display image data. In the description below, the image that is based on the display advertisement data is also referred to as "advertisement that is based on the display advertisement data". The image that is based on the display message data is also referred to as "message that is based on the display message data".

Further, detecting unit 3613 detects that an input for selecting the advertisement displayed on liquid crystal panel 240 has been received. The input for selecting the advertisement is, for example, an input that is based on the user's operation input to the screen of liquid crystal panel 240.

Based on the detection, transmitting unit 3615 transmits to ASP server 18000 information indicating that the advertisement has been selected, and the identification information of liquid crystal panel 240. The "selection of the advertisement" herein refers to, for example, a process in which the user uses a pointing device such as liquid crystal panel 240 to select an arbitrary location or predetermined location in the display area of liquid crystal panel 240 on which the advertisement is displayed. The term "predetermined location" is for example a location of the image displayed on liquid crystal panel 240 to receive the user's instruction of obtaining (for example, purchasing) a commercial product, which is displayed as the advertisement.

Blocks of ASP Server 18000

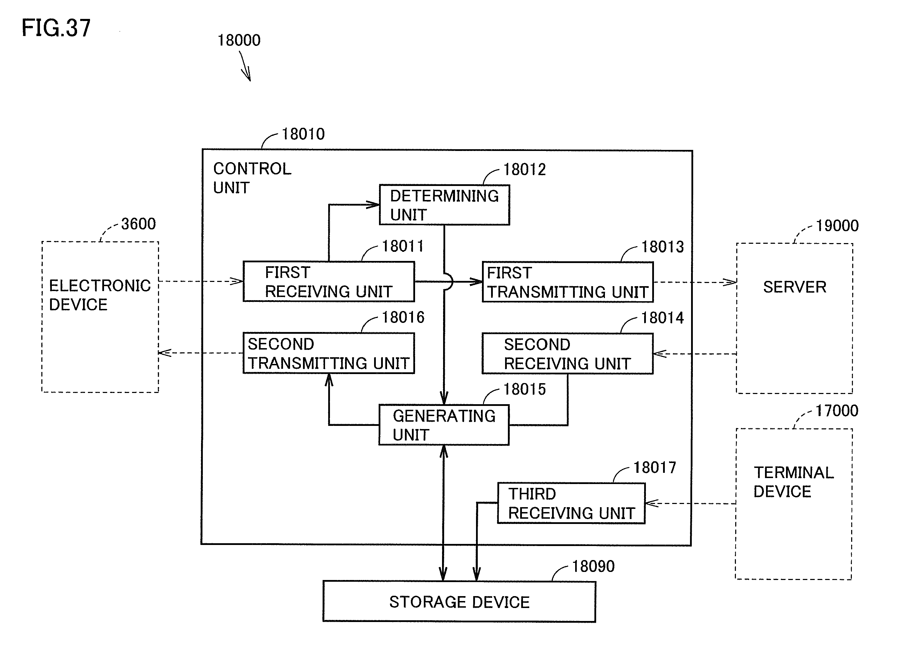

Fig. 37 shows blocks of ASP server 18000. Referring to Fig. 37, ASP server 18000 includes a control unit 18010 and a storage device 18090. Control unit 18010 includes a first receiving unit 18011, a determining unit 18012, a first transmitting unit 18013, a second receiving unit 18014, a generating unit 18015, a second transmitting unit 18016, and a third receiving unit 18017.

Storage device 18090 is constituted by a RAM 8140, a hard disk 8150, and the like (see Fig. 20). Storage device 18090 stores therein below-described device information (Fig. 26). In storage device 18090, for example, the device information of liquid crystal panel 240, which is one of the plurality of pieces of device information, is stored in association with the identification information of liquid crystal panel 240.

Third receiving unit 18017 receives from terminal device 17000 advertisement image data (hereinafter, referred to as "original advertisement data") different from the display advertisement data. Third receiving unit 18017 stores the original advertisement data in storage device 18090. A relation between the original advertisement data and the display advertisement data will be described later.

First receiving unit 18011 receives from electronic device 3600 the signal including the hardware environment information and the error information. First receiving unit 18011 sends the hardware environment information to determining unit 18012. First receiving unit 18011 sends the error information to first transmitting unit 18013.

Based on the hardware environment information, determining unit 18012 determines whether or not electronic device 3600 includes a sub liquid crystal panel. When determining that electronic device 3600 includes a sub liquid crystal panel, determining unit 18012 sends the identification information of liquid crystal panel 240 to generating unit 18015. First transmitting unit 18013 transmits the error information to server 19000.

Based on the transmission of the error information, second receiving unit 18014 receives from server 19000 image data (hereinafter, referred to as "original message data") different from the display message data and indicating a message concerned with the error. Second receiving unit 18014 sends the received original message data to generating unit 18015. A relation between the original message data and the above-described display message data will be described later.

Based on the identification information of liquid crystal panel 240, generating unit 18015 reads out the device information of liquid crystal panel 240 from among the pieces of the device information stored in storage device 18090. Based on the device information of liquid crystal panel 240, generating unit 18015 generates the display image data from the original message data and the original advertisement data. Hereinafter, details of the generation of the display image data will be described. In the description below, the information concerned with resolution and included in the device information of liquid crystal panel 240 represents 480 dots in height and 1024 dots in width, for example.

Generating unit 18015 generates the display message data from the original message data so that the display message data will have a size falling within a first size (for example, 480 dots in height $\times$ 640 dots in width). Further, generating unit 18015 generates the display advertisement data from the original advertisement data so that the display advertisement data will have a size falling within a second size (for example, 480 dots in height $\times$ 384 (1024 - 640) dot in width). Furthermore, generating unit 18015 generates the image data including the display message data and the display advertisement data. In this way, ASP server 18000 obtains the display image data. Specifically, ASP server 18000 obtains the display image data of 480 dots in height $\times$ 1024 (640 + 3 84) dots in width.

It should be noted that the first size and the second size are, for example, recorded in storage device 18090 in advance. Alternatively, the first size and the second size may be calculated by ASP server 18000 in accordance with the resolution of liquid crystal panel 240 and predetermined ratios (for example, 1 : 1 in height and 10 : 6 in width). In this case, the ratios are recorded in advance in storage device 18090.

It should be noted that when there are n advertisements (n: natural number), ASP server 18000 may assume a size obtained by dividing the size of height of the second size (480 dots) by n, as the size of height for one piece of display advertisement data, and assumes 384 dots as the size of width therefor, for example. For example, when n is 3, the size of each display advertisement data is 160 dots in height $\times$ 384 dots in width.

Generating unit 18015 transmits the generated display image data to second transmitting unit 18016. Second transmitting unit 18016 transmits the generated display image data to electronic device 3600.

Blocks of Server 19000

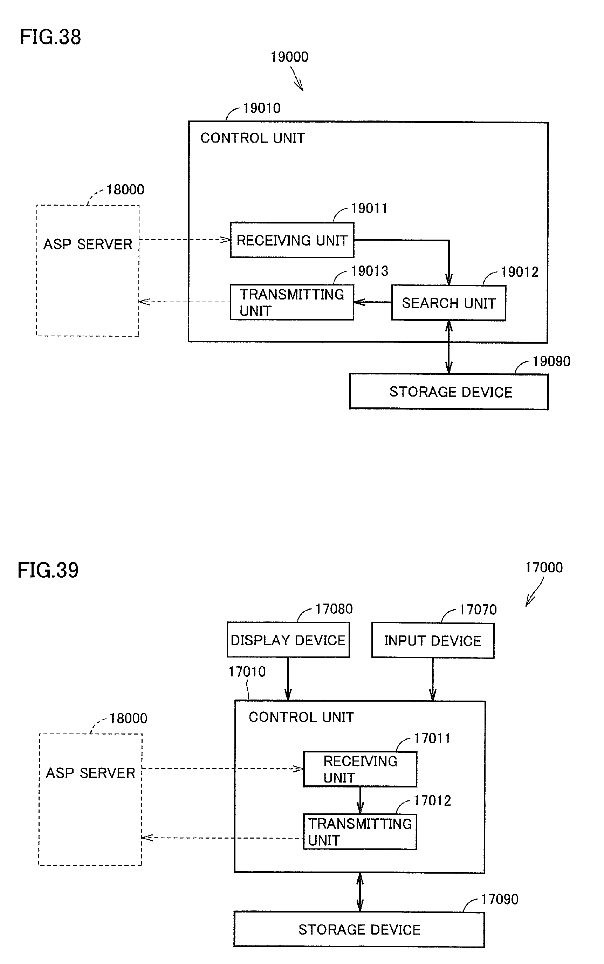

Fig. 38 shows blocks of server 19000. Referring to Fig. 38, server 19000 includes a control unit 19010 and a storage device 19090. Control unit 19010 includes a receiving unit 19011, a search unit 19012, and a transmitting unit 19013.

Storage device 19090 is constituted by a RAM (not shown), a hard disk (not shown), and the like. Storage device 19090 stores therein the above-described original message data in association with the error information.

Receiving unit 19011 receives the error information from ASP server 18000. Receiving unit 19011 sends the received error information to search unit 19012. Search unit 19012 reads out from storage device 19090 the original message data stored in association with the error information. Search unit 19012 sends the readout original message data to transmitting unit 19013. Transmitting unit 19013 transmits the original message data to ASP server 18000.

Blocks of terminal device 17000

Fig. 39 shows blocks of terminal device 17000. Referring to Fig. 39, terminal device 17000 includes a control unit 17010, an input device 17070, a display device 17080, and a storage device 17090. Control unit 17010 includes a receiving unit 17011 and a transmitting unit 17012.

Input device 17070 is constituted by a mouse and a keyboard (see Fig. 20). Display device 17080 is a monitor (see Fig. 20). Storage device 17090 is constituted by a RAM (not shown), a hard disk (not shown), and the like. Storage device 17090 stores the original advertisement data therein.

Transmitting unit 17012 transmits the original advertisement data to ASP server 18000. Receiving unit 17011 receives result data from ASP server 18000. The term "result data" herein refers to data indicating a result that the user has selected the advertisement displayed on electronic device 3600.

Data

The hardware environment information is as shown in Fig. 24. Hence, no repeated explanation is given for the hardware environment information. It should be noted that in the present embodiment, ASP server 18000 reads device information associated with component information ID12, from storage device 18090 as the identification information of liquid crystal panel 240.

The device information of liquid crystal panel 240 is as shown in Fig. 25. Hence, no repeated explanation is given for liquid crystal panel 240. Based on each of these pieces of information included in the device information, ASP server 18000 generates the display advertisement data from the original advertisement data.

Transition of Screen

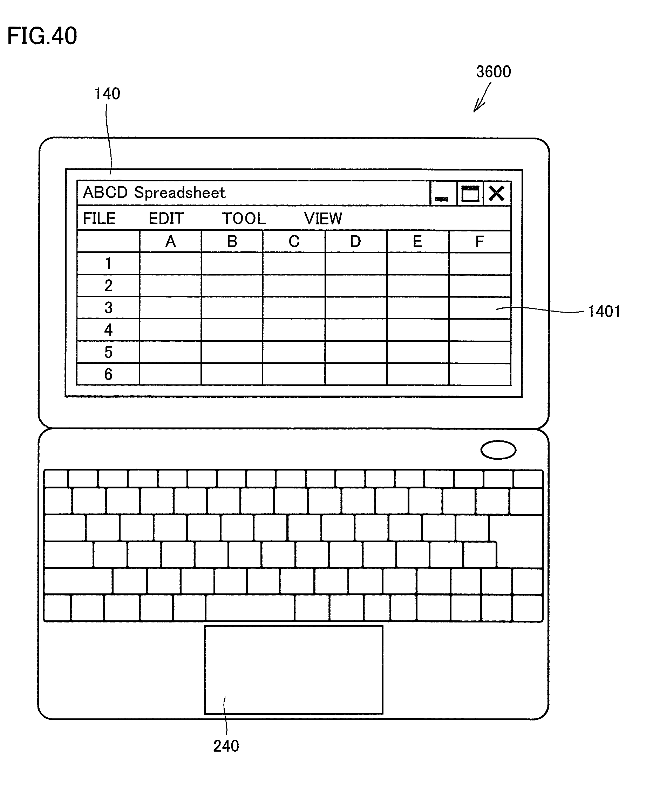

Fig. 40 shows an electronic device 3600 executing spreadsheet application software. Referring to Fig. 40, electronic device 3600 displays an operation screen 1401 of spreadsheet application software on liquid crystal panel 140.

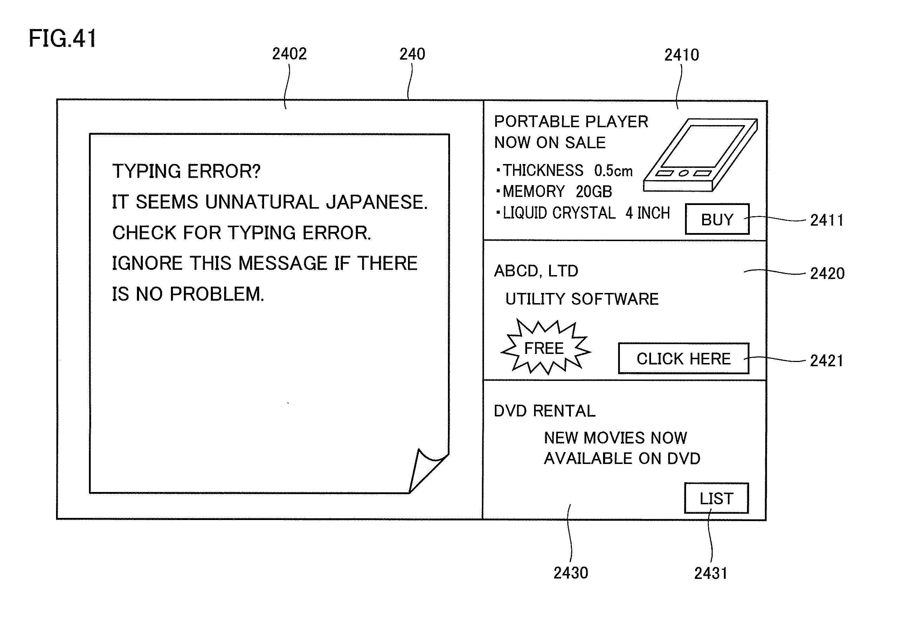

Fig. 41 shows that electronic device 3600 displays the image that is based on the display image data, on liquid crystal panel 240. Referring to Fig. 41, electronic device 3600 displays the message that is based on the display message data included in the display image data, on a display area 2402 of liquid crystal panel 240. Further, electronic device 3600 displays the advertisement that is based on the display advertisement data included in the display image data, on display areas 2410, 2420, 2430 of liquid crystal panel 240. Fig. 41 shows that three advertisements that are based on three pieces of display advertisement data are displayed.

For example, when the user operates to select a display area 2411 in display area 2410, electronic device 3600 sends to ASP server 18000 information indicating that an advertisement displayed on display area 2410 has been selected and the identification information of liquid crystal panel 240. Further, when the user operates to select a display area 2421 in display area 2420, electronic device 3600 sends to ASP server 18000 information indicating that the advertisement displayed on display area 2420 has been selected and the identification information of liquid crystal panel 240. Furthermore, when the user operates to select an area 2431 in display area 2430, electronic device 3600 sends to ASP server 18000 information indicating that the advertisement displayed on display area 2430 has been selected and the identification information of liquid crystal panel 240.

Sequence in Communication System 1A

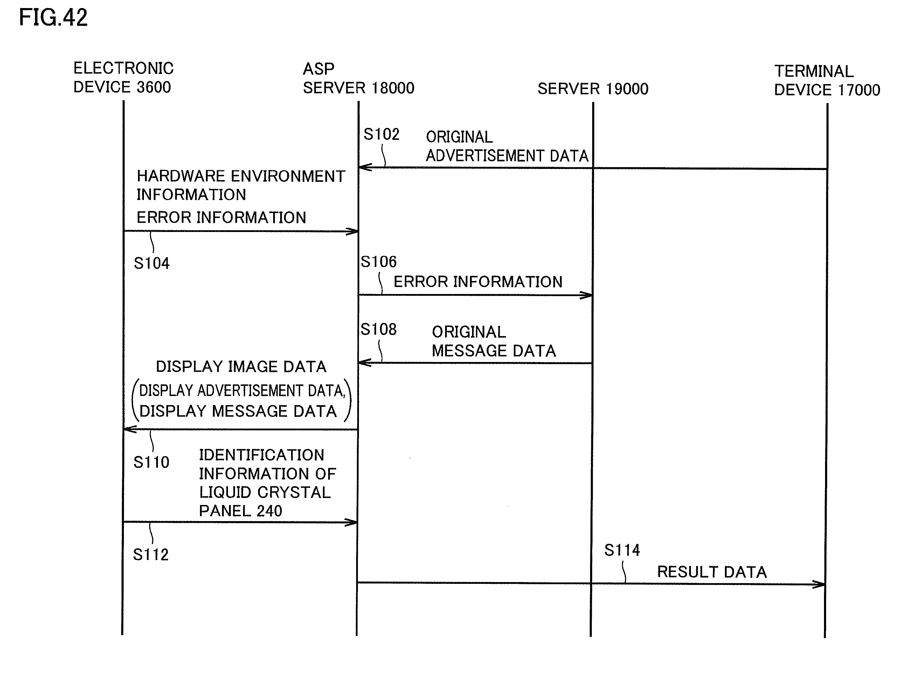

Fig. 42 shows a sequence in communication system 1A. Referring to Fig. 42, in step S102, terminal device 17000 transmits the original advertisement data to ASP server 18000. In step S104, based on occurrence of the error upon executing the application software, electronic device 3600 transmits the signal including the hardware environment information and the error information, to ASP server 18000.

In step S106, ASP server 18000 transmits the received error information to server 19000. In step S108, based on the reception of the error information, server 19000 transmits the original message data to ASP server 18000. In step S 110, based on the reception of the original message data, ASP server 18000 transmits the display image data to electronic device 3600.

In step S 112, based on the selection of the advertisement displayed on liquid crystal panel 240, electronic device 3600 transmits the information indicating that the advertisement has been selected and the identification information of liquid crystal panel 240, to ASP server 18000. In step S114, based on the reception of the information indicating that the advertisement has been selected, ASP server 18000 transmits the result data to terminal device 17000.

Control Structure in Electronic Device 3600

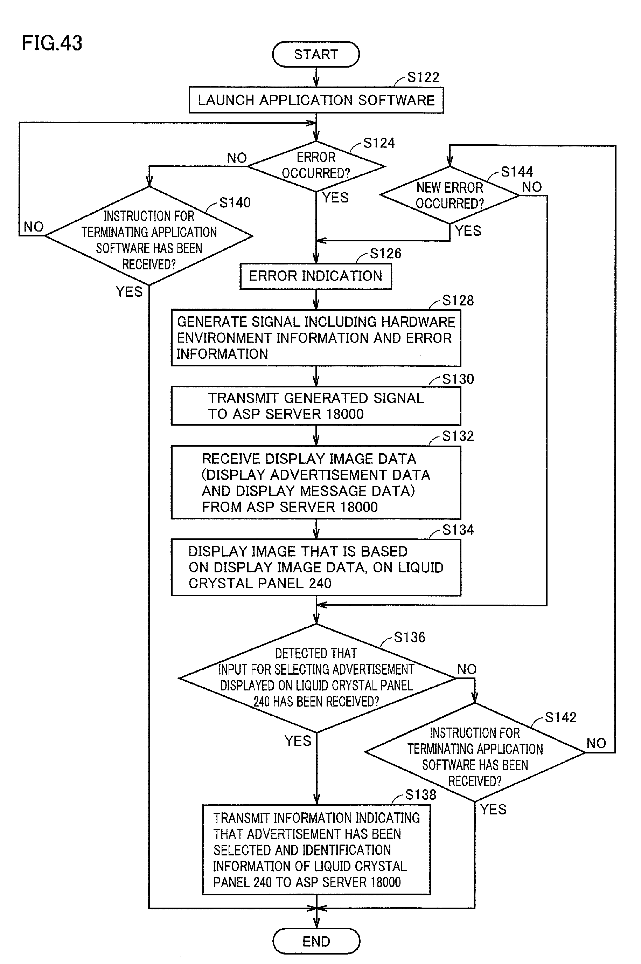

Fig. 43 is a flowchart showing a control structure in electronic device 3600. Referring to Fig. 43, in step S122, electronic device 3600 launches application software. In step S124, electronic device 3600 determines whether or not an error has occurred when executing the application software.

When electronic device 3600 determines that an error has occurred (YES in step S124), in step S126, electronic device 3 600 displays an error indication on liquid crystal panel 140. When electronic device 3600 determines that no error has occurred (NO in step S124), in step S 140, electronic device 3600 determines whether or not an instruction for terminating the application software has been received. When electronic device 3600 determines that the instruction for terminating the application software has been received (YES in step S140), electronic device 3600 terminates the series of processes. On the other hand, when electronic device 3600 determines that no instruction for terminating the application software has been received (NO in step S 140), the process goes back to step S124.

In step S128, electronic device 3600 generates a signal including the hardware environment information and error information. In step S130, electronic device 3600 transmits the generated signal to ASP server 18000. In step S 132, based on the transmission of the signal, electronic device 3600 receives display image data from ASP server 18000. In step S134, electronic device 3600 displays an image that is based on the received display image data, on liquid crystal panel 240.

In step S136, electronic device 3600 determines whether or not an input for selecting an advertisement displayed on liquid crystal panel 240 has been received. When electronic device 3600 determines that such an input has been received (YES in step S 136), in step S 13 8, electronic device 3600 transmits information indicating that the advertisement has been selected and the identification information of liquid crystal panel 240, to ASP server 18000. On the other hand, when electronic device 3600 determines that the input has not been received (NO in step S 13 6), in step S 142, electronic device 3600 determines whether or not an instruction for terminating the application software has been received.

When electronic device 3600 determines that the instruction for terminating the application software has been received (YES in step S 142), electronic device 3600 terminates the series of processes. On the other hand, when electronic device 3600 determines that no instruction for terminating the application software has been received (NO in step S 142), in step S 144, electronic device 3600 determines whether or not a new error has occurred.

When electronic device 3600 determines that the new error has occurred (YES in step S 144), the process goes to step S 126. On the other hand, when electronic device 3600 determines that no new error has occurred (NO in step S 144), the process goes to step S136.

Control Structure in ASP Server 18000

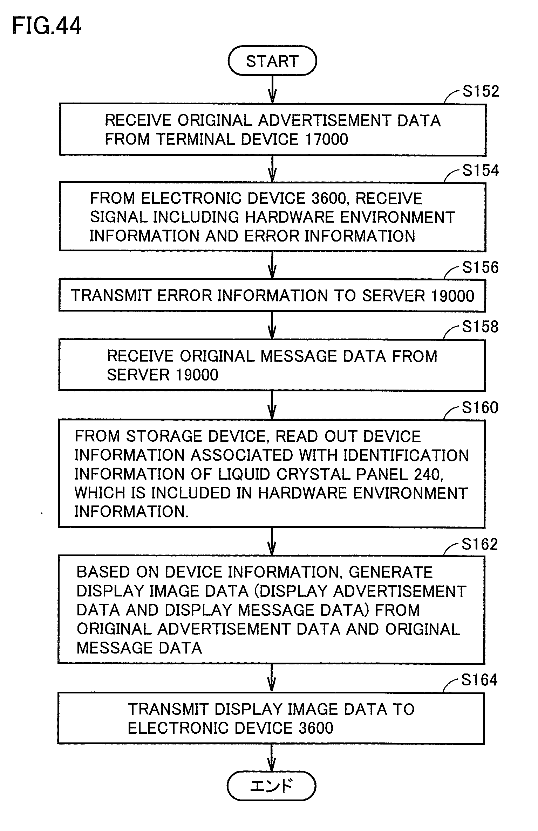

Fig. 44 is a flowchart showing a control structure in ASP server 18000. Referring to Fig. 44, in step S 152, ASP server 18000 receives original advertisement data from terminal device 17000. In step S 154, ASP server 18000 receives from electronic device 3600 the signal including the hardware environment information and the error information. In step S156, ASP server 18000 transmits the error information to server 19000. In step S 158, based on the transmission of the error information, ASP server 18000 receives original message data from server 19000.

In step S160, ASP server 18000 reads out from storage device 18090 the device information associated with the identification information of liquid crystal panel 240, which is included in the hardware environment information. In step S 162, based on the device information thus read out, ASP server 18000 generates the display image data from the original advertisement data and the original message data. In step S164, ASP server 18000 transmits the generated display image data to electronic device 3600.

Control Structure in Server 19000

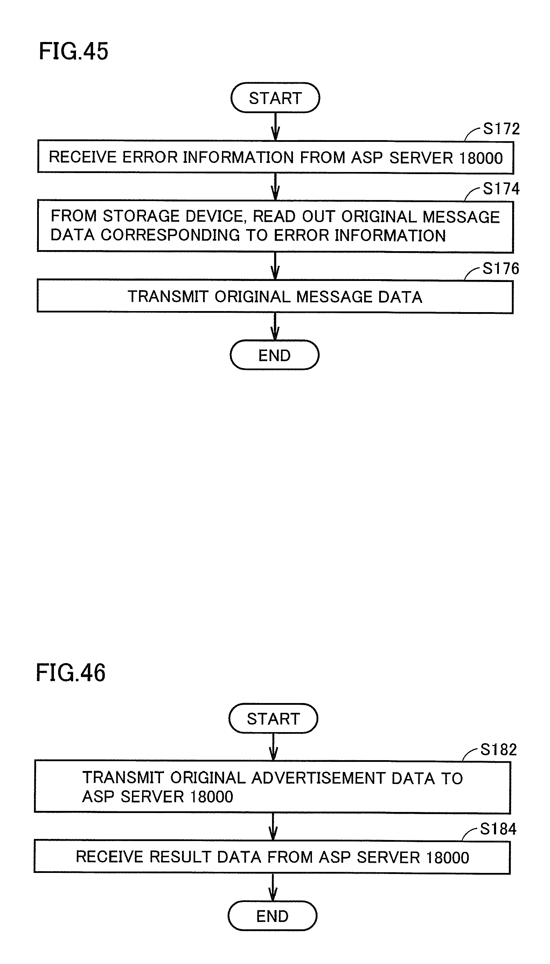

Fig. 45 is a flowchart showing a control structure in server 19000. Referring to Fig. 45, in step S 172, server 19000 receives the error information from ASP server 18000. In step S174, server 19000 reads out from storage device 19090 the original message data corresponding to the received error information. In step S 176, server 19000 transmits the readout original message data to ASP server 18000.

Control Structure in Terminal Device 17000

Fig. 46 is a flowchart showing a control structure in terminal device 17000. Referring to Fig. 46, in step S182, terminal device 17000 transmits the original advertisement data to ASP server 18000. In step S 184, terminal device 17000 receives the result data from ASP server 18000.

Summary of Second Specific Implementation

Electronic Device 3600

(1) Electronic device 3600 at least includes storage device 90, display control unit 3611, generating unit 3614, transmitting unit 3615, and receiving unit 3616. Storage device 90 stores therein the application software executable by electronic device 3600, the specifying information for specifying ASP server 18000, and the display message data indicating a message associated with an error. Based on launch of the application software, display control unit 3611 displays the operation screen of the application software on liquid crystal panel 140. Based on occurrence of an error upon executing the application software, generating unit 3614 generates a signal (hereinafter, referred to as "signal Q") including error information indicating the error. The signal is to be transmitted to ASP server 18000, which is specified by the server specifying information. Transmitting unit 3615 transmits signal Q generated by generating unit 3614 to ASP server 18000. Based on the transmission of signal Q, receiving unit 3616 receives display advertisement data indicating an advertisement, from ASP server 18000. Display control unit 3611 displays on liquid crystal panel 240 an image that is based on the display advertisement data and an image that is based on the display message data.

Thus, electronic device 3600 displays the operation screen of the application software on liquid crystal panel 140. When an error occurs upon executing the application software, display control unit 3611 displays on liquid crystal panel 240 an image that is based on the display message data indicating a message concerned with the error, and an image that is based on the display advertisement data.

Hence, when the error occurs while the user uses the application software, electronic device 3600 can display the image (help message) that is based on the display message data and the image (advertisement) that is based on the display advertisement data, on liquid crystal panel 240 different from liquid crystal panel 140 on which the operation screen of the application software is displayed.

Hence, when the user takes a look at the display screen of liquid crystal panel 240 on which the help message is displayed, he/she will also see the advertisement in addition to the help message desired by the user of electronic device 3600. As such, electronic device 3600 can display the advertisement on liquid crystal panel 240 at a timing at which an effect of the advertisement can be expected.

(2) Receiving unit 3616 receives from ASP server 18000 the image data indicating the message concerned with the error, and stores the image data in storage device 90 as the display message data.

Hence, electronic device 3600 can obtain the display message data from ASP server 18000, which is an external device. Hence, electronic device 3600 does not need to store the display message data in storage device 90 in advance before occurrence of the error.

(3) As signal Q, generating unit 3614 generates a signal including at least the identification information of liquid crystal panel 240. Transmitting unit 3615 sends signal Q including the identification information of liquid crystal panel 240, to ASP server 18000. From ASP server 18000, receiving unit 3616 receives display image data generated by ASP server 18000 based on the identification information of liquid crystal panel 240, as the display message data and the display advertisement data.

Accordingly, on liquid crystal panel 240, electronic device 3600 can display the image that is based on the display image data generated by ASP server 18000 based on the identification information of liquid crystal panel 240. Further, when generating the display image data using the device information of liquid crystal panel 240 that is based on the identification information of liquid crystal panel 240, electronic device 3600 can receive display image data having a size suitable for liquid crystal panel 240.

(4) Detecting unit 3613 detects that an input for selecting an advertisement that is based on the display advertisement data has been received. Based on the detection of the input, transmitting unit 3615 transmits to ASP server 18000 information indicating that the selection has been made and the identification information of liquid crystal panel 240. The input is, for example, an input to the panel surface (touch panel surface) of liquid crystal panel 240.

In this way, electronic device 3600 can transmit the identification information of liquid crystal panel 240 to ASP server 18000, in addition to the information indicating that the advertisement has been selected. This allows the owner of ASP server 18000 to judge an effect of the advertisement based on whether or not the identification information of liquid crystal panel 240 has been received. Since the owner of ASP server 18000 can judge the effect of the advertisement as such, the owner can pay a reward worth the effect of the advertisement, to the owner of server 19000.

ASP server 18000

(1) ASP server 18000 at least includes storage device 18090, first receiving unit 18011, first transmitting unit 18013, second receiving unit 18014, generating unit 18015, and second transmitting unit 18016. Storage device 18090 stores therein the device information of liquid crystal panel 240 and the original advertisement data indicating the advertisement. From electronic device 3600, first receiving unit 18011 receives the signal (i.e., "signal Q") including the error information indicating the error occurred upon executing the application software in electronic device 3600. First transmitting unit 18013 transmits the error information to server 19000. Based on the transmission of the error information, second receiving unit 18014 receives from server 19000 the original message data indicating the message concerned with the error. Generating unit 18015 generates the display message data from the original message data based on the device information. Further, generating unit 18015 generates the display advertisement data from the original advertisement data based on the device information. Second transmitting unit 18016 transmits the display message data and the display advertisement data to electronic device 3600.

As such, ASP server 18000 generates the display advertisement data from the original advertisement data stored in storage device 18090, based on the device information of liquid crystal panel 240 of electronic device 3600. Further, ASP server 18000 can generate the display message data from the original message data received from server 19000 based on the device information. Furthermore, ASP server 18000 can transmit the generated display advertisement data and display message data to electronic device 3600.

In this way, electronic device 3600 can display the display advertisement data and the display message data.

(2) ASP server 18000 further includes third receiving unit 18017 for receiving from terminal device 17000 the image data indicating the advertisement, and storing the received image data in storage device 18090 as the original advertisement data.

As such, ASP server 18000 uses the image data received from server 19000, as the original advertisement data.

(3) As signal Q, first receiving unit 18011 receives the signal including at least the identification information of liquid crystal panel 240. Generating unit 18015 generates the display message data from the original message data, based on the device information associated with the received identification information. Based on the device information, generating unit 18015 generates the display advertisement data from the original advertisement data.

In this way, ASP server 18000 can generate display message data and display advertisement data each having a size or the like suitable for liquid crystal panel 240 of electronic device 3600.

Server 19000

Server 19000 at least includes receiving unit 19011 and transmitting unit 19013. Receiving unit 19011 receives the error information from ASP server 18000. Transmitting unit 19013 transmits the original message data to ASP server 18000.

Accordingly, from server 19000, ASP server 18000 can receive the original message data that is based on the transmitted error information.

Terminal Device 17000

Terminal device 17000 at least includes receiving unit 17011 and transmitting unit 17012. Transmitting unit 17012 transmits the original advertisement data to ASP server 18000. Receiving unit 17011 receives the result data from ASP server 18000.

As such, ASP server 18000 can receive the original advertisement data from terminal device 17000. Terminal device 17000 can receive the result data from ASP server 18000.

Variations of Electronic Device 3600

First Variation

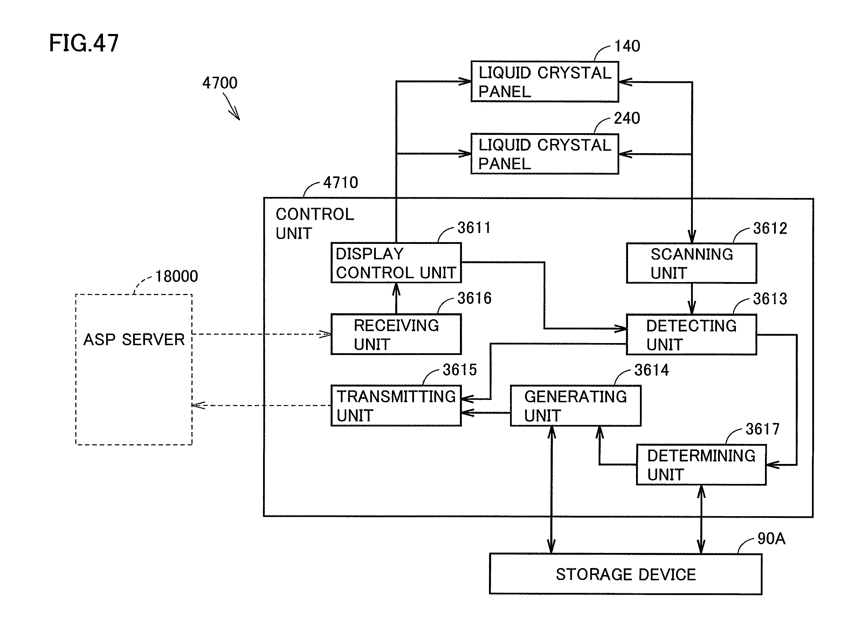

Fig. 47 shows functional blocks of an electronic device 4700, which is a variation of electronic device 3600. Electronic device 4700 transmits the user's attribute information to ASP server 18000 when an advertisement is selected. In this point, electronic device 4700 is different from electronic device 3600, which does not transmit the user's attribute information to ASP server 18000. Referring to Fig. 47, electronic device 4700 includes a control unit 4710, liquid crystal panels 140, 240, and a storage device 90A.

Storage device 90A is constituted by RAM 171 and a hard disk (not shown). In addition to the information stored in storage device 90, storage device 90A stores therein pieces of image data indicating fingerprints of users (hereinafter, referred to as "fingerprint image data") and pieces of attribute information indicating attributes of the users, in association with each other, respectively. The term "attribute information" herein refers to information indicating each user's age, sex, postal address, job, and the like. The attribute information is recorded onto storage device 90A by for example the user's input to electronic device 4700.

Control unit 4710 includes display control unit 3611, scanning unit 3612, detecting unit 3613, generating unit 3614, transmitting unit 3615, receiving unit 3616, and a determining unit 3617. Control unit 4710 is different from control unit 3610 of electronic device 3600 in that control unit 4710 includes determining unit 3617.

Determining unit 3617 receives scan data sent from scanning unit 3612. Determining unit 3617 determines whether or not fingerprint image data matching with the scan data is stored in storage device 90A. When determining unit 3617 determines that the fingerprint data matching with the scan data is stored, determining unit 3617 reads out from storage device 90A the attribute information stored in association with the fingerprint image data thus determined to match therewith. Determining unit 3617 sends the readout attribute information to generating unit 3614.

Generating unit 3614 incorporates the attribute information into the above-described signal to be transmitted to ASP server 18000. Transmitting unit 3615 transmits the signal thus including the attribute information, to ASP server 18000. As such, when it is determined that the fingerprint data matching with the scan data is stored in storage device 90A, transmitting unit 3615 transmits to ASP server 18000 the attribute information associated with the fingerprint data determined to match with the scan data.

As such, to ASP server 18000, electronic device 4700 transmits the information indicating that the advertisement has been selected, the identification information of liquid crystal panel 240, and the attribute information of the user who has selected the advertisement. Accordingly, ASP server 18000 also can obtain the attribute information of the user who has selected the advertisement. The owner of ASP server 18000 utilizes the obtained attribute information as, for example, a marketing material.

Second Variation

Display control unit 3611 and receiving unit 3616 of electronic device 3600 may be configured as follows. Display control unit 3611 has a function of enabling display on liquid crystal panel 240 when receiving a first command, and disabling the display on liquid crystal panel 240 when receiving a second command.

When receiving unit 3616 receives the display image data while display control unit 3611 disables the display on liquid crystal panel 240 due to reception of the second command, receiving unit 3616 transmits the first command to display control unit 3611. Based on the first command, display control unit 3611 displays on liquid crystal panel 240 the image that is based on the display image data.

As such, when the display image data is received from ASP server 18000 while the display function of liquid crystal panel 240 is disabled, electronic device 3600 enables the display function. Therefore, when the user has made settings to disable the display function of liquid crystal panel 240 but the display image data is received, electronic device 3600 can display the help message and the advertisement on liquid crystal panel 240. As a result, even when the display function of liquid crystal panel 240 is set to be disabled, the user can view and recognize the help message and the advertisement on liquid crystal panel 240.

Other

(1) In the description above, electronic device 3600 receives the display message data from ASP server 18000. Instead of receiving the display message data from ASP server 18000, electronic device 3600 may be configured to store the display message data in storage device 90 in advance, for example.

(2) The description above illustrates how communication system 1A operates in the case where an error occurs upon executing the application software. However, communication system 1A is not limited to such a case, and the description above is applicable to a case where an error concerned with an OS (software) occurs upon executing the OS.

(3) In the description above, ASP server 18000 transmits the display image data including the display advertisement data and the display message data, to electronic device 3600. However, ASP server 18000 may transmit the display advertisement data and the display message data separately to electronic device 3600. In this case, information associating the two files with each other may be described in one of the files or another file.

(4) The supplier manufacturer of liquid crystal panel 240 supplies various liquid crystal panels 240 of types different in specification (screen size, resolution, display color, and the like) to an assembly manufacturer that assembles electronic device 3600. Under such circumstances that various liquid crystal panels 240 different in specification are distributed in market, it can be said that the method for providing an advertisement as described in the present embodiment achieves a high advertisement effect.

(5) In the above-described embodiment, ASP server 18000 transmits the result data to terminal device 17000. In this case, based on the reception of the result data, terminal device 17000 may transmit, to ASP 18000, reward data indicating a reward price corresponding to the result data.

In such a configuration, a problem may arise as to whether or not the result data really indicates a proper result. In order to prevent occurrence of such a problem, for example, ASP server 18000 and terminal device 17000 may be implemented in one device physically. In this case, if a company selling liquid crystal panel 240 incorporates ASP server 18000 and terminal device 17000 into one piece and operates it and an advertiser requests the company to run an advertisement, the company can make a profit from the advertiser.

Further, the problem can be prevented by providing communication system 1A with a device allowing an advertiser to monitor validity of the result data.

Third Specific Implementation

Schematic Configuration of Communication System 1

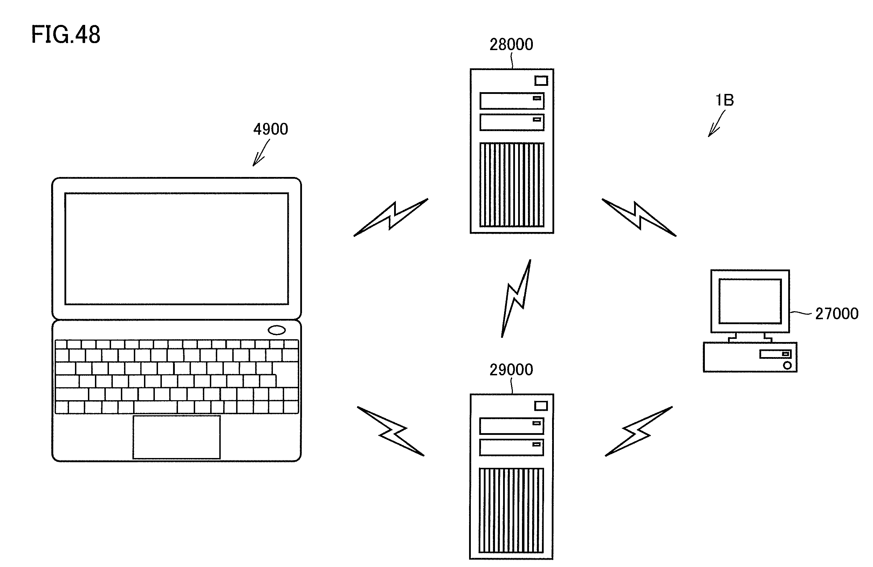

Fig. 48 shows a schematic configuration of a communication system 1B. Referring to Fig. 48, communication system 1B includes an electronic device 4900, a terminal device 27000, a server 28000, and a server 29000. In the description below, electronic device 4900 is illustrated and exemplified as a notebook type personal computer.

As with electronic device 100, electronic device 4900 includes the configurations and functions shown in Figs. 1-18. Hence, the explanation given with reference to Figs. 1-18 is not repeated here.

Server 28000 communicates with electronic device 4900, terminal device 27000, and server 29000. Server 28000 belongs to, for example, a business entity that operates a search engine used in the Internet. Server 28000 stores the search engine therein. The term "search engine" refers to a system for searching for information on the web. The search engine has information used for search, such as information available on the WWW (World Wide Web). In the description below, server 28000 is referred to as "search server 28000".

Server 29000 communicates with electronic device 4900, terminal device 27000, and search server 28000. Server 29000 is a computer owned by an application service provider (hereinafter, abbreviated to as "ASP"), and is used to provide an application service. Alternatively, server 29000 is a computer owned by a storage service provider (hereinafter, abbreviated as "SSP"), and is used to provide a storage service.

The application service and the storage service are provided by, for example, a business entity that supplies components of the electronic device to assembly manufacturers. In the present embodiment, it is assumed that the application service and the storage service are provided by a company that supplies liquid crystal panel 240 of electronic device 4900 to an assembly manufacturer. The application service and the storage service may be provided by a business entity that manufactures the components of the electronic device by itself and manufactures the electronic device using the components thus manufactured.

In the description below, server 29000 is illustrated and exemplified as a server used to provide the application service. In the description below, server 29000 is referred to as "ASP server 29000".

Hardware Configurations of Servers 28000, 29000, and Terminal Device 27000

The computer system serving as search server 28000 has the same hardware configuration as that of computer system 8100 shown in Fig. 20. Hence, no repeated explanation is given for the hardware configuration of search server 28000.

ASP server 29000 also has a hardware configuration similar to that of search server 28000, so no repeated explanation is given for the hardware configuration of ASP server 29000. Likewise, terminal device 27000 also has a hardware configuration similar to that of search server 28000, so no repeated explanation is given for the hardware configuration of terminal device 27000.

Functional Blocks of Electronic Device 4900

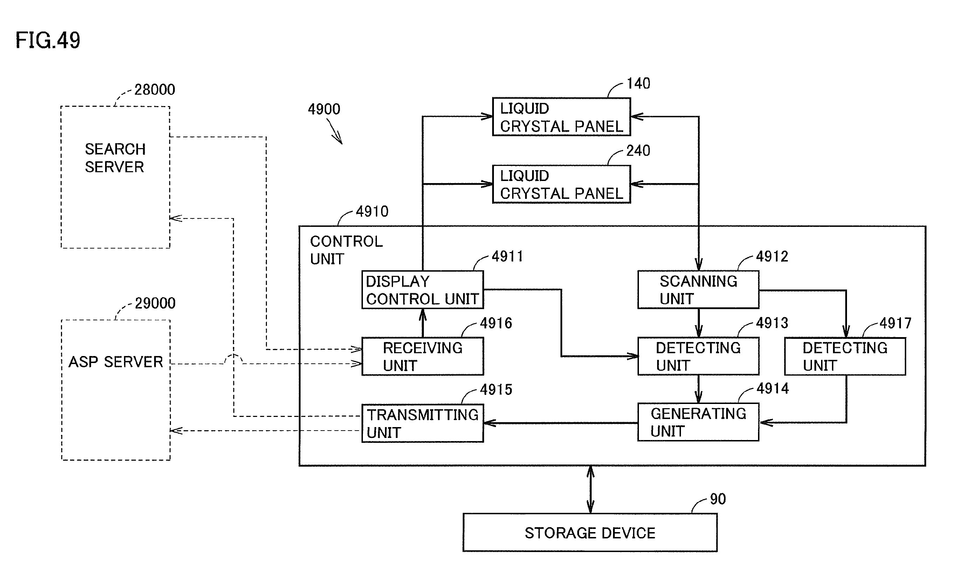

Fig. 49 shows functional blocks of electronic device 4900. Referring to Fig. 49, electronic device 4900 includes a control unit 4910, liquid crystal panels 140, 240, and a storage device 90. Control unit 4910 includes a display control unit 4911, a scanning unit 4912, a detecting unit 4913, a generating unit 4914, a transmitting unit 4915, a receiving unit 4916, and a detecting unit 4917.

Storage device 90 is constituted by a RAM 171 and a hard disk (not shown). Storage device 90 stores software therein such as a web browser used for utilization of the WWW. Further, storage device 90 stores therein information (hardware environment information) indicating a hardware environment of electronic device 4900. The hardware environment information includes information for identifying liquid crystal panel 140 (hereinafter referred to as "identification information of liquid crystal panel 140") and identification information of liquid crystal panel 240.

Display control unit 4911 displays images on display surfaces of liquid crystal panels 140, 240 based on image data stored in a VRAM (not shown) provided in storage device 90. Display control unit 4911 sends, to detecting unit 4913, location information indicating the location of the displayed image in the display surface of liquid crystal panel 140, and location information indicating the location of the displayed image in the display surface of liquid crystal panel 240.

Scanning unit 4912 scans liquid crystal panels 140, 240. Scanning unit 4912 sends the scan data to detecting unit 4913.

Transmitting unit 4915 transmits a signal (hereinafter, referred to as "request signal") to search server 28000 to request search server 28000 to transmit information for displaying a web page including an advertisement. It should be noted that in the description below, the advertisement is referred to as "first advertisement". Further, the information for displaying the web page is referred to as "web page information".

Based on the transmission of the request signal, from search server 28000, receiving unit 4916 receives the web page information, and information, associated with the first advertisement, for specifying ASP server 29000 (hereinafter, referred to as "server specifying information"). Receiving unit 4916 transmits the received web page information to display control unit 4911. Based on the web page information, display control unit 4911 displays the web page including the first advertisement, on liquid crystal panel 140.

Based on the scan data, detecting unit 4913 detects that electronic device 4900 has received an input. Alternatively, detecting unit 4913 detects that electronic device 4900 has received an input via operation key 177. For example, detecting unit 4913 detects that electronic device 4900 has received an input for selecting the first advertisement on the web page displayed on liquid crystal panel 140. The input for selecting the first advertisement is, for example, an input that is based on the user's operation input onto the screen of liquid crystal panel 140. When the input is detected, detecting unit 4913 sends a result of the detection to generating unit 4914. The "selection of the first advertisement" herein refers to, for example, a process in which the user uses a pointing device to select a display area of the first advertisement in liquid crystal panel 140.

It should be noted that electronic device 4900 may be configured to receive the input for selecting the first advertisement when a pointing location of the pointing device is positioned on the first advertisement. Specifically, electronic device 4900 may be configured to receive the input for selecting the first advertisement without the user's clicking operation.

Based on detection of the input for selecting the first advertisement, generating unit 4914 generates a signal to be transmitted to the server specified by the server specifying information. Specifically, generating unit 4914 reads out the hardware environment information from storage device 90. Thereafter, generating unit 4914 generates a signal including the hardware environment information thus read out. Generating unit 4914 transmits the generated signal to transmitting unit 4915.

Transmitting unit 4915 transmits the signal generated by generating unit 4914, to ASP server 29000 specified based on the server specifying information. The signal is transmitted to ASP server 29000 via search server 28000.

Based on the transmission of the signal, receiving unit 4916 receives from ASP server 29000 image data (hereinafter, referred to as "detailed advertisement image data") including information more detailed than the information indicated by the first advertisement. Display control unit 4911 displays on liquid crystal panel 240 a second advertisement (hereinafter, also referred to as "detailed advertisement") that is based on the detailed advertisement image data.

Detecting unit 4917 detects that an input for selecting the detailed advertisement displayed on liquid crystal panel 240 has been received. The input for selecting the detailed advertisement is, for example, an input that is based on the user's operation input to liquid crystal panel 240. When detecting such an input, detecting unit 4917 sends a result of the detection to generating unit 4914.

Based on the detection of the input for selecting the detailed advertisement, generating unit 4914 generates a signal including information indicating that the detailed advertisement has been selected and the identification information of liquid crystal panel 240. Based on the detection, transmitting unit 4915 transmits the generated signal to search server 28000.

It should be noted that the "selection of the detailed advertisement" refers to, for example, a process in which the user uses a pointing device such as liquid crystal panel 240 to select an arbitrary location or predetermined location in the display area of liquid crystal panel 240 on which the detailed advertisement is displayed. The term "predetermined location" refers to, for example, a location of the image displayed on liquid crystal panel 240 to receive the user's instruction of obtaining (for example, purchasing) a commercial product displayed as the advertisement.

Functional Blocks of Search Server 28000

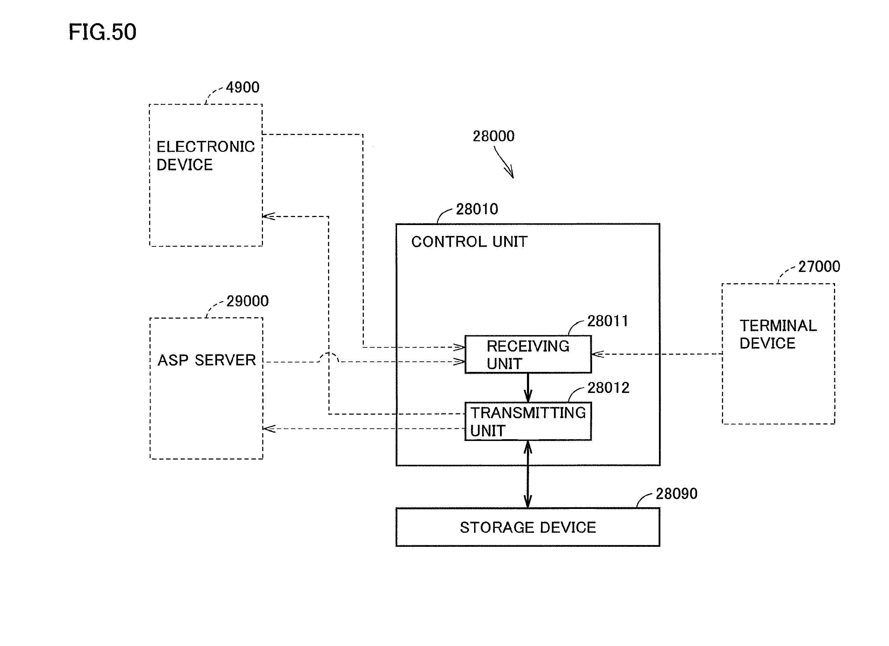

Fig. 50 shows functional blocks of search server 28000. Referring to Fig. 50, search server 28000 includes a control unit 28010 and a storage device 28090. Control unit 28010 includes a receiving unit 28011 and a transmitting unit 28012.

Storage device 28090 is constituted by RAM 8140, hard disk 8150, and the like (see Fig. 20). Storage device 28090 stores the web page information and the server specifying information therein.

Receiving unit 28011 receives the request signal from electronic device 4900. Based on the reception of the request signal from electronic device 4900, transmitting unit 28012 transmits the web page information and the server specifying information to electronic device 4900.

Based on the transmission, receiving unit 28011 receives from electronic device 4900 the signal including the hardware environment information. Transmitting unit 28012 transmits the signal including the hardware environment information, to ASP server 29000. Specifically, transmitting unit 28012 transmits the identification information of liquid crystal panel 140 of electronic device 4900 and the identification information of liquid crystal panel 240 thereof to ASP server 29000.

Based on the transmission of below-described result data from ASP server 29000 to terminal device 27000, receiving unit 28011 receives data (hereinafter, referred to as "reward data") indicating a reward price, from terminal device 27000.

Functional Blocks of Server 29000

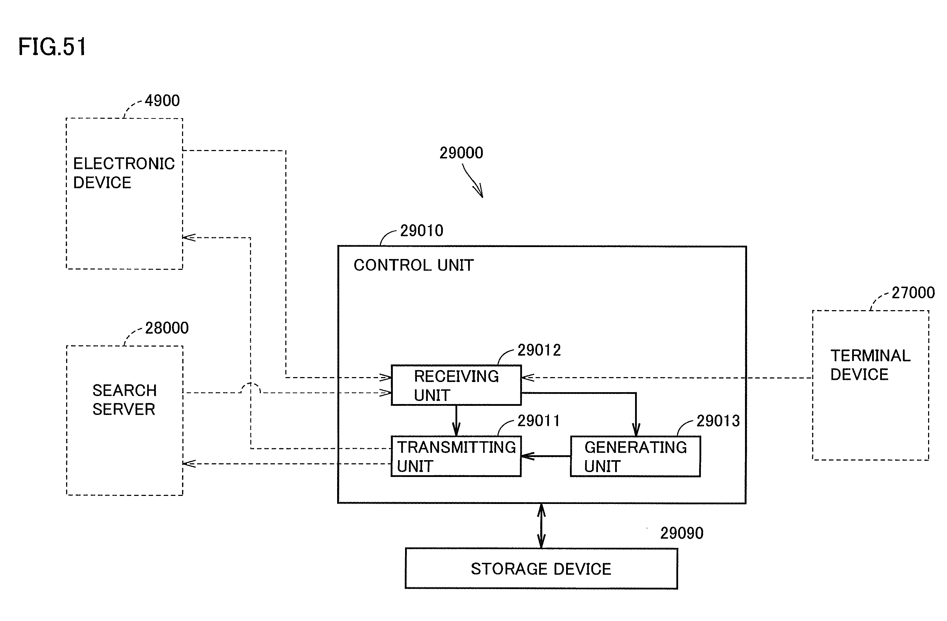

Fig. 51 shows functional blocks of ASP server 29000. Referring to Fig. 51, ASP server 29000 includes a control unit 29010 and a storage device 29090. Control unit 29010 includes a transmitting unit 29011, a receiving unit 29012, and a generating unit 29013.

Storage device 29090 is constituted by a RAM (not shown), a hard disk (not shown), and the like. Storage device 29090 stores therein pieces of device information of liquid crystal panels supplied by the business entity, in association with pieces of identification information of the liquid crystal panels, respectively. Storage device 29090 stores therein the device information of liquid crystal panel 240, which is one of the plurality of pieces of device information, in association with the identification information of liquid crystal panel 240. Further, storage device 29090 stores therein the image data indicating the first advertisement, in association with image data (hereinafter, referred to as "original detailed image data") which is associated with the image data and from which the detailed advertisement image data is generated.

Transmitting unit 29011 transmits the image data indicating the first advertisement, to search server 28000. It should be noted that search server 28000 forms the web page information using the image data.

From search server 28000, receiving unit 29012 receives the signal including the hardware environment information. Receiving unit 29012 determines whether or not the hardware environment information thus received includes the identification information of the main liquid crystal panel and the identification information of the sub liquid crystal panel. When determining that the identification information of the main liquid crystal panel and the identification information of the sub liquid crystal panel are included therein, receiving unit 29012 sends at least the identification information of the sub liquid crystal panel (liquid crystal panel 240 in the present embodiment) to generating unit 29013.

From storage device 29090, generating unit 29013 reads out the device information of liquid crystal panel 240, which is specified based on the identification information of liquid crystal panel 240. Based on the device information thus read out, generating unit 29013 generates the detailed advertisement image data from the original detailed image data associated with the image data indicating the selected first advertisement. Specifically, generating unit 29013 generates the detailed advertisement image data, which is image data that is based on the original detailed image data. Generating unit 29013 sends the detailed advertisement image data to transmitting unit 29011.

Transmitting unit 29011 transmits the detailed advertisement image data generated by generating unit 29013, to electronic device 4900. Receiving unit 29012 receives from electronic device 4900 the signal including the information indicating that the detailed advertisement has been selected and the identification information of liquid crystal panel 240. Transmitting unit 29011 transmits the result data, which indicates a result of the selection and is based on the information indicating that the detailed advertisement has been selected, to terminal device 27000.

ASP server 29000 may be configured to obtain the device information from another server not shown in the figure. In this case, the application service is provided by, for example, a business entity that deals with advertisement, rather than the company that supplies liquid crystal panel 240 of electronic device 4900 to the assembly manufacturer. The above-described another server may be owned by the company that supplies liquid crystal panel 240 to the assembly manufacturer or a company associated with the company.

Functional Blocks of Terminal Device 27000

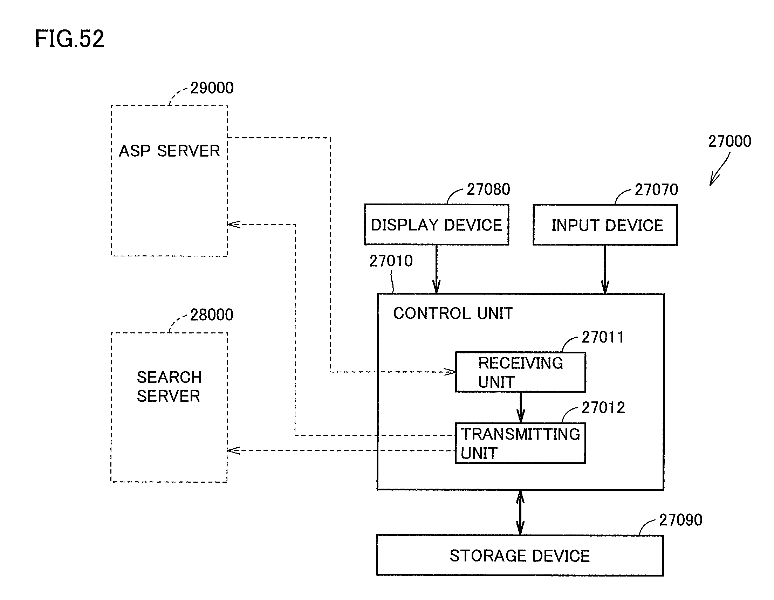

Fig. 52 shows functional blocks of terminal device 27000. Referring to Fig. 52, terminal device 27000 includes a control unit 27010, an input device 27070, a display device 27080, and a storage device 27090. Control unit 27010 includes a receiving unit 27011 and a transmitting unit 27012.

Input device 27070 is constituted by a mouse and a keyboard (see Fig. 20). Display device 27080 is a monitor (see Fig. 20). Storage device 27090 is constituted by a RAM (not shown), a hard disk (not shown), and the like.

Receiving unit 27011 receives the above-described result data from ASP server 29000. Transmitting unit 27012 transmits the reward data that is based on the result data, to search server 28000 and ASP server 29000.

Data

The hardware environment information is as shown in Fig. 24. Hence, no repeated explanation is given for the hardware environment information. It should be noted that in the present embodiment, electronic device 4900 transmits component information ID12 to ASP server 29000 as the identification information of liquid crystal panel 240.

The device information of liquid crystal panel 240 is as shown in Fig. 25. Hence, no repeated explanation is given for liquid crystal panel 240. Based on each of the pieces of information included in the device information, ASP server 29000 generates the detailed advertisement image data from the original image data.

Transition of Screen

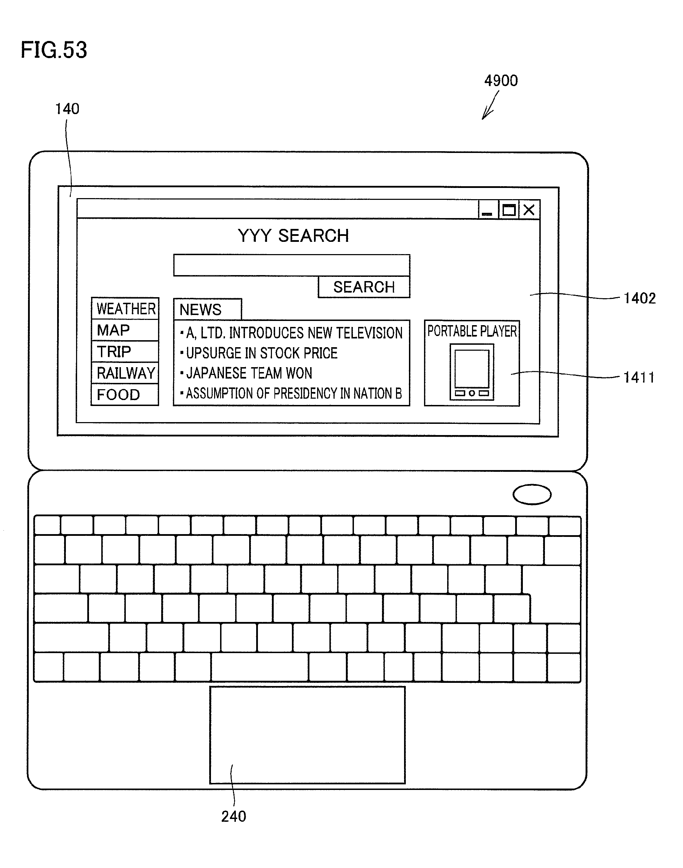

Fig. 53 shows the electronic device displaying a web page on liquid crystal panel 140. Referring to Fig. 53, electronic device 4900 displays a web page 1402 including a first advertisement 1411, on liquid crystal panel 140.

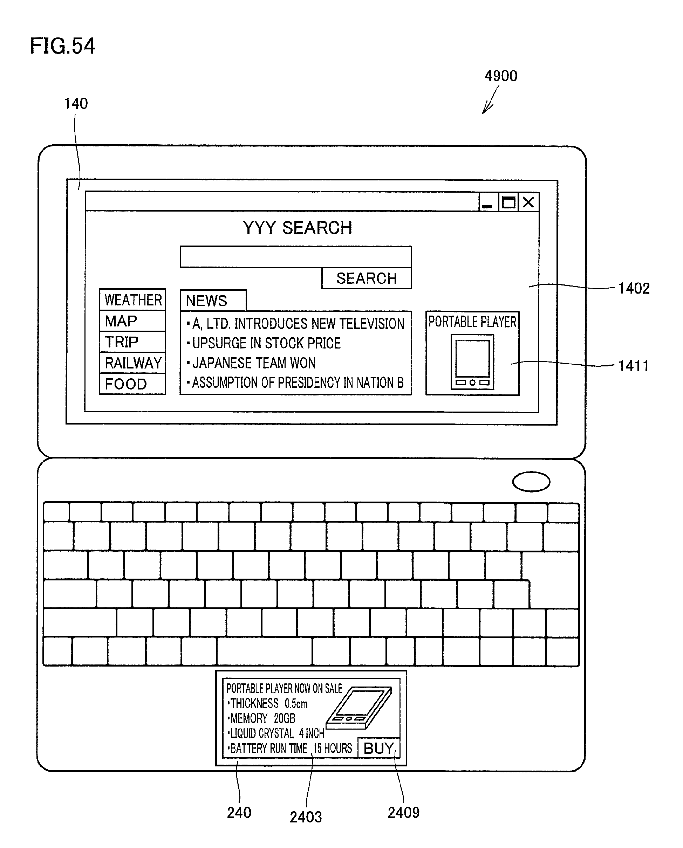

Fig. 54 shows a state after electronic device 4900 displays a detailed advertisement on liquid crystal panel 240 based on the detailed advertisement image data. Referring to Fig. 54, electronic device 4900 displays first advertisement 1411 on liquid crystal panel 140, and displays detailed advertisement 2403, which includes more detailed information than the information indicated by the first advertisement, on liquid crystal panel 240. For example, when the user operates to select an area 2409, electronic device 4900 transmits information indicating that the detailed advertisement has been selected and the identification information of liquid crystal panel 240, to ASP server 29000. In the case of Fig. 54, the "information indicating that the detailed advertisement has been selected" is information provided to ASP server 29000 to request purchase of a portable player.

Sequence in Communication System 1B

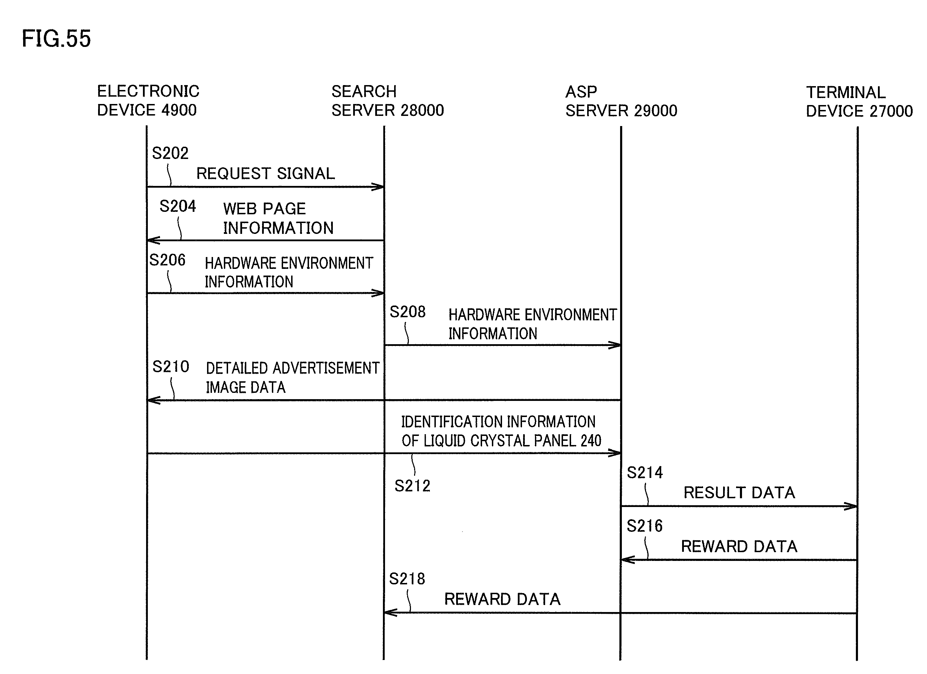

Fig. 55 shows a sequence in communication system 1B. Referring to Fig. 55, in step S202, electronic device 4900 transmits the request signal to search server 28000. In step S204, search server 28000 transmits the web page information to electronic device 4900. In step S206, electronic device 4900 transmits the signal including the hardware environment information, to search server 28000. In step S208, search server 28000 transfers the signal including the hardware environment information, to ASP server 29000.

In step S210, ASP server 29000 transmits the detailed advertisement image data to electronic device 4900. In step S212, electronic device 4900 transmits to ASP server 29000 the signal including the information indicating that the detailed advertisement has been selected and the identification information of liquid crystal panel 240. In step S214, ASP server 29000 transmits the result data to terminal device 27000. In step S216, terminal device 27000 transmits the reward data to ASP server 29000. In step S218, terminal device 27000 transmits the reward data to search server 28000.

Control Structure in Electronic Device 4900

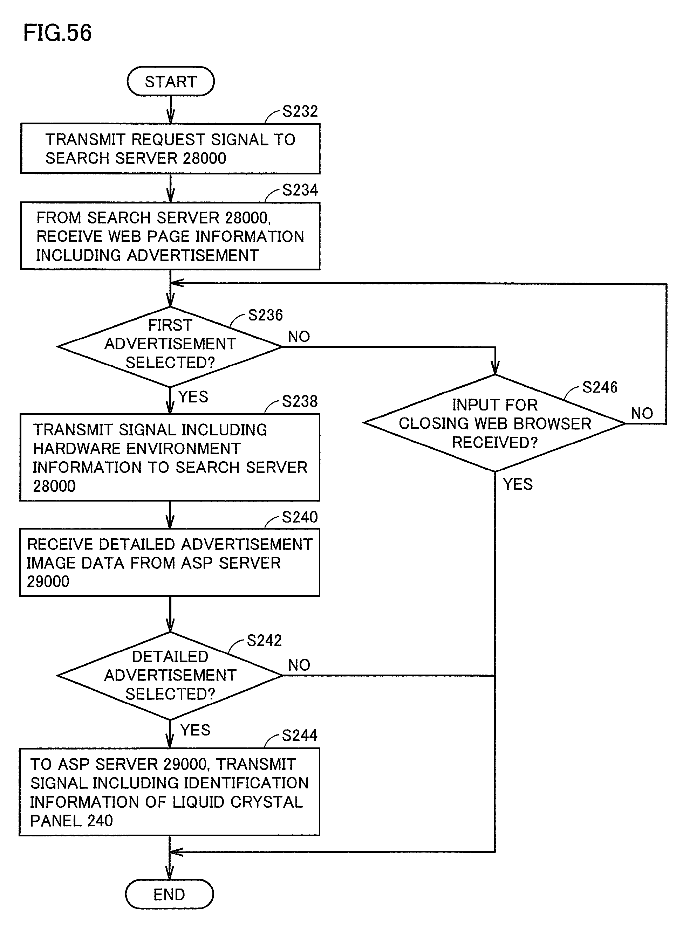

Fig. 56 shows a control structure in electronic device 4900. Referring to Fig. 56, in step S232, electronic device 4900 transmits the request signal to search server 28000. In step S234, electronic device 4900 receives the web page information from search server 28000. In step S236, electronic device 4900 determines whether or not the first advertisement displayed on liquid crystal panel 140 has been selected.

When electronic device 4900 determines that the first advertisement has been selected (YES in step S236), in step S238, electronic device 4900 transmits the signal including the hardware environment information, to search server 28000. On the other hand, when electronic device 4900 determines that the first advertisement has not been selected (NO in step S236), in step S246, electronic device 4900 determines whether or not an input for closing the web browser has been received. When electronic device 4900 determines that such an input has been received (YES in step S246), electronic device 4900 terminates the series of processes. On the other hand, when it is determined that the input has not been received (NO in step S246), the process goes back to step S236.

In step S240, electronic device 4900 receives the detailed advertisement image data from ASP server 29000. In step S242, electronic device 4900 determines whether or not the detailed advertisement has been selected. When electronic device 4900 determines that the detailed advertisement has been selected (YES in step S242), in step S244, electronic device 4900 transmits to ASP server 29000 the signal including the information indicating that the detailed advertisement has been selected and the identification information of liquid crystal panel 240. On the other hand, when electronic device 4900 determines that the detailed advertisement has not been selected (NO in step S242), electronic device 4900 terminates the series of processes.

Control Structure in Search Server 28000

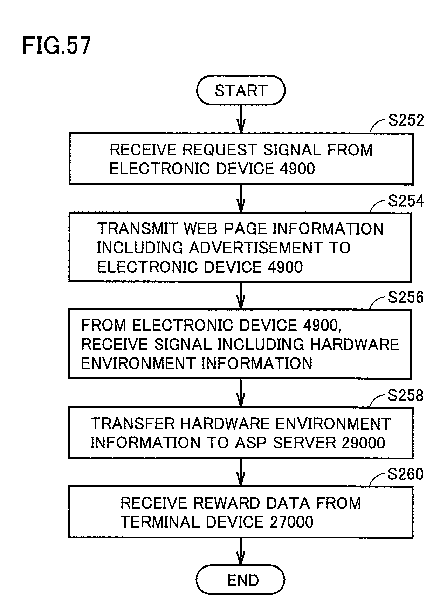

Fig. 57 shows a control structure in search server 28000. Referring to Fig. 57, in step S252, search server 28000 receives the request signal from electronic device 4900. In step S254, search server 28000 transmits the web page information corresponding to the request signal, to electronic device 4900.

In step S256, from electronic device 4900, search server 28000 receives the signal including the hardware environment information. In step S258, search server 28000 transfers the signal including the hardware environment information, to ASP server 29000. In step S260, search server 28000 receives the reward data from terminal device 27000.

Control Structure in Server 29000

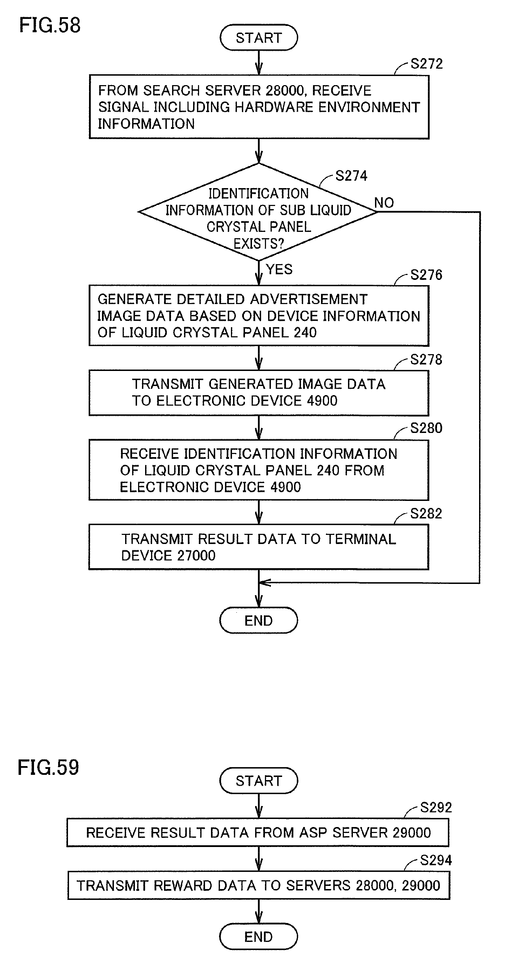

Fig. 58 shows a control structure in ASP server 29000. Referring to Fig. 58, in step S272, from search server 28000, ASP server 29000 receives the signal including the hardware environment information. In step S274, ASP server 29000 determines whether or not the identification information of the sub liquid crystal panel (liquid crystal panel 240) is included in the hardware environment information. When ASP server 29000 determines that the identification information of liquid crystal panel 240 exists therein (YES in step S274), in step S276, ASP server 29000 generates detailed advertisement image data from the original detailed image data based on the device information. In step S278, ASP server 29000 transmits the generated detailed advertisement image data to electronic device 4900. In step S280, from electronic device 4900, ASP server 29000 receives the signal including the information indicating that the detailed advertisement has been selected and the identification information of liquid crystal panel 240. In step S282, ASP server 29000 transmits the result data to terminal device 27000.

Control Structure in Terminal Device

Fig. 59 shows a control structure in terminal device 27000. Referring to Fig. 59, in step S292, terminal device 27000 receives the result data from ASP server 29000. In step S294, terminal device 27000 transmits the reward data to search server 28000 and ASP server 29000.

Summary of Third Specific Implementation

Electronic Device 4900

(1) As described above, electronic device 4900 at least includes display control unit 4911, detecting unit 4913, generating unit 4914, transmitting unit 4915, and receiving unit 4916. Transmitting unit 4915 transmits to search server 28000 the request signal for requesting transmission of the web page information (i.e., the information for displaying the web page including the first advertisement). Based on the transmission of the request signal, receiving unit 4916 receives from search server 28000 the web page information and the server specifying information associated with the first advertisement.

Based on the web page information, display control unit 4911 displays the web page including the first advertisement, on liquid crystal panel 140. Detecting unit 4913 detects that electronic device 4900 has received the input for selecting the first advertisement in the web page displayed on liquid crystal panel 140. Based on the detection, generating unit 4914 generates the signal (hereinafter, referred to as "signal Q") to be transmitted to the server specified by the server specifying information (i.e., ASP server 29000).

When the detection is done, transmitting unit 4915 transmits signal Q generated by generating unit 4914, to ASP server 29000 via search server 28000. When the detection is done, based on the transmission of signal Q, receiving unit 4916 receives from ASP server 29000 the detailed advertisement image data including more detailed information than the information provided by the first advertisement selected. Display control unit 4911 displays the detailed advertisement that is based on the detailed advertisement image data, on liquid crystal panel 240.

As such, electronic device 4900 displays the first advertisement on liquid crystal panel 140. Based on the selection of the first advertisement, electronic device 4900 displays on liquid crystal panel 240 the detailed advertisement concerned with the first advertisement. In this way, electronic device 4900 can display an advertisement desired by the user (i.e., detailed advertisement concerned with the first advertisement) on liquid crystal panel 240 different from liquid crystal panel 140.

(2) As signal Q, generating unit 4914 generates the signal including at least the identification information of liquid crystal panel 240. Transmitting unit 4915 transmits the signal including the identification information of liquid crystal panel 240, to ASP server 29000 via search server 28000. From ASP server 29000, receiving unit 4916 receives, as the detailed advertisement image data, the image data generated in ASP server 29000 based on the identification information of liquid crystal panel 240.

Accordingly, electronic device 4900 displays the detailed advertisement image data generated in APS server 29000 based on the identification information of liquid crystal panel 240, on liquid crystal panel 240 as the detailed advertisement. When the device information of liquid crystal panel 240, which is based on the identification information of liquid crystal panel 240, is used to generate the detailed advertisement image data, electronic device 4900 can receive detailed advertisement image data having a size suitable for liquid crystal panel 240.

(3) Electronic device 4900 further includes detecting unit 4917 for detecting that electronic device 4900 has received the input for selecting the detailed advertisement displayed on liquid crystal panel 240. Based on the detection of the input, generating unit 4914 generates the signal including the information indicating that the detailed advertisement has been selected and the identification information of liquid crystal panel 240. Transmitting unit 4915 transmits the generated signal to ASP server 29000. The input is, for example, an input to the panel surface (touch panel surface) of liquid crystal panel 240.

As such, electronic device 4900 can transmit not only the information indicating that the detailed advertisement has been selected, but also the identification information of liquid crystal panel 240 to ASP server 29000. Accordingly, the owner of ASP server 29000 can judge an effect of the advertisement based on whether or not the identification information of liquid crystal panel 240 is received. Further, ASP server 29000 transmits the result data to terminal device 27000, whereby terminal device 27000 can transmit the reward data indicating a reward corresponding to the result, to search server 28000 and ASP server 29000.

Search Server 28000

Search server 28000 at least includes receiving unit 28011 and transmitting unit 28012. Based on the reception of the request signal from electronic device 4900 to request transmission of the web page information, transmitting unit 28012 transmits the web page information and the server specifying information to electronic device 4900. Based on the transmission, receiving unit 28011 receives, from electronic device 4900, the signal including at least the identification information of liquid crystal panel 140 and the identification information of liquid crystal panel 240. Based on the reception, transmitting unit 28012 transmits the identification information of liquid crystal panel 140 and the identification information of liquid crystal panel 240 to ASP server 29000.

In this way, electronic device 4900 can receive the web page information and the server specifying information from search server 28000. This allows electronic device 4900 to display the web page including the first advertisement.

Further, ASP server 29000 can receive the signal including the identification information of liquid crystal panel 140 and the identification information of liquid crystal panel 240. Accordingly, ASP server 29000 can generate the detailed advertisement image data suitable for liquid crystal panel 240. Hence, electronic device 4900 can receive such detailed advertisement image data suitable for liquid crystal panel 240.

As to ASP server 29000

ASP server 29000 at least includes transmitting unit 29011, receiving unit 29012, and generating unit 29013. Receiving unit 29012 receives, from electronic device 4900 via search server 28000, the information indicating that the first advertisement has been selected in electronic device 4900, the identification information of liquid crystal panel 140, and the identification information of liquid crystal panel 240. Based on the device information of liquid crystal panel 240, which is specified by the identification information of liquid crystal panel 240, generating unit 29013 generates the detailed advertisement image data from the original image data. Transmitting unit 29011 transmits the detailed advertisement image data to electronic device 4900.

As such, ASP server 29000 can generate the detailed advertisement image data suitable for liquid crystal panel 240. Hence, electronic device 4900 can receive the detailed advertisement image data suitable for liquid crystal panel 240.

Variations of Electronic Device 4900

First Variation

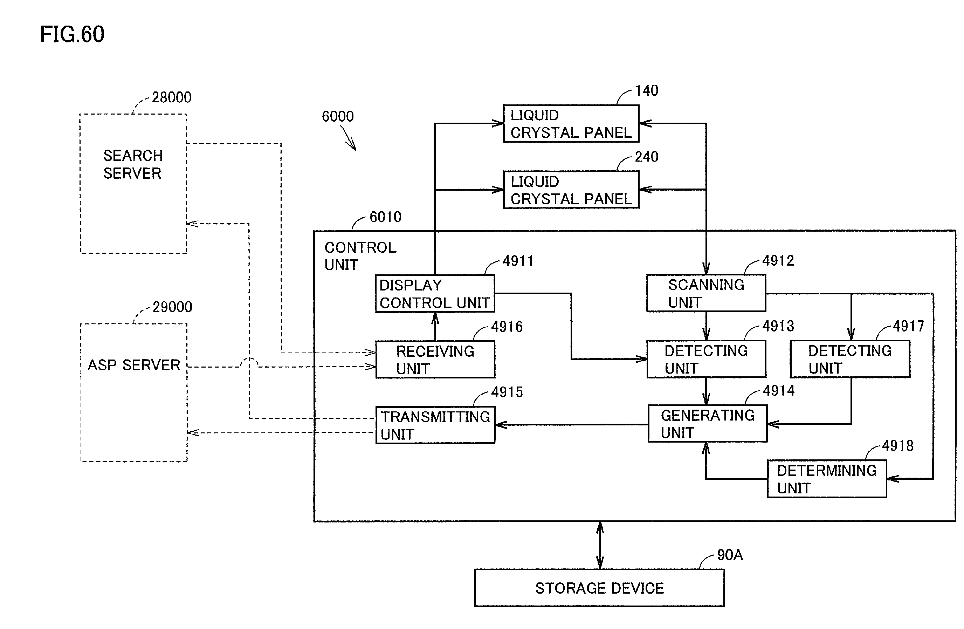

Fig. 60 shows functional blocks of an electronic device 6000, which is a variation of electronic device 4900. Referring to Fig. 60, electronic device 6000 includes a control unit 6010, liquid crystal panels 140, 240, and a storage device 90A.

Storage device 90A is constituted by RAM 171 and a hard disk (not shown). In addition to the information stored in storage device 90, storage device 90A stores therein pieces of image data indicating fingerprints of users of electronic device 6000 (hereinafter, referred to as "fingerprint image data") and attribute information indicating attributes of the users, in association with each other, respectively. The term "attribute information" herein refers to information indicating each user's age, sex, postal address, job, and the like. The attribute information is recorded onto storage device 90A by, for example, the user's input to electronic device 6000.

Control unit 6010 includes display control unit 4911, scanning unit 4912, detecting unit 4913, generating unit 4914, transmitting unit 4915, receiving unit 4916, detecting unit 4917, and a determining unit 4918. Control unit 6010 is different from control unit 4910 of electronic device 4900 in that control unit 6010 includes determining unit 4918.

Determining unit 4918 receives scan data sent from scanning unit 4912. Determining unit 4918 determines whether or not fingerprint image data matching with the scan data is stored in storage device 90A. When determining unit 4918 determines that fingerprint data matching with the scan data is stored therein, determining unit 4918 reads out from storage device 90A the attribute information stored in association with the fingerprint image data thus determined to match therewith. Determining unit 4918 sends the readout attribute information to generating unit 4914.

Generating unit 4914 incorporates the attribute information into the signal to be transmitted to search server 28000. Transmitting unit 4915 transmits the signal including the attribute information, to search server 28000. As such, when it is determined that the fingerprint data thus matching with the scan data is stored in storage device 90A, transmitting unit 4915 transmits to ASP server 29000 the attribute information associated with the fingerprint data determined to match with the scan data.

As such, electronic device 6000 transmits, to ASP server 29000, the information indicating that the detailed advertisement has been selected, the identification information of liquid crystal panel 240, and the attribute information of the user who has selected the detailed advertisement. Hence, ASP server 29000 can obtain the attribute information of the user who has selected the detailed advertisement. The owner of ASP server 29000 can utilize the obtained attribute information as, for example, a marketing material.

Second Variation

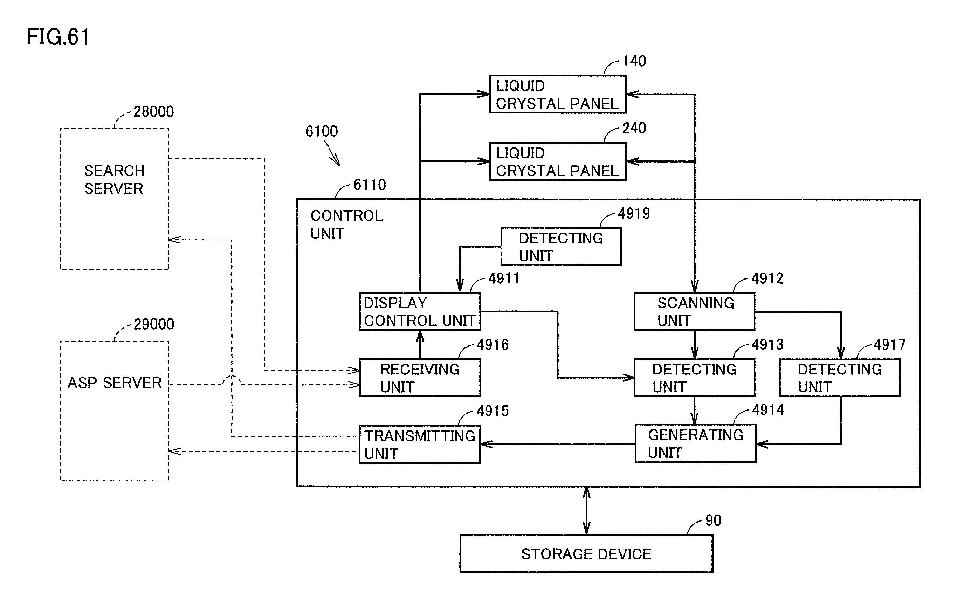

Fig. 61 shows functional blocks of an electronic device 6100, which is another variation of electronic device 4900. Referring to Fig. 61, electronic device 6100 includes a control unit 6110, liquid crystal panels 140, 240, and storage device 90. Control unit 6110 includes display control unit 4911, scanning unit 4912, detecting unit 4913, generating unit 4914, transmitting unit 4915, receiving unit 4916, detecting unit 4917, and a detecting unit 4919. Control unit 6110 is different from control unit 4910 of electronic device 4900 in that control unit 6110 includes detecting unit 4919.

Detecting unit 4919 detects that no input for operating electronic device 6100 has been received for a predetermined period of time. For example, detecting unit 4919 detects that no key operation input and no operation input to the touch panel has been received for one minute. When web page 1402 including first advertisement 1411 is displayed on liquid crystal panel 140 (see Fig. 54) and detecting unit 4919 performs the detection, display control unit 4911 displays the detailed advertisement that is based on the detailed advertisement image data, on liquid crystal panel 240.

As such, when no key operation or no input via liquid crystal panels 140, 240 has been received from the user for the predetermined period of time while web page 1402 including first advertisement 1411 is displayed on liquid crystal panel 140, electronic device 4900 displays the detailed advertisement on liquid crystal panel 240.

As such, while the user does not seem to operate electronic device 6100, electronic device 6100 can display the detailed advertisement on liquid crystal panel 240. As a result, electronic device 6100 can display an advertisement at a timing at which an effect of the advertisement is likely to be obtained.

Third Variation

Display control unit 4911 and receiving unit 4916 of electronic device 4900 may be configured as follows. Display control unit 4911 has a function of enabling display on liquid crystal panel 240 when receiving a first command, and disabling the display on liquid crystal panel 240 when receiving a second command.

When receiving unit 4916 receives the advertisement image data while display control unit 4911 disables the display on liquid crystal panel 240 due to reception of the second command, receiving unit 4916 transmits the first command to display control unit 4911. Based on the first command, display control unit 4911 displays the advertisement that is based on the detailed advertisement image data, on liquid crystal panel 240.

As such, when receiving the detailed advertisement image data from search server 28000 while the display function of liquid crystal panel 240 is disabled, electronic device 4900 enables the display function. Accordingly, when the user has made settings to disable the display function of liquid crystal panel 240 but the detailed advertisement image data is received, electronic device 4900 can display the advertisement on liquid crystal panel 240. As a result, even when the display function of liquid crystal panel 240 is set to be disabled, the user can view and recognize the detailed advertisement on liquid crystal panel 240.

Variations of Communication System 1B

First Variation

In communication system 1B, ASP server 29000 transmits the detailed advertisement image data to electronic device 4900, not via search server 28000 (see step S10 of Fig. 55). However, the present invention is not limited to such a configuration. ASP server 29000 may transmit the detailed advertisement image to data electronic device 4900 via search server 28000.

Specifically, when transmitting unit 28012 of search server 28000 transmits the signal including the hardware environment information, receiving unit 28011 of search server 28000 receives from ASP server 29000 the detailed advertisement image data generated in ASP server 29000 based on the identification information of liquid crystal panel 240. Then, transmitting unit 28012 transmits the detailed advertisement image data received by receiving unit 28011, to electronic device 4900.

With such a configuration, electronic device 4900 can also display an advertisement desired by the user (i.e., detailed advertisement associated with the first advertisement), on liquid crystal panel 240 different from liquid crystal panel 140.

Second Variation

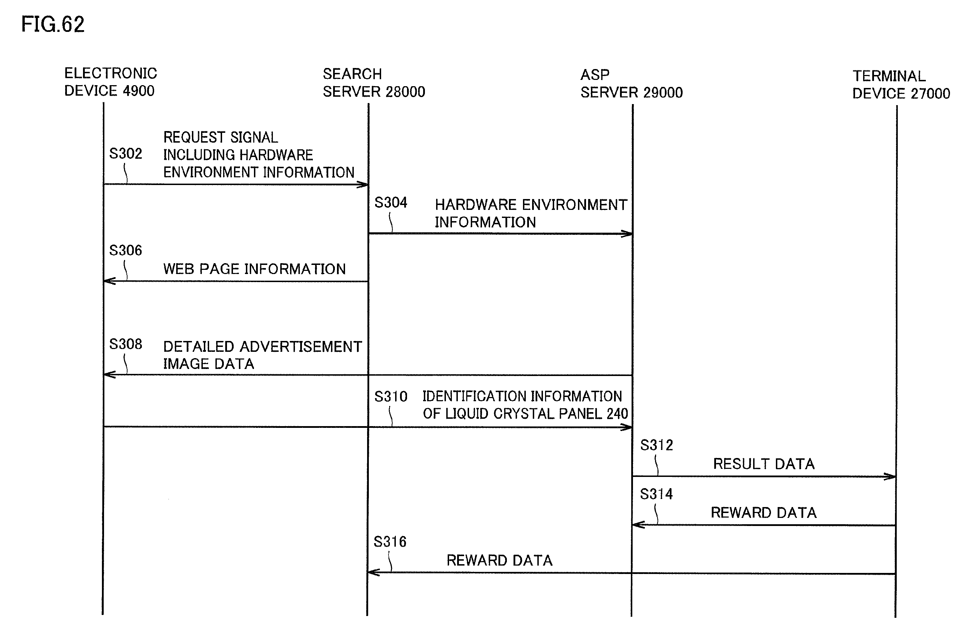

Fig. 62 shows a sequence in another variation of communication system 1B. Referring to Fig. 62, in step S302, electronic device 4900 transmits the request signal including the hardware environment information, to search server 28000. In step 5304, search server 28000 transmits the hardware environment information to ASP server 29000. In step S306, search server 28000 transmits the web page information to electronic device 4900. In step S308, ASP server 29000 sends the detailed advertisement image data to electronic device 4900.

In step S310, electronic device 4900 transmits to ASP server 29000 the signal including the information indicating that the detailed advertisement has been selected and the identification information of liquid crystal panel 240. In step S312, ASP server 29000 transmits the result data to terminal device 27000. In step S314, terminal device 27000 transmits the reward data to ASP server 29000. In step S316, terminal device 27000 transmits the reward data to search server 28000.

In the sequence diagram of Fig. 62, ASP server 29000 transmits the detailed advertisement image data to electronic device 4900, not via search server 28000. However, the present invention is not limited to this and ASP server 29000 may transmit the detailed advertisement image data to electronic device 4900 via search server 28000. In this case, search server 28000 may transmit the web page information and the detailed advertisement image data to electronic device 4900 at the same timing.

Receiving unit 4916 and display control unit 4911 of electronic device 4900 constituting such a communication system performs the following processes in addition to the processes described above. Based on the transmission of the request signal including the hardware environment information from transmitting unit 4915, receiving unit 4916 receives the detailed advertisement image data from ASP server 29000 specified based on the server specifying information. When detecting unit 4913 detects that electronic device 4900 has received an input for selecting the first advertisement displayed on liquid crystal panel 140, display control unit 4911 displays the detailed advertisement that is based on the detailed advertisement image data, on liquid crystal panel 240.

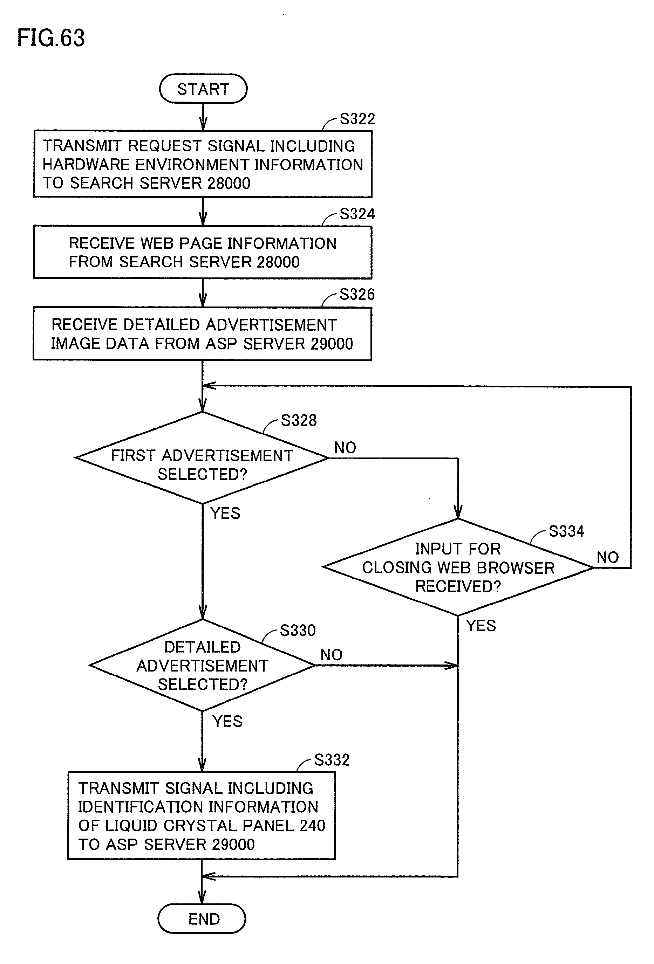

Fig. 63 shows a control structure in electronic device 4900 constituting the communication system. Referring to Fig. 63, in step S322, electronic device 4900 transmits the request signal including the hardware environment information, to search server 28000. In step S324, electronic device 4900 receives the web page information from search server 28000. In step S326, electronic device 4900 receives the detailed advertisement image data from ASP server 29000. In step S328, electronic device 4900 determines whether or not the first advertisement displayed on liquid crystal panel 140 has been selected.

When electronic device 4900 determines that the first advertisement has been selected (YES in step S328), in step S330, electronic device 4900 determines whether or not the detailed advertisement has been selected. On the other hand, when electronic device 4900 does not determine that the first advertisement has not been selected (NO in step S328), in step S334, electronic device 4900 determines whether or not an input for closing the web browser has been received. When electronic device 4900 determines that such an input has been received (YES in step S334), electronic device 4900 terminates the series of processes. On the other hand, when electronic device 4900 determines that the input has not been received (NO in step S334), the process goes back to step S328.

When electronic device 4900 determines that the detailed advertisement has been selected (YES in step S330), in step S332, electronic device 4900 transmits to ASP server 29000 the signal including the information indicating that the detailed advertisement has been selected and the identification information of liquid crystal panel 240. On the other hand, when it is not determined that the detailed advertisement has not been selected (NO in step S330), electronic device 4900 terminates the series of processes.

In such a configuration, electronic device 4900 also can display an advertisement desired by the user (i.e., detailed advertisement associated with the first advertisement), on liquid crystal panel 240 different from liquid crystal panel 140.

Other

(1) A supplier manufacturer of liquid crystal panel 240 supplies various liquid crystal panels 240 of types different in specification (screen size, resolution, display color, and the like) to an assembly manufacturer that assembles electronic device 100. Under such circumstances that various liquid crystal panels 240 different in specification are distributed in market, it can be said that the method for providing the advertisement as described in the present embodiment achieves a high advertisement effect.

(2) In the foregoing embodiment, ASP server 29000 transmits the result data to terminal device 27000. Further, terminal device 27000 sends the reward data corresponding to the result data, to ASP server 29000 and search server 28000.

In such a configuration, a problem may arise as to whether or not the result data really indicates a proper result. In order to prevent occurrence of such a problem, for example, ASP server 29000 and terminal device 27000 may be implemented in one device physically. In this case, if a company selling liquid crystal panel 240 incorporates ASP server 29000 and terminal device 27000 into one piece and operates it and an advertiser requests the company to run an advertisement, the company can make a profit from the advertiser.

Further, the problem can be prevented by providing communication system 1B with a device allowing an advertiser to monitor validity of the result data.

Fourth Specific Implementation

As to Function of Displaying Advertisement

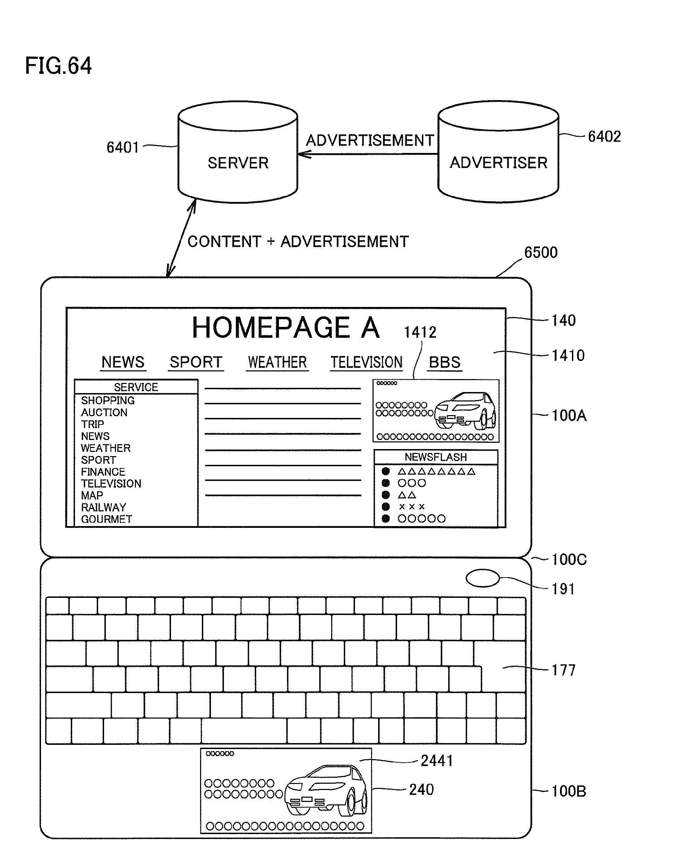

An electronic device 6500 is capable of downloading a content such as a web page from a server connected thereto via a network, and reproducing the content for viewing of the web page or the like. The following describes a system for reproducing a content by means of electronic device 6500 as such, with reference to Fig. 64.

As with electronic device 100, electronic device 6500 includes the configurations and functions shown in Figs. 1-18. Hence, the explanation given with reference to Figs. 1-18 is not repeated here.

Referring to Fig. 64, an advertiser 6402 transmits advertisement information to server 6401 on the network, and server 6401 combines the content with the advertisement information in the form of a banner. The content thus combined with the advertisement information is downloaded and reproduced by electronic device 6500. In Fig. 64, a display screen 1410 of the web page, which is a screen of the reproduced content, is displayed on liquid crystal panel 140. Display screen 1410 includes an banner advertisement 1412, which is exemplary advertisement information.

In electronic device 6500, the downloaded content is reproduced in first unit 1001. When it is determined that the content includes the advertisement information, information of the content is processed. As a result of the process, electronic device 6500 extracts the advertisement information from the content, and displays it on liquid crystal panel 240. In Fig. 64, an image 2441 corresponding to banner advertisement 1412 is displayed on liquid crystal panel 240.

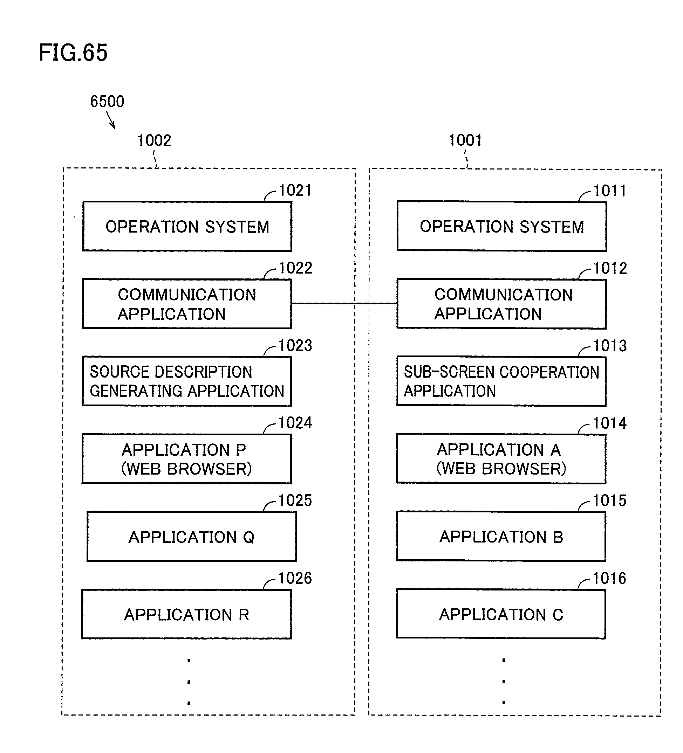

Fig. 65 schematically shows a functional configuration of electronic device 6500. Referring to Fig. 65, the functional configuration of electronic device 6500 will be described.

As described above, electronic device 6500 includes first unit 1001 and second unit 1002.

First unit 1001 includes, as its functions, an operation system 1011, a communication application 1012, and a sub-screen cooperation application 1013, as well as a plurality of applications such as a web browser 1014, applications 1015, 1016, and the like. In first unit 1001, the function of each of the applications shown in Fig. 65 is implemented by, for example, installing a program of each application to main device 101 and executing the program by CPU 110.

Second unit 1002 includes, as its functions, an operation system 1021, a communication application 1022, and a source description application 1023, as well as a plurality of applications such as web browser 1024, applications 1025, 1026, and the like. In second unit 1002, each of the applications shown in Fig. 65 is implemented by, for example, installing a program of each application to main device 104, and executing the program by CPU 210.

In electronic device 6500, by means of communication application 1012 and communication application 1022, main device 101 of first unit 1001 and main device 104 of second unit 1002 communicate with each other to exchange various types of data such as commands.

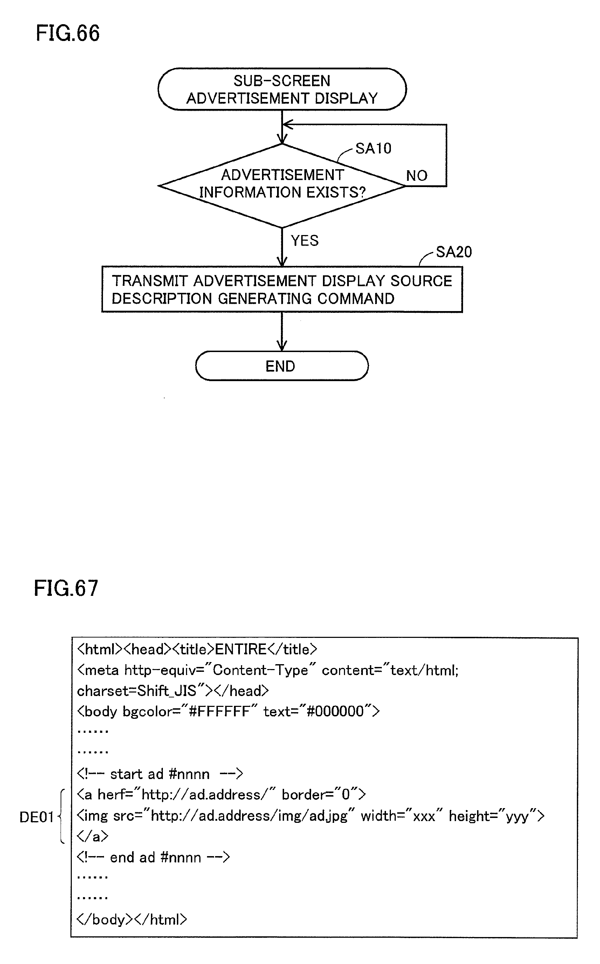

As described above, in electronic device 6500, when the advertisement information is included in the downloaded content, main device 101 performs the process (sub-screen advertisement display process) for displaying the advertisement information on liquid crystal panel 240 of second unit 1002. The following explains the sub-screen advertisement display process with reference to a flowchart of the process in Fig. 66.

Referring to Fig. 66, in step SA10 of the sub-screen advertisement display process, CPU 110 first determines whether or not the advertisement information is included in data of the content downloaded from server 6401 based on an operation to operation key 177 or the like. When it is determined that the advertisement information is included therein, the process goes to step SA20. Exemplary data of the content is an HTML (Hyper Text Markup Language) data. The content data is temporarily stored in RAM 171.

In the case where such HTML data is downloaded as the content data, CPU 110 determines whether or not the downloaded HTML data includes a tag representing the advertisement information, so as to determine whether or not the advertisement information is included therein, for example.

More specifically, CPU 110 determines whether or not the downloaded data has a portion interposed between *<!-- start ad #nnnn -->* and *<!-- end ad #nnnn -->*. The tag *<!-- start ad #nnnn -->* is an exemplary start tag for advertisement and the tag *<!-end ad #nnnn -->* is an exemplary end tag therefor. Specific descriptions for the tags for advertisement are not limited to these, and may be any descriptions as long as they are common between server 6401 and electronic device 6500 shown in Fig. 64.

It should be noted that in the present embodiment, the advertisement information does not necessarily need to be interposed between the tags for advertisement as long as the advertisement information is stored in the HTML data in an extractable manner. The advertisement information in the HTML data may be stored in a different existing manner as long as the advertisement information can be recognized. For example, an existing (standardized) image tag or applet tag includes a description designating an image, a moving image, or the like that is an advertisement content and the name of a file of the image, the moving image, or the like includes a description complying with a predetermined rule so that it can be recognized as the advertisement information. In this case, CPU 110 analyzes the description of the HTML, data to determine whether or not the description complying with the rule is included in the name of the file designated by the image tag or applet tag. In accordance with the determination, CPU 110 can determine whether or not the advertisement information is included in the HTML, data.

Fig. 67 shows exemplary HTML data downloaded by CPU 110. The HTML data shown in Fig. 67 includes a start tag and an end tag for advertisement, and a description interposed therebetween as indicated by a description DE01.

When the HTML data shown in Fig. 67 is downloaded by CPU 110, CPU 110 determines that the downloaded data includes advertisement information, and the process goes to step SA20.

In step SA20, CPU 110 transmits an advertisement display source description generating command to second unit 1002, and terminates the process.

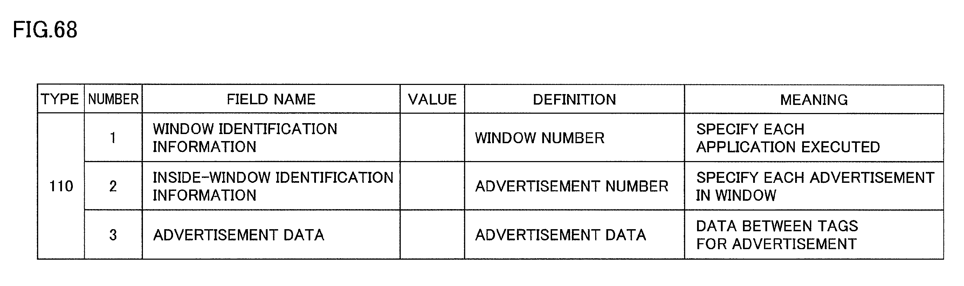

The term "advertisement display source description generating command" refers to a command for generating a description for displaying on liquid crystal panel 240 the advertisement information included in the downloaded HTML data. Fig. 68 schematically shows the advertisement display source description generating command (type "110").

Referring to Fig. 68, the advertisement display source description generating command has the following three fields: "window identification information", "inside-window identification information", and "advertisement data".

The window identification information is information for specifying each application (one or more applications) executed in main device 101.

The inside-window identification information is information for specifying one or more advertisements to be displayed for each application.

The advertisement data is specific data for displaying each advertisement.

The advertisement data is data interposed between the start tag and the end tag for advertisement.

When CPU 110 receives the HTML data shown in Fig. 67 from server 6401, the following description is included in the advertisement display source description generating command:

> *<a herf= "http://ad.address/" border= "0">*
> *<img src= "http://adaddress/img/ad.jpg "width= "xxx" height="yyy">*
> *</a>*

To transmit the advertisement display source description generating command to second unit 1002, CPU 110 writes a type ("110") of the command, a destination of transmission of the command, and the like in header DA01 (see Fig. 7). CPU 110 writes in first field DA02 a value of the window identification information as information for specifying a target application.

CPU 110 writes a value of the inside-window identification information in second field DA03, as information for specifying a target banner advertisement in a display window of the target application.

CPU 110 writes data of the advertisement data in third field DA04, as data for displaying the target banner advertisement.

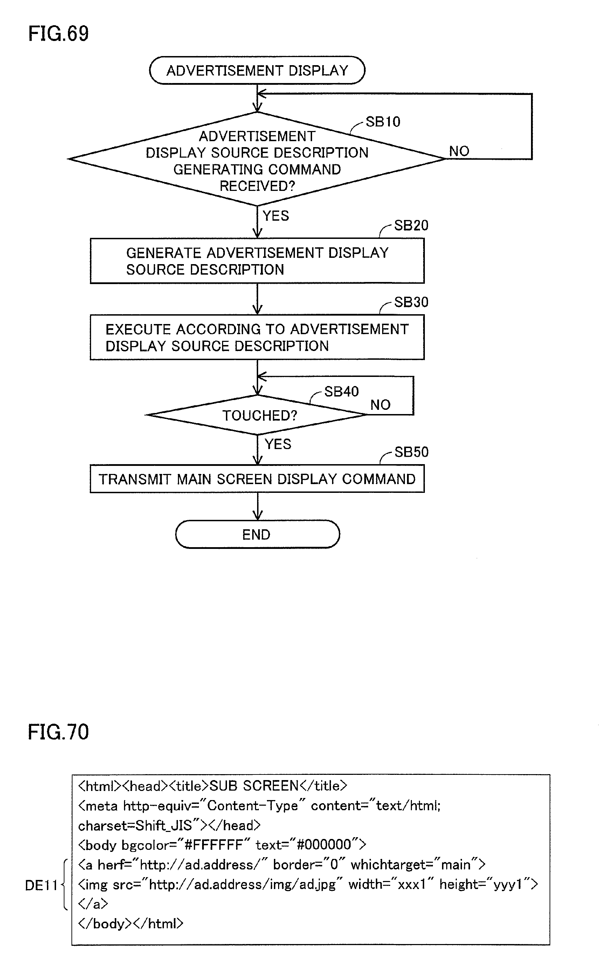

Fig. 69 is a flowchart of the advertisement display process, which is performed in second unit 1002 that receives the advertisement display source description generating command.

Referring to Fig. 69, in step SB10 of the advertisement display process, CPU 210 first determines whether or not the advertisement display source description generating command has been received from first unit 1001. When CPU 210 determines that it has been received, the process goes to step SB20.

In step SB20, CPU 210 uses the received advertisement display source description generating command to generate the advertisement display source description, and the process goes to step SB30.

Fig. 70 shows one exemplary advertisement display source description generated in step SB20.

The description shown in Fig. 70 has the portion indicated as description DIE11. The portion is obtained by receiving the data from first unit 1001 as the advertisement data, processing it, and incorporating it into the description.

Now, description DE01 of Fig. 67 and description DE11 of Fig. 70 are compared. The portion in description DE01 of Fig. 67 *"width="xxx" height='yyy"*, which indicates the size of the banner advertisement, is replaced with a portion *"width="xxxl" height="yyyl"* in description DE11 of Fig. 70. The width *xxx1* and the height *yyy1* correspond to the dimension of the display area of liquid crystal panel 240. Specifically, in step SB20, CPU 210 changes (modifies) the description concerned with the display size of the banner advertisement, to change the size of the banner advertisement displayed on liquid crystal panel 140 so as to correspond to the dimension of the display area of liquid crystal panel 240.

It should be noted that the display size may be changed as follows. That is, CPU 210 changes the aspect ratio of the banner advertisement so that an image corresponding to the banner advertisement is displayed in the entire display area of the liquid crystal panel 240. Alternatively, CPU 210 may change the display size so that the image of the banner advertisement is displayed in the display area of liquid crystal panel 240 as large as possible while maintaining the aspect ratio thereof.

Comparing description DE11 of Fig. 70 with description DE01 of Fig. 67, a description *whichtarget="main"* is added in description DE11 of Fig. 70.

The description indicates that a linked page (portion corresponding to *http://ad.address/* described after *a herf=*) is to be displayed on liquid crystal panel 140 (main screen) of first unit 1001.

This description added in step SB20 allows the linked page to be displayed on liquid crystal panel 140 when a touch operation is performed onto liquid crystal panel 240 while liquid crystal panel 240 (sub screen) displays in accordance with the advertisement display source description, as described later.

After generating the advertisement display source description in step SB20, in step SB30, CPU 210 executes according to the advertisement display source description generated in step SB20 just before step SB30. Then, the process goes to step SB40.

In this way, in step SB30, the entire description shown in Fig. 70 is executed, thus displaying image 2441 on liquid crystal panel 240.

Referring to Fig. 64, image 2441 is an image obtained by enlarging the image of banner advertisement 1412 on liquid crystal panel 140 in accordance with the dimension of the display area of liquid crystal panel 240. The respective aspect ratios of banner advertisement 1412 and image 2441 are different because description DE11 has the data concerned with the display size of the image and modified from that in description DE01 as described above.

After the process in step SB30, CPU 210 determines whether or not a touch operation is performed onto liquid crystal panel 240. When it is determined that the touch operation is performed, the process goes to step SB50.

In step SB50, CPU 210 generates a main screen display command, transmits it to first unit 1001, and terminates the process.

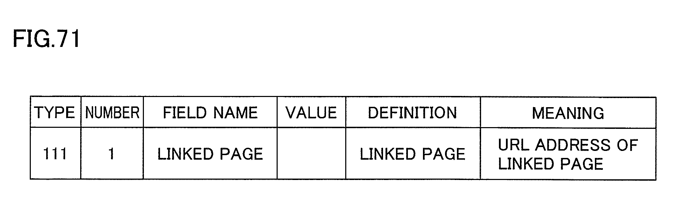

Fig. 71 schematically shows a format of the main screen display command.

Referring to Fig. 71, the main screen display command is a command of type "111". The main screen display command includes the URL (Uniform Resource Locator) address of the linked page (*http://ad.address/* in description DE11 of Fig. 70) in the advertisement display source description so as to request to display the linked page on liquid crystal panel 140 of first unit 1001. As such, the main screen display command is to instruct first unit 1001 to display the linked page of the URL address on liquid crystal panel 140.

When the main screen display command is received, first unit 1001 accesses the URL address of the linked page in the command to display the page retained in the address on liquid crystal panel 140.

As described above, the sub-screen advertisement display process described mainly with reference to Fig. 66 is implemented mainly by sub-screen cooperation application 1013 of first unit 1001. When web browser 1014 is launched, sub-screen cooperation application 1013 is launched together. Alternatively, sub-screen cooperation application 1013 is resident in first unit 1001 as with operation system 1011.

Further, the advertisement display process described mainly with reference to Fig. 69 is implemented mainly by source description application 1023. Source description application 1023 may be resident in second unit 1002, or may be configured to be launched by operation system 1021 based on the reception of the advertisement display source description generating command from the first unit.

With these processes being performed, the banner advertisement, which is included in the viewing screen of the web browser and is supposed to be displayed on liquid crystal panel 140 while executing the web browser, is also displayed on liquid crystal panel 240 in electronic device 6500 of the present embodiment.

First Variation of Function of Displaying Advertisement

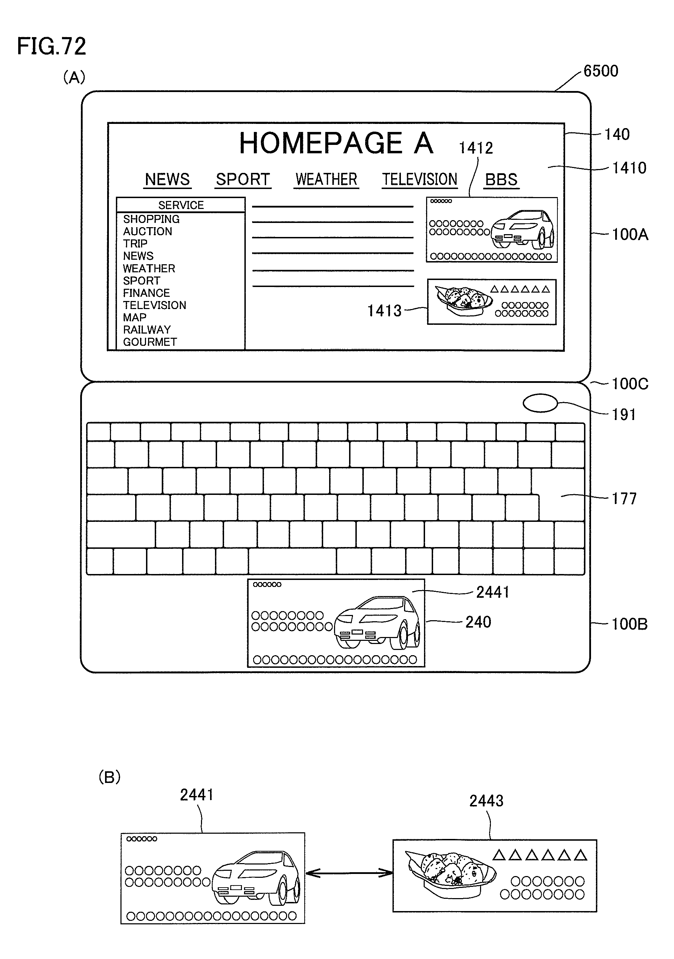

The function concerned with the advertisement illustrated with reference to Fig. 64 and the like allows one banner advertisement 1412 to be displayed in the web page on liquid crystal panel 140. However, when there are a plurality of banner advertisements such as banner advertisement 1412 and a banner advertisement 1413 on liquid crystal panel 140 as shown in Fig. 72(A), advertisement display source description generating commands are generated for the banner advertisements respectively in first unit 1001.

In this case, in the advertisement display process performed in second unit 1002, advertisement display source descriptions are respectively generated for the banner advertisements, and these descriptions are executed alternately for every fixed period of time.

In this way, in liquid crystal panel 240, as shown in Fig. 72 (B), image 2441 corresponding to banner advertisement 1412 and image 2443 corresponding to banner advertisement 1413 are displayed alternately for every fixed period of time.

When a touch operation is performed onto liquid crystal panel 240 while image 2441 is being displayed, second unit 1002 transmits to first unit 1001 a command (main screen display command) for displaying the linked page of banner advertisement 1412 corresponding to image 2441. On the other hand, when a touch operation is performed onto liquid crystal panel 240 while image 2443 is being displayed, second unit 1002 transmits to first unit 1001 a command (main screen display command) for instructing to access the linked page of banner advertisement 1413 corresponding to image 2443.

Second Variation of Function of Displaying Advertisement

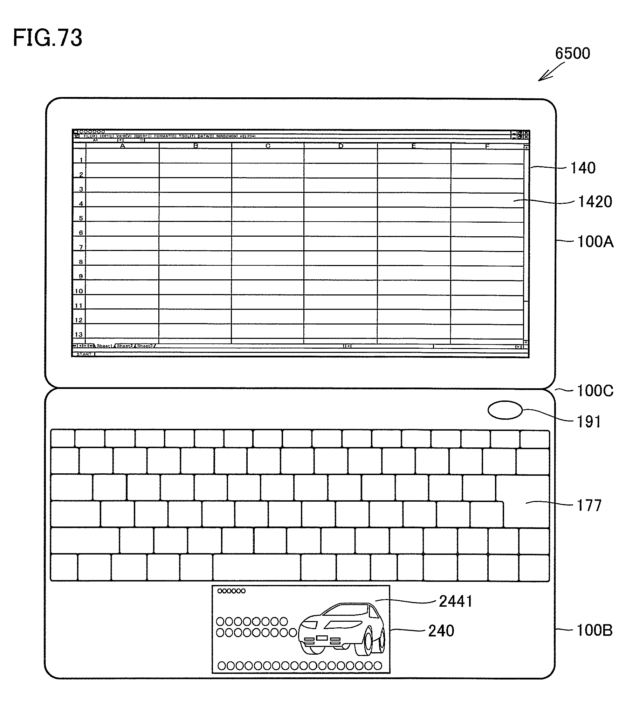

Fig. 73 shows that a spreadsheet application is executed in electronic device 6500 and a display screen 1420 of the spreadsheet application is displayed on liquid crystal panel 140.

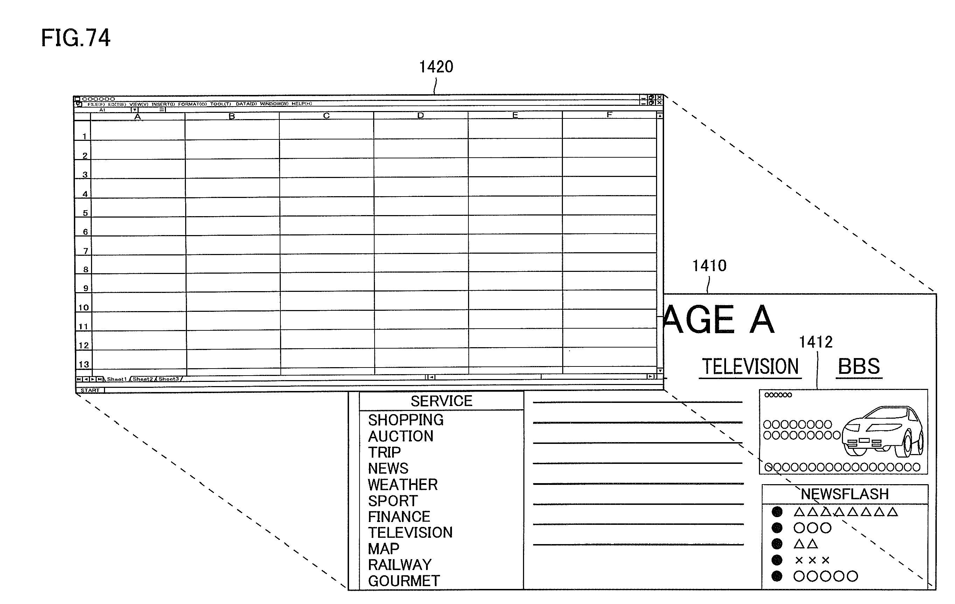

Here, in first unit 1001, it is assumed that the spreadsheet application and the web browser are executed but only the spreadsheet application is in an active state. In other words, a display screen 1410 of the web browser is in the background on display screen 1420 and is therefore unseen on liquid crystal panel 140 as schematically shown in Fig. 74.

In electronic device 6500, banner advertisement 1412 is in the viewing screen of the web browser executed, but the display screen of the other application lies over the viewing screen thereof. When it is detected that the page including the banner advertisement is not displayed as such, first unit 1001 transmits to second unit 1002 the advertisement display source description generating command described with reference to Fig. 66. In this way, image 2441 corresponding to banner advertisement 1412 is displayed on liquid crystal panel 240.

In first unit 1001, sub-screen cooperation application 1013 detects that the page including the banner advertisement is not displayed, by calling up an API (Application Program Interface) of operation system 1011 to obtain information concerned with the windows displayed on liquid crystal panel 140, for example. More specifically, sub-screen cooperation application 1013 detects so when all the following conditions i)-iii) are satisfied in the information obtained from the API: i) web browser 1014 is being executed; ii) an application other than web browser 1014 is being executed and is in an active state; and iii) the window (display screen) of the application other than web browser 1014 is fully displayed on liquid crystal panel 140.

Third Variation of Function of Displaying Advertisement

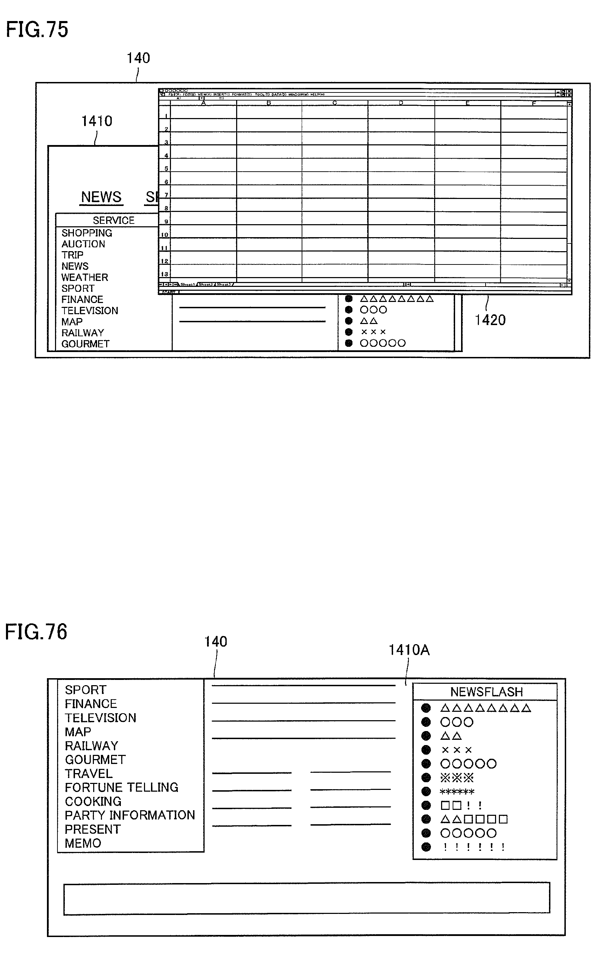

Fig. 75 shows one exemplary display screen of liquid crystal panel 140. Fig. 75 shows that the spreadsheet application and the web browser are launched in electronic device 6500 and display screen 1420 of the spreadsheet application and display screen 1410 of the web browser are displayed on liquid crystal panel 140. It is assumed that in first unit 1001, only the spreadsheet application is in an active state.

In liquid crystal panel 140 of Fig. 75, display screen 1420 of the spreadsheet application is displayed to partially overlap with display screen 1410 of the web browser. It should be noted that banner advertisement 1412 is unseen in display screen 1410 at the portion with which display screen 1420 overlaps as shown in Fig. 72(A).

In electronic device 6500, banner advertisement 1412 is in the viewing screen of the web browser executed, but the screen of the other application is displayed over the location in which the banner advertisement 1412 in the viewing screen should be displayed. When it is detected that banner advertisement 1412 is displayed but unseen from the user as such, first unit 1001 transmits to second unit 1002 the advertisement display source description generating command explained with reference to Fig. 66. In this way, image 2441 corresponding to banner advertisement 1412 can be displayed on liquid crystal panel 240.

In first unit 1001, sub-screen cooperation application 1013 detects that banner advertisement 1412 is displayed but unseen from the user, by calling up the API of operation system 1011 to obtain information concerned with the windows displayed on liquid crystal panel 140, for example.

Specifically, based on the information obtained from the API, sub-screen cooperation application 1013 detects so in the following procedures a)-f):

a) The display location of the window (display screen 1410) of web browser 1014 on liquid crystal panel 140 is identified.

b) A page description is received and obtained whenever the web browser take a page obtaining action, thereby obtaining a source description of a web page to be displayed by the web browser. Then, a rendering engine used by the web browser is called up for an operation of generating an image of the web page. Then, in the generated image of the web page, the coordinates corresponding to a portion interposed between tags for advertisement are identified.

c) From the information obtained from the API, relative locations (for example, coordinates of four corners) in an area currently displayed in display screen 1410 by the web browser are identified in the entire web page (virtual web page).

d) The coordinates corresponding to the portion interposed between the tags for advertisement and identified in b) and the relative locations identified in c) are used to obtain information of coordinates of banner advertisement 1412 in display screen 1420.

e) Based on the results obtained in a) and d), there is obtained information of coordinates in which the advertisement information is to be displayed in liquid crystal panel 140 (information of coordinates in which banner advertisement 1412 should have been displayed if display screen 1420 did not overlap with display screen 1410 of Fig. 75).

f) From the information obtained from the API, the display location of the display screen (display screen 1420) of the executed application other than web browser 1014 in first unit 1001 is identified in liquid crystal panel 140.

g) From the results in e) and f), sub-screen cooperation application 1013 determines whether or not banner advertisement 1412 in display screen 1410 of the web browser is unseen by the other display screen 1420.

Fourth Variation of Function of Displaying Advertisement

Fig. 76 shows one exemplary display screen of liquid crystal panel 140. Fig. 76 shows that the spreadsheet application and the web browser are launched and a display screen 1410A of the web browser is displayed on liquid crystal panel 140 in electronic device 6500.

Display screen 1410A of Fig. 76 is the display screen of the same web page as that for display screen 1410 of Fig. 72 (A) and the like, but is different therefrom in that a displayed portion of the entire web page is different.

When operation key 177 is operated during execution of web browser 1014 to scroll display screen 1410 displayed on liquid crystal panel 140, the viewing screen of web browser 1014 on liquid crystal panel 140 is changed from display screen 1410 to display screen 1410A. Due to such a change in display, banner advertisement 1412 having been displayed in display screen 1410 on liquid crystal panel 140 is not displayed any more in display screen 1410A on liquid crystal panel 140.

In first unit 1001, even when it is detected that banner advertisement 1412 in the web page displayed is not actually displayed on liquid crystal panel 140, the advertisement display source description generating command explained with reference to Fig. 66 is transmitted to second unit 1002. In this way, first unit 1001 can display image 2441 corresponding to banner advertisement 1412, on liquid crystal panel 240.

Sub-screen cooperation application 1013 detects that banner advertisement 1412 in the web page displayed is not actually displayed on liquid crystal panel 140, by calling up the API of operation system 1011 to obtain information concerned with the windows displayed on liquid crystal panel 140.

Specifically, sub-screen cooperation application 1013 detects so, as follows. The above-described procedures a)-d) are performed based on the information obtained from the API, and it is determined, based on the results obtained in a) and d), whether or not the image corresponding to the portion interposed between the tags for advertisement is in display screen 1410.

Fifth Variation of Function of Displaying Advertisement

When first unit 1001 in electronic device 6500 is provided with a pointing device such as a mouse as an input device and the pointing location of the pointing device is positioned over banner advertisement 1412 displayed on liquid crystal panel 140, the advertisement display source description generating command explained with reference to Fig. 66 is transmitted to second unit 1002. In this way, electronic device 6500 can display image 2441 corresponding to banner advertisement 1412, on liquid crystal panel 240.

Sub-screen cooperation application 1013 detects that the pointing location thereof is positioned over banner advertisement 1412, by calling up an API of operation system 1011 to obtain information concerned with the windows displayed on liquid crystal panel 140.

Specifically, sub-screen cooperation application 1013 detects so, as follows. Based on the information obtained from the API, the above-described procedures a)-e) are performed to identify the display location (coordinates) of banner advertisement 1412 on liquid crystal panel 140. Using the API, sub-screen cooperation application 1013 identifies the pointing location of the pointing device and determines whether or not the pointing location thereof coincides with the display location of banner advertisement 1412.

Sixth Variation of Function of Displaying Advertisement

In the present embodiment described above, when the tags for advertisement (the start tag and the end tag) are included in the web page viewed using the web browser executed in first unit 1001 of electronic device 6500, the image (image 2441) corresponding to the image (banner advertisement 1412) that should be displayed as indicated by the tags for advertisement is displayed on liquid crystal panel 240.

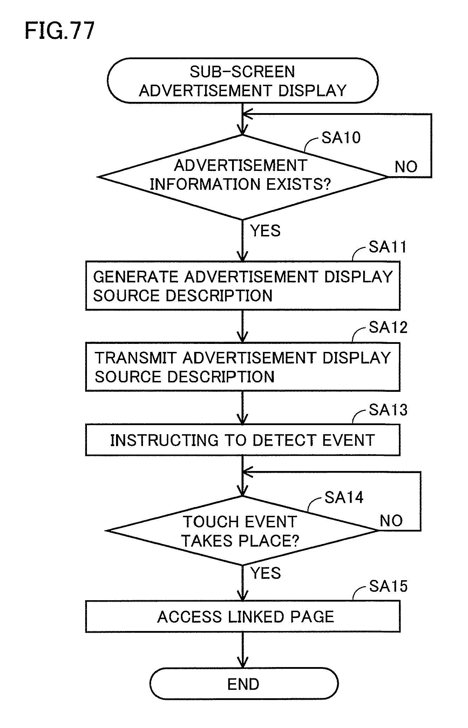

In the case where image 2441 is displayed on liquid crystal panel 240 in this way, in first unit 1001, CPU 110 may prepare the advertisement display source description (see Fig. 70), may transmit the prepared description to second unit 1002, and may instruct second unit 1002 to detect occurrence of an event of performing a touch operation onto liquid crystal panel 240, as shown in Fig. 77.

Fig. 77 is a flowchart of a sub-screen advertisement display process performed by CPU 110 in such a variation.

Referring to Fig. 77, CPU 110 determines in step SA10 whether or not the web page includes advertisement information. When the advertisement information is included therein, in step SA11, CPU 110 generates an advertisement display source description in the same way as CPU 210 in step SB20, and transmits the generated description to second unit 1002 in step SA12.

Further, in step SA13, CPU 110 transmits to second unit 1002 information for instructing second unit 1002 to detect whether or not a touch operation is performed onto liquid crystal panel 240. In this way, when a touch operation is performed onto liquid crystal panel 240 while image 2441 is being displayed on liquid crystal panel 240 in second unit 1002, first unit 1001 is notified of the occurrence of this event.

In step SA14, CPU 110 waits for such a notification. When the notification is received, CPU 110 brings the process from step SA14 to step SA15.

In step SA15, the linked page's address described in the advertisement display source description is accessed.

Variation of Configuration of Electronic Device

In the present embodiment described above, display device 103 including liquid crystal panel 240 may be provided in electronic device 6500 or may be configured to be detachable from the electronic device.

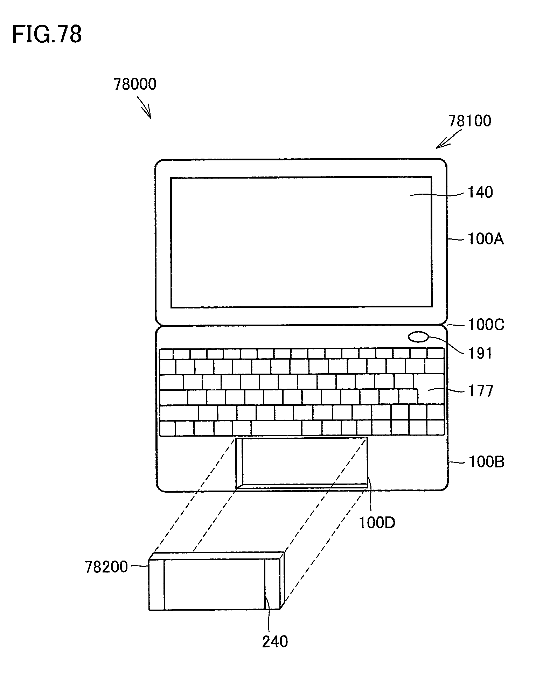

Fig. 78 shows an information process system 78000 including an information processing terminal 78200 at least including the configuration of second unit 1002 of electronic device 6500 of Fig. 2; and an electronic device 78100 including the configuration of display device 102 thereof.

Information processing terminal 78200 is configured to be engaged with, for example, a recess 100D provided in electronic device 78100.

In Recess 100D, USB connector 194 is provided. Information processing terminal 78200 is engaged with recess 100D, thereby connecting USB connector 294 to USB connector 194. Through the connection, information processing terminal 78200 may be supplied with power from electronic device 78100.

Further, information processing terminal 78200 may include a power source such as a power storage battery for supplying power to each component therein.

Information processing terminal 78200 can have various functions such as a verbal communication function.

It should be considered that the embodiments disclosed herein are illustrative and non-restrictive in any respect. The scope of the present invention is defined by the scope of claims, and is intended to include any modifications within the scope and meaning equivalent to the terms of the claims.

DESCRIPTION OF THE REFERENCE SIGNS

1, 1A, 1B: communication system; 10: control unit; 11: display control unit; 12: scanning unit; 13: detecting unit; 14: generating unit; 15: transmitting unit; 16: receiving unit; 17: determining unit; 18: detecting unit; 90: storage device; 90A: storage device; 100: electronic device; 100A, 100B: casing; 100C: hinge; 100D: recess ; 101: main device; 102, 102A: display device; 103: display device; 104: main device; 130: driver; 131: scan signal line driving circuit; 132: data signal line driving circuit; 133: photosensor driving circuit; 134: switch; 135: amplifier; 140, 140A: liquid crystal panel; 141: pixel circuit; 141b, 141g, 141r: sub pixel circuit; 143: electrode pair; 143a: pixel electrode; 143b: counter electrode; 144: photosensor circuit; 145, 145b, 145g, 145r: photo diode; 146: capacitor; 151A: active matrix substrate; 151B: counter substrate; 152: liquid crystal layer; 153b, 153g, 153r: color filter; 157: data signal line; 161: polarizing filter; 162: glass substrate; 163: light shielding layer; 164: alignment film; 173: memory card reader/writer; 174: external communication unit; 175: microphone; 176: speaker; 177: operation key; 179: backlight; 180: image processing engine; 181: driver control unit; 182: timer; 183: signal processing unit; 191: power switch; 192: power source circuit; 193: power source detecting unit; 194: connector; 195: antenna; 196: connector; 230: driver; 240: liquid crystal panel; 274: external communication unit; 279: backlight; 280: image processing engine; 281: driver control unit; 282: timer; 283: signal processing unit; 293: power source detecting unit; 294: connector; 295: antenna; 297: signal strength detecting unit; 900: finger; 1001, 1001 A: first unit; 1002: second unit; 1011: operation system; 1012: communication application; 1013: sub-screen cooperation application; 1014: web browser; 1021: operation system; 1022: communication application; 1023: source description generating application; 1024: web browser; 1300: electronic device; 1410, 1410A: screen, 1412: banner advertisement; 1413: banner advertisement; 1420: screen, 2441: image; 2443: image; 3300: electronic device; 3400: electronic device; 3610: control unit; 3611: display control unit; 3612: scanning unit; 3613: detecting unit; 3614: generating unit; 3615: transmitting unit; 3616: receiving unit; 3617: determining unit; 4700: electronic device; 4710: control unit; 4900: electronic device; 4910: control unit; 4911: display control unit; 4912: scanning unit; 4913: detecting unit; 4914: generating unit; 4915: transmitting unit; 4916: receiving unit; 4917: detecting unit; 4918: determining unit; 4919: detecting unit; 6000: electronic device; 6010: control unit; 6100: electronic device; 6110: control unit; 6500: electronic device; 8000: advertisement server; 8010: control unit; 8011: first receiving unit; 8012: determining unit; 8013: first transmitting unit; 8014: second receiving unit; 8015: generating unit; 8016: second transmitting unit; 8090: storage device; 9000: server; 9010: control unit; 9011: receiving unit; 9012: generating unit; 9013: transmitting unit; 9090: storage device; 17000: terminal device; 7010: control unit; 17011: receiving unit; 17012: transmitting unit; 17070: input device; 17080: display device; 17090: storage device; 18000: server; 18010: control unit; 18011: receiving unit; 18012: determining unit; 18013: transmitting unit; 18014: receiving unit; 18015: generating unit; 18016: transmitting unit; 18017: receiving unit; 18090: storage device; 19000: server; 19010: control unit; 19011: receiving unit; 19012: search unit; 19013: transmitting unit; 19090: storage device; 27000: terminal device; 27010: control unit; 27011: receiving unit; 27012: transmitting unit; 27080: display device; 27090: storage device; 28000: search server; 28010: control unit; 28011: receiving unit; 28012: transmitting unit; 28090: storage device; 29000: ASP server; 29010: control unit; 29011: transmitting unit; 29012: receiving unit; 29013: generating unit; 29090: storage device; 78000: information process system; 78200: information processing terminal; DA01: header; DA02: first field; DA03: second field; DA04: third field; DA05: fourth field; DA06: fifth field; DA07: reserve data area; DA11-DA14: data area.

**Claims**

1. An electronic device (100, 3300, 3400) including a first display panel (140, 140A) and a second display panel (240), the electronic device comprising:

    a storage device (90, 90A) for storing therein application software executable by the electronic device, and first information, associated with said application software, for specifying a server (8000);
    a display control unit (11) for displaying an operation screen of said application software on said first display panel based on launch of said application software;
    a first detecting unit (13) for detecting that the electronic device receives a first input concerned with an operation to said application software;
    a generating unit (14) for generating, based on the detection, a signal to be transmitted to the server specified by said first information;
    a transmitting unit (15) for transmitting said signal generated, to the server; and
    a receiving unit (16) for receiving first image data indicating an advertisement from the server, based on the transmission,
    said display control unit displaying an image that is based on said first image data, on said second display panel.

2. The electronic device according to claim 1, wherein:

    said storage device further stores therein second information for identifying said second display panel,
    as said signal, said generating unit generates a signal including said second information,
    said transmitting unit transmits said signal including said second information, to the server, and
    as said first image data, said receiving unit receives, from the server, image data generated by the server based on said second information.

3. The electronic device according to claim 2, wherein:

said first detecting unit further detects that a second input for selecting the image that is based on said first image data is received, and
based on the detection of said second input, said transmitting unit transmits information indicating that the selection has been made and said second information to the server.

4. The electronic device according to claim 3, wherein:

said second display panel is a touch panel, and
said second input is an input to said touch panel.

5. The electronic device according to claim 4, wherein:

said storage device further stores therein second image data indicating a fingerprint of each user of the electronic device, and attribute information indicating an attribute of said user, in association with each other, and
said touch panel includes a plurality of photosensors built therein along a screen of the touch panel,
the electronic device further comprising a determining unit (17) for determining whether or not said storage device stores therein said second image data matching with image data sensed by said photosensors, wherein when it is determined that said storage device stores therein said second image data matching therewith, said transmitting unit further transmits, to the server, said attribute information associated with said second image data thus determined to match therewith.

6. The electronic device according to claim 1 further comprising a second detecting unit (18) for detecting that an input for operating the electronic device has not been received for a predetermined period of time, wherein when said second detecting unit performs the detection while the operation screen of said application software is displayed on said first display panel, said display control unit displays the image that is based on said first image data, on said second display panel.

7. The electronic device according to claim 1, wherein:

said display control unit enables display on said second display panel when receiving a first command, and
said display control unit disables the display on said second display panel when receiving a second command, and
when said receiving unit receives said first image data while said display control unit disables the display on said second display panel due to reception of said second command,
said receiving unit sends said first command to said display control unit, and
said display control unit displays, based on said first command, the image that is based on said first image data, on said second display panel.

8. The electronic device according to claim 1, wherein:

as said signal, said generating unit generates a signal including information indicating said application software,
said transmitting unit transmits to the server said signal including the information indicating said application software, and
as said first image data, said receiving unit receives, from the server, image data indicating an advertisement concerned with said application software executed.

9. The electronic device according to claim 1, wherein said first input is an input for launching said application software or an input for informing the server of an error taking place when executing said application software.

10. A server (8000) communicating with an electronic device (100, 3300, 3400) including a first display panel (140, 140A) and a second display panel (240), the server comprising:

a storage device (8090) for storing therein first image data indicating an advertisement;
a first receiving unit (8011) for receiving from the electronic device a signal including first information for identifying said first display panel and second information for identifying said second display panel;

a first transmitting unit (8013) for transmitting said second information to another server (9000);

a second receiving unit (8014) for receiving device information of said second display panel from said another server based on the transmission, said device information of said second display panel being specified by said another server based on said second information;

a generating unit (8015) for generating second image data from said first image data based on said device information received; and

a second transmitting unit (8016) for transmitting said second image data generated, to the electronic device.

11. A communication system (1) comprising an electronic device (100, 3300, 3400) including a first display panel (140, 140A) and a second display panel (240), and a first server (8000),

the electronic device including

a first storage device (90, 90A) for storing therein application software executable by the electronic device, first information, associated with said application software, for specifying the first server, and second information for identifying said second display panel,

a display control unit (11) for displaying an operation screen of the application software on said first display panel based on launch of said application software,

a first detecting unit (13) for detecting that the electronic device receives an input concerned with an operation to said application software,

a first generating unit (14) for generating, based on the detection, a signal including said second information and to be transmitted to the first server specified by said first information, and

a first transmitting unit (15) for transmitting said signal generated, to said first server,

said first server including

a second storage device (8090) for storing therein first image data indicating an advertisement,

a first receiving unit (8011) for receiving said signal including said second information, from the electronic device,

a second transmitting unit (8013) for transmitting said second information to a second server (9000),

a second receiving unit (8014) for receiving device information of said second display panel from said second server based on the transmission, said device information of said second display panel being specified by said second server based on said second information,

a second generating unit (8015) for generating second image data from said first image data based on said device information received, and

a third transmitting unit (8016) for transmitting said second image data generated, to the electronic device,

the electronic device further including a third receiving unit (16) for receiving said second image data from said first server,

said display control unit displaying an image that is based on said second image data, on said second display panel.

12. The communication system according to claim 11 further comprising said second server, wherein

said second server includes

a fourth receiving unit (9011) for receiving said second information from said first server, and

a fourth transmitting unit (9013) for transmitting said device information of said second display panel to said first server, said device information of said second display panel being specified based on said second information.

13. A display control method in an electronic device (100, 3300, 3400) including a first display panel (140, 140A) and a second display panel (240), the display control method comprising the steps of:

displaying an operation screen of application software on said first display panel based on launch of the application software in the electronic device;

detecting that the electronic device receives a first input concerned with an operation to said application software (S22);

generating, based on the detection, a signal to be transmitted to a server (8000) specified by information associated with the application software (S24);

transmitting said signal generated, to the server (S26);

receiving image data indicating an advertisement from the server, based on said transmission (S28); and

displaying an image that is based on said image data, on said second display panel (S30).

14. The display control method according to claim 13, wherein:

in the step of generating said signal, a signal including second information for identifying said second display panel is generated,
in the step of transmitting said signal, said signal including said second information is transmitted to the server, and
in the step of receiving said image data, image data generated by the server based on said second information is received from the server.

15. The display control method according to claim 14 further comprising the steps of:

detecting that a second input for selecting the image that is based on said image data is received; and
based on the detection of said second input, transmitting information indicating that the selection has been made and said second information to the server.

16. The display control method according to claim 13, wherein:

in the step of generating said signal, a signal including information indicating said application software is generated,
in the step of transmitting said signal, said signal including the information indicating said application software is transmitted to the server, and
in the step of receiving said image data, image data indicating an advertisement concerned with the application software executed is received from the server.

17. The display control method according to claim 13, wherein
said first input is an input for launching said application software or an input for informing the server of an error taking place when executing said application software,

18. A data communication method in a server (8000) communicating with an electronic device (100, 3300, 3400) including a first display panel (140, 140A) and a second display panel (240), the data communication method comprising the steps of:

from the electronic device, receiving a signal including first information for identifying said first display panel and second information for identifying said second display panel (S52);
transmitting said second information to another server (9000) (S54);
from said another server, receiving device information of said second display panel based on the transmission, the device information of said second display panel being specified by said another server based on said second information (S56);
generating second image data from first image data indicating an advertisement, based on said device information received (S58); and
transmitting said second image data generated, to the electronic device (S60).

19. A program for controlling an electronic device (100, 3300, 3400) including a first display panel (140, 140A) and a second display panel (240), the program causing the electronic device to perform the steps of:

displaying an operation screen of application software on said first display panel based on launch of the application software in the electronic device;
detecting that the electronic device receives an input concerned with an operation to said application software (S22);
generating, based on the detection, a signal to be transmitted to a server (8000) specified by information associated with the application software (S24);
transmitting said signal generated, to the server (S26);
receiving image data indicating an advertisement, from the server based on the transmission (S28); and
displaying an image that is based on said image data, on said second display panel (S30).

20. A program for controlling a server (8000) communicating with an electronic device (100, 3300, 3400) including a first display panel (140, 140A) and a second display panel (240), the program causing the server to perform the steps of:

from the electronic device, receiving a signal including first information for identifying said first display panel and second information for identifying said second display panel (S52);

transmitting said second information to another server (9000) (S54);

from said another server, receiving device information of said second display panel based on the transmission, the device information of said second display panel being specified by said another server (9000) based on said second information (S56);

generating second image data from first image data indicating an advertisement, based on said device information received (S58); and

transmitting said second image data generated, to the electronic device (S60).

21. An electronic device (3600, 4700) comprising:

a first display panel (140, 140A);

a second display panel (240);

a storage device (90, 90A) for storing therein software executable by the electronic device and specifying information for specifying server (18000);

a display control unit (3611) for displaying an operation screen of the software on said first display panel based on launch of said software;

a generating unit (3614) for generating, based on occurrence of an error when executing said software, a signal including error information indicating said error, the signal being to be transmitted to the server specified by said specifying information;

a transmitting unit (3615) for transmitting said signal generated, to the server; and

a receiving unit (3616) for receiving first image data indicating an advertisement, from the server based on the transmission,

said storage device further storing therein second image data indicating a message concerned with said error,

said display control unit displaying an image that is based on said first image data and an image that is based on said second image data, on said second display panel.

22. The electronic device according to claim 21, wherein from the server, said receiving unit receives image data indicating a message concerned with said error, and stores the image data received, in said storage device as said second image data.

23. The electronic device according to claim 21, wherein:

said storage device further stores therein identification information for identifying said second display panel, as said signal, said generating unit generates a signal further including said identification information,

said transmitting unit transmits said signal including said identification information, to the server, and

from the server, said receiving unit receives image data generated by the server based on said identification information, as said first image data and said second image data.

24. The electronic device according to claim 23 further comprising a detecting unit (3613) for detecting that an input for selecting the image that is based on said first image data is received, wherein

based on the detection of said input, said transmitting unit transmits information indicating that the selection has been made and said identification information to the server.

25. The electronic device according to claim 24, wherein:

said second display panel is a touch panel, and

said input is an input to said touch panel.

26. The electronic device according to claim 25, wherein:

said storage device further stores therein third image data indicating a fingerprint of a user of the electronic device, and attribute information indicating an attribute of said user, in association with the user, and

said touch panel includes a plurality of photosensors built therein along a screen of the touch panel,

the electronic device further comprising a determining unit (3617) for determining whether or not said storage device stores therein third image data matching with image data obtained by sensing performed by said photosensor, wherein

when it is determined that said third image data matching therewith is stored in said storage device, said transmitting unit further transmits, to the server, said attribute information associated with the third image data determined to match therewith.

27. The electronic device according to claim 21, wherein:

said display control unit enables display on said second display panel when receiving a first command, and disables the display on said second display panel when receiving a second command, and

when said receiving unit receives said first image data while said display control unit disables the display on said second display panel due to reception of said second command,

said receiving unit sends said first command to said display control unit, and

based on said first command, said display control unit displays an image that is based on said first image data and an image that is based on said second image data, on said second display panel.

28. A server (18000) communicating with an electronic device (3600, 4700) including a first display panel (140, 140A) and a second display panel (240), and a first communication device (19000), the server comprising:

a storage device (18090) for storing therein device information of said second display panel and first image data indicating an advertisement;

a first receiving unit (18011) for receiving from the electronic device a signal including error information indicating an error taking place when executing software in the electronic device;

a first transmitting unit (18013) for transmitting said error information to said first communication device;

a second receiving unit (18014) for receiving second image data indicating a message concerned with said error, from said first communication device based on the transmission of said error information;

a generating unit (18015) for generating third image data from said first image data and generating fourth image data from said second image data, based on said device information; and

a second transmitting unit (18016) for transmitting said second image data and said fourth image data to the electronic device.

29. The server according to claim 28 further comprising a third receiving unit (18017) for receiving image data indicating an advertisement from a second communication device (17000), and storing the image data received, in said storage device as said first image data.

30. The server according to claim 28, wherein:

said storage device stores therein identification information for identifying said second display panel, in association with said device information,

said first receiving unit receives, as said signal, a signal further including said identification information, and

said generating unit generates said third image data and said fourth image data based on said device information associated with said identification information received.

31. A communication system (1A) comprising an electronic device (3600, 4700) including a first display panel (140, 140A) and a second display panel (240), and a first communication device (18000),

the electronic device including

a first storage device (90, 90A) for storing therein software executable by the electronic device, specifying information for specifying said first communication device, and identification information for identifying said second display panel,

a display control unit (3611) for displaying an operation screen of the software on said first display panel based on launch of said software,

a generating unit (3614) for generating, based on occurrence of an error when executing said software, a signal including error information indicating said error and said identification information, the signal being to be transmitted to said first communication device specified by said specifying information, and

a first transmitting unit (3615) for transmitting said signal generated, to said first communication device,

said first communication device including

a second storage device (18090) for storing therein device information of said second display panel and said identification information in association with each other, and storing therein first image data indicating an advertisement,

a first receiving unit (18011) for receiving the signal including said error information and said identification information, from the electronic device,

a second transmitting unit (18083) for transmitting said error information to a second communication device (19000),

a second receiving unit (18014) for receiving second image data indicating a message concerned with said error, from said second communication device based on said error information,

a second generating unit (18015) for generating third image data from said first image data and generating fourth image data from said second image data based on said device information associated with said identification information received, and

a third transmitting unit (18016) for transmitting said second image data and said fourth image data to the electronic device,

the electronic device further including a third receiving unit (3616) for receiving said second image data and said fourth image data from said first communication device,

said display control unit displaying an image that is based on said second image data and an image that is based on said fourth image data, on said second display panel.

32. The communication system according to claim 31, further comprising said second communication device, wherein said second communication device includes

a fourth receiving unit (19011) for receiving said error information from said first communication device, and

a fourth transmitting unit (19013) for transmitting said second image data to said first communication device.

33. A display control method in an electronic device (3600, 4700) including a first display panel (140, 140A) and a second display panel (240), the display control method comprising the steps of:

displaying an operation screen of software on said first display panel based on launch of the software in the electronic device;

generating, based on occurrence of an error when executing said software, a signal including error information indicating said error, the signal being to be transmitted to a server (18000) specified by information stored in the electronic device (S128);

transmitting said signal generated, to the server (S130);

receiving first image data indicating an advertisement, from the server based on the transmission (S132); and

displaying, on said second display panel, an image that is based on said first image data and an image that is based on second image data indicating a message concerned with said error and stored in a storage device (90, 90A) of the electronic device (S134).

34. The display control method according to claim 33 further comprising the steps of:

from the server, receiving image data indicating a message concerned with said error; and

storing said image data received, in said storage device as said second image data.

35. The display control method according to claim 34, wherein:

the signal including said error information further includes identification information for identifying said second display panel, and

each of said first image data and said second image data is image data generated by the server based on said identification information.

36. The display control method according to claim 35 further comprising the steps of:

detecting that an input for selecting the image that is based on said first image data is received (S136); and

based on the detection of said input, transmitting information indicating that the selection has been made and said identification information to the server (S138).

37. A data communication method in a server (18000) communicating with an electronic device (3600, 4700) including a first display panel (140, 140A) and a second display panel (240), and a first communication device (19000), the data communication method comprising the steps of:

from the electronic device, receiving a signal including error information indicating an error taking place when executing software in the electronic device (S154);

transmitting said error information to said first communication device (S156);

from said first communication device, receiving first image data indicating a message concerned with said error, based on the transmission of said error information (S158);

generating second image data from said first image data and generating fourth image data from third image data indicating an advertisement and stored in a storage device (18090) of the server, based on device information of said second display panel (S162); and
transmitting said second image data and said fourth image data to the electronic device (S164).

38. The data communication method according to claim 37 further comprising the steps of:

receiving image data indicating an advertisement, from a second communication device (17000) (S152); and
storing the image data received, in said storage device as said third image data.

39. The data communication method according to claim 37, wherein:

the signal including said error information further includes identification information for identifying said second display panel, and
said second image data and said fourth image data are generated based on said device information associated with said identification information received.

40. A program for controlling an electronic device (3600, 4700) including a first display panel (140, 140A) and a second display panel (240), the program causing the electronic device to perform the steps of:

displaying an operation screen of software on said first display panel based on launch of the software in the electronic device;
generating, based on occurrence of an error when executing said software, a signal including error information indicating said error, the signal being to be transmitted to a server (18000) specified by information stored in the electronic device (S128);
transmitting said signal generated, to the server (S130);
receiving first image data indicating an advertisement, from the server based on said transmission (S132); and
displaying, on said second display panel, an image that is based on said first image data and an image that is based on second image data indicating a message concerned with said error and stored in a storage device (90, 90A) of the electronic device (S134).

41. A program for controlling a second communication device (18000) communicating with an electronic device (3600, 4700) including a first display panel (140, 140A) and second display panel (240), and a first communication device (19000), the program causing said second communication device to perform the steps of:

from the electronic device, receiving a signal including error information indicating an error taking place when executing software in the electronic device (S154);
transmitting said error information to said first communication device (S156);
from said first communication device, receiving first image data indicating a message concerned with said error, based on the transmission of said error information (5158);
generating second image data from said first image data and generating fourth image data from third image data indicating an advertisement and stored in a storage device (18090) of said second communication device, based on device information of said second display panel (S162); and
transmitting said second image data and said fourth image data to the electronic device (S164).

42. An electronic device (4900, 6000, 6100) including a first display panel (140, 140A) and a second display panel (240), the electronic device comprising:

a transmitting unit (4915) for transmitting, to a first server (28000), a first signal requesting transmission of first information for displaying a web page including a first advertisement;
a receiving unit (4916) for receiving said first information, and second information, associated with said first advertisement, for specifying second server (29000), from said first server based on the transmission of said first signal;
a display control unit (4911) for displaying said web page on said first display panel based on said first information;
a first detecting unit (4913) for detecting that the electronic device receives a first input for selecting said first advertisement in said web page displayed; and
a generating unit (4914) for generating, based on the detection, a second signal to be transmitted to said second server specified by said second information,
when the detection is performed, said transmitting unit further transmitting said second signal generated, to said second server,

based on the transmission of said second signal, said receiving unit further receiving, from said second server, first image data including more detailed information than information indicated by said first advertisement selected,

said display control unit displaying a second advertisement that is based on said first image data, on said second display panel.

**43.** The electronic device according to claim 42, wherein said receiving unit receives said first image data via said first server.

**44.** The electronic device according to claim 42 further comprising a storage device (90, 90A) for storing therein third information for identifying said second display panel, wherein:

said generating unit generates, as said second signal, a signal including said third information,
said transmitting unit transmits the signal including said third information, to said second server, and
as said first image data, said receiving unit receives image data generated by said second server based on said third information, from said second server.

**45.** The electronic device according to claim 44 further comprising a second detecting unit (4917) for detecting that the electronic device receives a second input for selecting said second advertisement displayed on said second display panel, wherein:

based on the detection of said second input, said generating unit generates a third signal including information indicating that the selection has been made and said third information, and
said transmitting unit transmits said third signal to said second server.

**46.** The electronic device according to claim 45, wherein:

said second display panel is a touch panel, and
said second input is an input to said touch panel.

**47.** The electronic device according to claim 44, wherein:

said storage device stores therein second image data indicating a fingerprint of each user of the electronic device and attribute information indicating an attribute of said user, in association with each other, and
said touch panel includes a plurality of photosensors built therein along a screen of the touch panel,
the electronic device further comprising a determining unit (4918) for determining whether or not said storage device stores therein second image data matching with image data sensed by said photosensors, wherein
when it is determined that said storage device stores therein said second image data matching therewith, said transmitting unit further transmits said attribute information associated with said second image data determined to match therewith, to said second server.

**48.** The electronic device according to claim 45 further comprising a third detecting unit (4919) for detecting that an input for operating the electronic device has not been received for a predetermined period of time, wherein
when said third detecting unit performs the detection while said first advertisement is displayed on said first display panel, said display control unit displays said second advertisement on said second display panel.

**49.** The electronic device according to claim 44, wherein:

said display control unit enables display on said second display panel when receiving a first command, and disables the display on said second display panel when receiving a second command, and
when said receiving unit receives said first image data while said display control unit disables the display on the said second display panel due to reception of said second command,
said receiving unit sends said first command to said display control unit, and
said display control unit displays said second advertisement on said second display panel based on said first command.

**50.** An electronic device (4900, 6000, 6100) including a first display panel (140, 140A) and a second display panel (240), the electronic device comprising:

a transmitting unit (4915) for transmitting, to a first server (28000), a first signal requesting transmission of first information for displaying a web page including a first advertisement;

a receiving unit (4916) for receiving said first information, and second information, associated with said first advertisement, for specifying a second server (29000), from said first server based on the transmission of said first signal;

a display control unit (4911) for displaying said web page on said first display panel based on said first information; and

a first detecting unit (4913) for detecting that the electronic device receives a first input for selecting said first advertisement in said web page displayed,

based on the transmission of said first signal, said receiving unit receiving, from said second server specified based on said second information, first image data for displaying a second advertisement including more detailed information than information indicated by said first advertisement,

when the detection is performed, said display control unit displaying the second advertisement that is based on said first image data, on said second display panel.

51. A server (28000) communicating with an electronic device (4900, 6000, 6100) including a first display panel (140, 140A) and a second display panel (240), the server comprising:

a storage device (28090) for storing therein first information for displaying a web page including a first advertisement, and second information, associated with said first advertisement, for specifying another server (29000);

a transmitting unit (28012) for transmitting said first information and said second information to the electronic device based on reception of a signal from the electronic device, the signal requesting transmission of said first information to the electronic device; and

a receiving unit (28011) for receiving a signal including third information for identifying said first display panel and fourth information for identifying said second display panel, from the electronic device based on the transmission,

based on the reception, said transmitting unit transmitting said third information and said fourth information to said another server.

52. The server according to claim 51, wherein:

based on the transmission of said third information and said fourth information, said receiving unit receives, from said another server, image data generated by said another server based on said fourth information and including more detailed information than information indicated by said first advertisement, and

said transmitting unit further transmits said image data received, to the electronic device.

53. A server (29000) communicating with an electronic device (4900, 6000, 6100) including a first display panel (140, 140A) and a second display panel (240), the server comprising:

a storage device (29090) for storing therein first image data indicating a first advertisement, second image data associated with the first image data and including more detailed information than information indicated by said first advertisement, and device information of said second display panel;

a receiving unit (29012) for receiving, from the electronic device via another server (28000), information indicating that said first advertisement displayed in the electronic device is selected, first information for identifying said first display panel, and second information for identifying said second display panel;

a generating unit (29013) for generating third image data from said second image data based on device information of said second display panel, the device information of said second display panel being specified by said second information; and

a transmitting unit (29011) for transmitting said third image data to the electronic device.

54. The server according to claim 53, wherein said transmitting unit transmits said third image data to the electronic device via said another server.

55. A communication system (1B) comprising a first server (28000) and an electronic device (4900, 6000, 6100) including a first display panel (140, 140A) and a second display panel (240),
said first server including
a storage device (28090) for storing therein first information for displaying a web page including a first advertisement, and second information, associated with said first advertisement, for specifying a second server (29000), and

a first transmitting unit (28012) for transmitting said first information and said second information to the electronic device, based on reception of a first signal from the electronic device, the first signal requesting transmission of said first information to the electronic device,
the electronic device including
a second transmitting unit (4915) for transmitting said first signal to said first server,
a first receiving unit (4916) for receiving said first information and said second information from said first server based on the transmission of said first signal,
a display control unit (4911) for displaying said web page on said first display panel based on said first information received, and
a detecting unit (4913) for detecting that the electronic device receives a first input for selecting said first advertisement in said web page displayed,
when the detection is performed,
said second transmitting unit further transmitting a second signal to said second server specified based on said second information,
said first receiving unit further receiving first image data including more detailed information than information indicated by said first advertisement selected, from said second server based on the transmission of said second signal,
said display control unit displaying a second advertisement that is based on said first image data, on said second display panel.

56. The communication system according to claim 55 further comprising said second server, wherein:

said second server includes
a storage device (29090) for storing therein second image data indicating said first advertisement, third image data associated with the second image data and including more detailed information than the information indicated by said first advertisement, and device information of said second display panel,
a second receiving unit (29012) for receiving, from the electronic device via said first server, information indicating that said first advertisement displayed in the electronic device has been selected, third information for identifying said first display panel, and fourth information for identifying said second display panel,
a generating unit (29013) for generating said first image data from said third image data based on the device information of said second display panel, the device information of said second display panel being specified based on said fourth information, and
a third transmitting unit (29011) for transmitting said first image data to the electronic device.

57. A display control method in an electronic device (4900, 6000, 6100) including a first display panel (140, 140A) and a second display panel (240), the display control method comprising the steps of:

transmitting, to a first server (28000), a first signal requesting transmission of first information for displaying a web page including a first advertisement (S232);
receiving said first information, and second information, associated with said first advertisement, for specifying a second server (29000), from said first server based on the transmission of said first signal (S234);
displaying said web page on said first display panel based on said first information;
detecting that the electronic device receives an input for selecting said first advertisement in said web page displayed (S236);
generating, based on the detection, a second signal to be transmitted to the server specified by said second information;
transmitting said second signal generated, based on the detection (S238);
receiving image data including more detailed information than information indicated by said first advertisement selected, from said second server based on the transmission of said second signal (S240); and
displaying a second advertisement that is based on said image data, on said second display panel.

58. A display control method in an electronic device (4900, 6000, 6100) including a first display panel (140, 140A) and a second display panel (240), the display control method comprising the steps of:

transmitting, to a first server (28000), a first signal requesting transmission of first information for displaying a web page including a first advertisement (S232, S322);
receiving said first information, and second information, associated with said first advertisement, for specifying a second server (29000), from said first server based on the transmission of said first signal (S234, S324);
receiving, based on the transmission of said first signal, image data for displaying a second advertisement including more detailed information than information indicated by said first advertisement, from said second server specified based on said second information (S240, S326);

displaying said web page on said first display panel based on said first information;

detecting that the electronic device receives an input for selecting said first advertisement in said web page displayed (S242, S328); and

when the detection is performed, displaying the second advertisement that is based on said image data, on said second display panel.

**59.** A data communication method in a server (28000) communicating with an electronic device (4900, 6000, 6100) including a first display panel (140, 140A) and a second display panel (240), the data communication method comprising the steps of:

based on reception of a signal from the electronic device to request transmission of first information for displaying a web page including an advertisement, transmitting to the electronic device said first information, and second information, associated with said advertisement, for specifying another server (29000) (S254);

based on the transmission, receiving from the electronic device a signal including third information for identifying said first display panel and fourth information for identifying said second display panel (S256); and

based on the reception, transmitting said third information and said fourth information to said another server (S258).

**60.** A data communication method in a server (29000) for communicating with an electronic device (4900, 6000, 6100) including a first display panel (140, 140A) and a second display panel (240), the data communication method comprising the steps of:

from the electronic device via another server (28000), receiving information indicating that an advertisement displayed in the electronic device has been selected, first information for identifying said first display panel, and second information for identifying said second display panel (S272);

based on device information of said second display panel specified by said second information, generating third image data from second image data including more detailed information than information indicated by said advertisement and associated with first image data indicating said advertisement (S276); and

transmitting said third image data to the electronic device (S278).

**61.** A program for controlling an electronic device (4900, 6000, 6100) including a first display panel (140, 140A) and a second display panel (240), the program causing the electronic device to perform the steps of:

transmitting, to a first server (28000), a first signal requesting transmission of first information for displaying a web page including a first advertisement (S232);

receiving said first information, and second information, associated with said first advertisement, for specifying a second server (29000), from said first server based on the transmission of said first signal (S234);

displaying said web page on said first display panel based on said first information;

detecting that the electronic device receives an input for selecting said first advertisement in said web page displayed (S236);

generating, based on the detection, a second signal to be transmitted to the server specified by said second information;

transmitting said second signal generated, based on the detection (S238);

receiving image data including more detailed information than information indicated by said first advertisement selected, from said second server based on the transmission of said second signal (S240); and

displaying a second advertisement that is based on said image data, on said second display panel.

**62.** A program for controlling an electronic device (4900, 6000, 6100) including a first display panel (140, 140A) and a second display panel (240), the program causing the electronic device to perform the steps of:

transmitting, to a first server (28000), a first signal requesting transmission of first information for displaying a web page including a first advertisement (S232, S322);

receiving said first information, and second information, associated with said first advertisement, for specifying a second server (29000), from said first server based on the transmission of said first signal (S234, S324);

receiving, based on the transmission of said first signal, image data for displaying a second advertisement including more detailed information than information indicated by said first advertisement, from said second server specified based on said second information (S240, S326);

displaying said web page on said first display panel based on said first information;

detecting that the electronic device receives an input for selecting said first advertisement in said web page displayed (S242, S328); and

when the detection is performed, displaying the second advertisement that is based on said image data, on said second display panel.

63. A program for controlling a server (28000) communicating with an electronic device (4900, 6000, 6100) including a first display panel (140, 140A) and a second display panel (240), the program causing the server to perform the steps of:

based on reception of a signal from the electronic device to request transmission of first information for displaying a web page including an advertisement, transmitting to the electronic device said first information, and second information, associated with said advertisement, for specifying another server (29000) (S254);

based on the transmission, receiving from the electronic device a signal including third information for identifying said first display panel and fourth information for identifying said second display panel (S256); and

based on the reception, transmitting said third information and said fourth information to said another server (S258).

64. A program for controlling a server (29000) communicating with an electronic device (4900, 6000, 6100) including a first display panel (140, 140A) and a second display panel (240), the program causing the server to perform the steps of:

from the electronic device via another server (28000), receiving information indicating that an advertisement displayed in the electronic device has been selected, first information for identifying said first display panel, and second information for identifying said second display panel (S272);

based on device information of said second display panel specified by said second information, generating third image data from second image data including more detailed information than information indicated by said advertisement and associated with first image data indicating said advertisement (S276); and

transmitting said third image data to the electronic device (S278).

65. An electronic device (6500) comprising:

a first display unit (140, 140A) for displaying an image thereon;

a second display unit (240) for displaying an image thereon;

a storage unit for storing therein content data to be displayed on said first display unit;

an extracting unit for extracting data of an image given a specific attribute, from said content data stored;

a generating unit for, based on the data of the image given said specific attribute thus extracted by said extracting unit, generating data for displaying the image on said second display unit; and

a control unit for displaying the image given said specific attribute, on said second display unit based on the data generated by said generating unit.

66. The electronic device according to claim 65, further comprising a determining unit for determining whether or not the image given said specific attribute is displayed on said first display unit, wherein

said extracting unit extracts the data of the image given said specific attribute, when said determining unit determines that the image given said specific attribute is not displayed on said first display unit.

67. The electronic device according to claim 66, wherein said storage unit stores therein programs of a plurality of applications including a first application for displaying said content data on said first display unit,

the electronic device further comprising an application executing unit for executing a program of an application stored in said storage unit, wherein

said determining unit determines that the image given said specific attribute is not displayed on said first display unit, when said first application and another application different from said first application are launched and a display screen of said another application is displayed on said first display unit so as to lie over a display location of the image given said specific attribute in a display screen of said first application.

68. The electronic device according to claim 65, wherein:

said extracting unit extracts a plurality of pieces of data of images given said specific attribute, from said content data,

said generating unit generates pieces of data for displaying the images on said second display unit, respectively for the plurality of pieces of data of the images thus extracted by said extracting unit, and

based on the plurality of pieces of data thus generated by said generating unit for displaying said images on said second display unit, said control unit alternately displays the plurality of images given said specific attribute on said second display unit.

69. The electronic device according to claim 65, wherein

said specific attribute includes link information, and

said second display unit has a touch sensor built therein,

the electronic device further comprising an access unit for accessing said link information when a touch operation is performed onto said second display unit while said second display unit displays the image given said specific attribute.

70. The electronic device according to claim 69, wherein said touch sensor is constituted by a photosensor.

71. The electronic device according to claim 65, wherein said generating unit generates the data such that the image given said specific attribute is displayed in a size corresponding to said second display unit.

72. A control method for an electronic device (6500) including a first display unit (140, 140A) and a second display unit (240) each for displaying an image thereon, the control method comprising the steps of:

storing content data to be displayed on said first display unit;

extracting data of an image given a specific attribute, from said content data stored;

generating data for displaying the image on said second display unit, based on said data of the image given said specific attribute thus extracted (SB20); and

based on said data generated, displaying the image given said specific attribute on said second display unit (SB30).

73. A computer readable program for information display, executed by an electronic device (6500) including a first display unit (140, 140A) and a second display unit (240) each for displaying an image thereon, the program causing the electronic device to perform the steps of:

storing content data to be displayed on said first display unit;

extracting data of an image given a specific attribute, from said content data stored;

generating data for displaying the image on said second display unit, based on said data of the image given said specific attribute thus extracted (SB20); and

based on said data generated, displaying the image given said specific attribute on said second display unit (SB30).

FIG.1

# FIG.2

EP 2 393 012 A1

FIG.3

EP 2 393 012 A1

FIG.4

153r       153g       153b

161
162
163
143b
164
152
164
162
161

151B

140

151A

179

157   143a   157 157   143a    145 143a

FIG.5

|  | RESET PERIOD | SENSING PERIOD | READING PERIOD |

RSi    VDD   VDDR   VSSR

RWi    VDD   VDDR   VSSR

VINT    VDD   VDDR   VSSR    Vf      DARK      BRIGHT     DARK

VPIX    VDD   VDDR   VSSR      DARK   BRIGHT

FIG.6

FIG.7

| HEADER | FIRST FIELD | SECOND FIELD | THIRD FIELD | FOURTH FIELD | FIFTH FIELD | RESERVE |
|--------|-------------|--------------|-------------|--------------|-------------|---------|

DA01　DA02　DA03　DA04　DA05　DA06　DA07

# FIG.8

| TYPE | NUMBER | FIELD NAME | VALUE | DEFINITION | MEANING |
|---|---|---|---|---|---|
| 000 | 1 | TIMING | 00 | SENSE | REQUEST SCAN DATA AT THE TIME |
| | | | 01 | EVENT | REQUEST SCAN DATA WHEN CHANGE IS MADE |
| | | | 10 | ALL | REQUEST SCAN DATA FOR EVERY FIXED PERIOD OF TIME |
| | 2 | DATA TYPE | 001 | COORDINATES | CENTRAL COORDINATES OF PARTIAL IMAGE |
| | | | 010 | PARTIAL IMAGE | ONLY CHANGED PARTIAL IMAGE |
| | | | 011 | COORDINATES + PARTIAL IMAGE | CENTRAL COORDINATES OF PARTIAL IMAGE AND CHANGED PARTIAL IMAGE |
| | | | 100 | ENTIRE IMAGE | IMAGE OF ENTIRE SCANNED SCREEN |
| | | | 101 | COORDINATES + ENTIRE IMAGE | CENTRAL COORDINATES OF PARTIAL IMAGE AND IMAGE OF ENTIRE SCANNED SCREEN |
| | 3 | SCANNING METHOD | 00 | REFLECTION | SCAN WITH BACKLIGHT LIT ON |
| | | | 01 | TRANSMISSION | SCAN WITH BACKLIGHT LIT OFF |
| | | | 10 | REFLECTION/TRANSMISSION | UTILIZATION OF BOTH REFLECTION AND TRANSMISSION |
| | 4 | IMAGE GRADATION | 00 | BINARY | DATA INDICATIVE OF BLACK AND WHITE |
| | | | 01 | MULTIPLE VALUE | MULTIPLE GRADATION DATA |
| | | | 10 | COLOR | RGB DATA |
| | 5 | RESOLUTION | 0 | HIGH | HIGH RESOLUTION IMAGE (FOR IMAGE RECOGNITION OF FINGERPRINT, ETC) |
| | | | 1 | LOW | LOW RESOLUTION IMAGE (SHADOW OF FINGER OR HAND, ETC) |

EP 2 393 012 A1

# FIG.9

| TYPE | NUMBER | FIELD NAME | VALUE | DEFINITION | MEANING |
|---|---|---|---|---|---|
| 001 | 1 | DISPLAY REQUEST | 001 | IMAGE DISPLAY REQUEST | REQUEST TO DISPLAY IMAGE ON SUB DISPLAY |
| | | | 010 | ICON DISPLAY REQUEST | REQUEST TO DISPLAY ICON ON SUB DISPLAY |
| | | | 011 | HANDWRITING AREA DISPLAY REQUEST | REQUEST TO DISPLAY HANDWRITING AREA ON SUB DISPLAY |
| | | | ⋮ | ⋮ | ⋮ |
| | 2 | THE NUMBER /KIND | | THE NUMBER OF IMAGE /KIND | THE NUMBER OF PIECES OF DISPLAY IMAGE INFORMATION/HANDWRITING LANGUAGE NUMBER |
| | 3 | DISPLAY RANGE | 01 | COORDINATES | DESIGNATE RANGE OF DISPLAY WITH COORDINATES |
| | | | 10 | ENTIRE DISPLAY | DESIGNATE RANGE OF DISPLAY AS A WHOLE |
| | | | ⋮ | ⋮ | ⋮ |
| | 4 | IMAGE | | IMAGE DATA | DISPLAYED IMAGE DATA AND INFORMATION OF LOCATION FOR DISPLAY |

EP 2 393 012 A1

## FIG.10

| TYPE | NUMBER | FIELD NAME | VALUE | DEFINITION | MEANING |
|---|---|---|---|---|---|
| 010 | 1 | OS PROCESSING REQUEST | 01 | OS TYPE REQUEST | REQUEST TRANSMISSION OF OS TYPE IN MAIN DEVICE |
| | | | 10 | OS LAUNCH | REQUEST LAUNCH OF OS DESIGNATED BY OS INFORMATION |
| | | | ⋮ | ⋮ | ⋮ |
| | 4 | OS INFORMATION | 000 | | NOT INSTRUCT LAUNCH OF OS |
| | | | 001 | FIRST OS | SELECT LAUNCH OF FIRST OS |
| | | | 010 | SECOND OS | SELECT LAUNCH OF SECOND OS |
| | | | ⋮ | ⋮ | ⋮ |

EP 2 393 012 A1

## FIG.11

| TYPE | NUMBER | FIELD NAME | VALUE | DEFINITION | MEANING |
|---|---|---|---|---|---|
| 011 | 1 | LAUNCHED APPLICATION | | DESIGNATE APPLICATION TO BE LAUNCHED | DESIGNATE APPLICATION TO BE LAUNCHED IN MAIN DEVICE |
| | 2 | LAUNCH INFORMATION | | LAUNCH INFORMATION | LAUNCH SETTINGS/INFORMATION USED AFTER LAUNCH |

EP 2 393 012 A1

FIG.12

| TYPE | NUMBER | FIELD NAME | VALUE | DEFINITION | MEANING |
|---|---|---|---|---|---|
| 100 | 1 | RECEPTION REQUEST | 01 | FILE TRANSFER | REQUEST MAIN DEVICE TO RECEIVE FILE |
| | 2 | THE NUMBER | | THE NUMBER OF FILES | THE NUMBER OF FILES TO BE TRANSMITTED |
| | 3 | FILE | | FILE | FILE TO BE TRANSFERRED |

EP 2 393 012 A1

# FIG.13

| TYPE | NUMBER | FIELD NAME | VALUE | DEFINITION | MEANING |
|---|---|---|---|---|---|
| 101 | 1 | DESTINATION TYPE | 001 | INFRARED COMMUNICATION | SELECT INFRARED COMMUNICATION |
| | | | 010 | Bluetooth | SELECT BLUETOOTH COMMUNICATION |
| | | | 011 | LAN | SELECT LAN COMMUNICATION |
| | | | ⋮ | ⋮ | ⋮ |
| | 2 | DESTINATION OF CONNECTION | 000 | | NO INFORMATION OF DESTINATION OF CONNECTION |
| | | | 001 | MAIN CONNECTION DESTINATION REQUEST | REQUEST INFORMATION OF DESTINATION OF CONNECTION FROM MAIN SIDE |
| | | | 010 | SUB CONNECTION DESTINATION REQUEST | REQUEST INFORMATION OF DESTINATION OF CONNECTION FROM SUB SIDE |
| | | | 011 | MAIN CONNECTION DESTINATION SETTING | SET INFORMATION OF DESTINATION OF CONNECTION FROM MAIN SIDE |
| | | | 100 | SUB CONNECTION DESTINATION SETTING | SET INFORMATION OF DESTINATION OF CONNECTION FROM SUB SIDE |
| | | | ⋮ | ⋮ | ⋮ |
| | 3 | DESTINATION OF TRANSFER | 000 | | NO INFORMATION OF DESTINATION OF TRANSFER |
| | | | 001 | MAIN TRANSFER DESTINATION REQUEST | REQUEST INFORMATION OF DESTINATION OF TRANSFER FROM MAIN SIDE |
| | | | 010 | SUB TRANSFER DESTINATION REQUEST | REQUEST INFORMATION OF DESTINATION OF TRANSFER FROM SUB SIDE |
| | | | 011 | MAIN TRANSFER DESTINATION SETTING | SET INFORMATION OF DESTINATION OF TRANSFER FROM MAIN SIDE |
| | | | 100 | SUB TRANSFER DESTINATION SETTING | SET INFORMATION OF DESTINATION OF TRANSFER FROM SUB SIDE |
| | | | ⋮ | ⋮ | ⋮ |
| | 4 | TIMING FOR OBTAINING STRENGTH IN COMMUNICATION | 00 | | NOT REQUEST TO OBTAIN STRENGTH |
| | | | 00 | SENSE | REQUEST MOST RECENT DATA |
| | | | 01 | EVENT | REQUEST DATA UPON OCCURRENCE OF CHANGE |
| | | | 10 | ALL | REQUEST DATA FOR PREDETERMINED CYCLE |
| | | | ⋮ | ⋮ | ⋮ |

FIG.14

| DA11 | DA12 | DA13 | DA14 |
|---|---|---|---|
| HEADER | COORDINATES | TIME | IMAGE (ENTIRE IMAGE OR PARTIAL IMAGE) |

FIG.15

FIG.16

FIG.17

EP 2 393 012 A1

900

140

179

145  145  145  145  145

FIG.18

EP 2 393 012 A1

EP 2 393 012 A1

FIG.19

85

FIG.20

FIG.21

FIG.22

EP 2 393 012 A1

## FIG.23

## FIG.24

| COMPONENT | COMPONENT INFORMATION | |
|---|---|---|
| CPU | 1.7GHz | |
| MAIN MEMORY | 4GB | |
| VRAM | 1GB | |
| MAIN LIQUID CRYSTAL PANEL | Main-ABCD-P123 | ID11 |
| SUB LIQUID CRYSTAL PANEL | Sub-ABCD-P987 | ID12 |
| HDD | 160GB | |
| : | : | |

FIG.25

| ITEM | DETAIL |
|---|---|
| RESOLUTION | 480 × 1024 |
| DISPLAY COLOR | 260000 COLORS |
| PANEL SIZE | 3.8 INCH |
| ⋮ | ⋮ |

FIG.26

| NAME OF APPLICATION SOFTWARE | SERVER SPECIFYING INFORMATION | |
|---|---|---|
| WORD PROCESSING SOFTWARE W | http://ABCD.co.jp/serverX/ | ID21 |
| SPREAD SHEET S | http://ABCD.co.jp/serverY/ | ID22 |
| PRESENTATION SOFTWARE P | http://VWXY.co.jp/server/ | ID23 |
| MAIL SOFTWARE M | http://PQRS.com/server-S1/ | ID24 |
| ⋮ | ⋮ | |
| ⋮ | ⋮ | |

FIG.27

# FIG.28

# FIG.29

ELECTRONIC
DEVICE 100

ADVERTISEMENT
SERVER 8000

ASP
SERVER 9000

S2
HARDWARE ENVIRONMENT INFORMATION
APPLICATION SOFTWARE INFORMATION

S4    IDENTIFICATION INFORMATION
OF LIQUID CRYSTAL PANEL 240

S6
DEVICE INFORMATION

S8
ADVERTISEMENT IMAGE DATA

S10    IDENTIFICATION INFORMATION
OF LIQUID CRYSTAL PANEL 240

S12
RESULT DATA

## FIG.30

START

S22
INPUT CONCERNED WITH OPERATION ON APPLICATION SOFTWARE HAS BEEN RECEIVED? — NO

YES

S24
GENERATE SIGNAL INCLUDING HARDWARE ENVIRONMENT INFORMATION AND APPLICATION SOFTWARE INFORMATION

S26
TRANSMIT GENERATED SIGNAL TO ADVERTISEMENT SERVER 8000

S28
RECEIVE IMAGE DATA FROM ADVERTISEMENT SERVER 8000

S30
DISPLAY ADVERTISEMENT THAT IS BASED ON ADVERTISEMENT IMAGE DATA, ON LIQUID CRYSTAL PANEL 240

S32
DETECTED THAT INPUT FOR SELECTING ADVERTISEMENT DISPLAYED ON LIQUID CRYSTAL PANEL 240 HAS BEEN RECEIVED? — NO

YES

S34
TRANSMIT INFORMATION INDICATING THAT ADVERTISEMENT HAS BEEN SELECTED AND IDENTIFICATION INFORMATION OF LIQUID CRYSTAL PANEL 240 TO ADVERTISEMENT SERVER 8000

S36
INSTRUCTION FOR TERMINATING APPLICATION SOFTWARE HAS BEEN RECEIVED? — NO

YES

S38
INSTRUCTION FOR TERMINATING APPLICATION SOFTWARE HAS BEEN RECEIVED? — NO

YES

END

FIG.31

```
           ( START )
               │
               ▼                    ╭─S52
  ┌──────────────────────────────────┐
  │ FROM ELECTRONIC DEVICE 100, RECEIVE │
  │ SIGNAL INCLUDING HARDWARE ENVIRONMENT│
  │ INFORMATION AND APPLICATION SOFTWARE │
  │ INFORMATION                          │
  └──────────────────────────────────┘
               │
               ▼                    ╭─S54
  ┌──────────────────────────────────┐
  │ TRANSMIT IDENTIFICATION INFORMATION OF│
  │ LIQUID CRYSTAL PANEL 240, WHICH IS INCLUDED│
  │ IN HARDWARE ENVIRONMENT INFORMATION, TO│
  │ ASP SERVER 9000                      │
  └──────────────────────────────────┘
               │
               ▼                    ╭─S56
  ┌──────────────────────────────────┐
  │ RECEIVE DEVICE INFORMATION OF LIQUID │
  │ CRYSTAL PANEL 240 FROM ASP SERVER 9000│
  └──────────────────────────────────┘
               │
               ▼                    ╭─S58
  ┌──────────────────────────────────┐
  │ BASED ON DEVICE INFORMATION, GENERATE│
  │ ADVERTISEMENT IMAGE DATA FROM SECOND │
  │ IMAGE DATA                           │
  └──────────────────────────────────┘
               │
               ▼                    ╭─S60
  ┌──────────────────────────────────┐
  │ TRANSMIT ADVERTISEMENT IMAGE DATA TO │
  │ ELECTRONIC DEVICE                    │
  └──────────────────────────────────┘
               │
               ▼
           ( END )
```

FIG.32

```
           ( START )
               │
               ▼                    ╭─S72
  ┌──────────────────────────────────┐
  │ RECEIVE IDENTIFICATION INFORMATION OF LIQUID│
  │ CRYSTAL PANEL 240 FROM ADVERTISEMENT SERVER 8000│
  └──────────────────────────────────┘
               │
               ▼                    ╭─S74
  ┌──────────────────────────────────┐
  │ TRANSMIT DEVICE INFORMATION OF LIQUID CRYSTAL│
  │ PANEL 240 TO ADVERTISEMENT SERVER 8000│
  └──────────────────────────────────┘
               │
               ▼
           ( END )
```

FIG.33

EP 2 393 012 A1

FIG.34

EP 2 393 012 A1

FIG.35

3600

18000

19000

17000

EP 2 393 012 A1

FIG.36

# FIG.37

EP 2 393 012 A1

FIG.38

FIG.39

## FIG.40

3600

140

| ABCD Spreadsheet | | | | | | ▬ ☐ ✕ |
|---|---|---|---|---|---|---|
| FILE EDIT TOOL VIEW | | | | | | |
| | A | B | C | D | E | F |
| 1 | | | | | | |
| 2 | | | | | | |
| 3 | | | | | | |
| 4 | | | | | | |
| 5 | | | | | | |
| 6 | | | | | | |

1401

240

FIG.41

2402

240

TYPING ERROR?
IT SEEMS UNNATURAL JAPANESE.
CHECK FOR TYPING ERROR.
IGNORE THIS MESSAGE IF THERE
IS NO PROBLEM.

2410

PORTABLE PLAYER
NOW ON SALE
·THICKNESS  0.5cm
·MEMORY  20GB
·LIQUID CRYSTAL  4 INCH

BUY — 2411

2420

ABCD, LTD
UTILITY SOFTWARE
FREE
CLICK HERE — 2421

2430

DVD RENTAL
NEW MOVIES NOW
AVAILABLE ON DVD
LIST — 2431

# FIG.42

ELECTRONIC DEVICE 3600

ASP SERVER 18000

SERVER 19000

TERMINAL DEVICE 17000

S102 ORIGINAL ADVERTISEMENT DATA

HARDWARE ENVIRONMENT INFORMATION
ERROR INFORMATION

S104

S106 ERROR INFORMATION

S108 ORIGINAL MESSAGE DATA

DISPLAY IMAGE DATA
(DISPLAY ADVERTISEMENT DATA, DISPLAY MESSAGE DATA)

S110 IDENTIFICATION INFORMATION OF LIQUID CRYSTAL PANEL 240

S112

S114 RESULT DATA

FIG.43

```
                              ┌─────────┐
                              │  START  │
                              └────┬────┘
                                   │        ╭S122
              ┌────────────────────▼─────────────────┐
              │    LAUNCH APPLICATION SOFTWARE        │
              └────────────────────┬─────────────────┘
                                   │        ╭S124
                          ╱────────▼────────╲                    ╭S144
              NO        ╱      ERROR          ╲      ╱───────────────╲
        ┌─────────────╱      OCCURRED?          ╲  ╱  NEW ERROR        ╲  NO
        │             ╲                         ╱   ╲  OCCURRED?       ╱────┐
        │              ╲───────────────────────╱    ╲───────┬───────╱     │
        │                      │ YES                        │ YES          │
  ╭S140 │                      │                            │              │
╱───────▼──────╲               │◄───────────────────────────┘              │
│ INSTRUCTION FOR│             │        ╭S126                              │
│TERMINATING APP.│   ┌─────────▼─────────┐                                 │
│SOFTWARE HAS BEEN│  │  ERROR INDICATION │                                 │
│  RECEIVED?     │   └─────────┬─────────┘                                 │
╲───────┬──────╱              │        ╭S128                              │
  NO│   │ YES      ┌──────────▼──────────────────────┐                    │
     │  │          │ GENERATE SIGNAL INCLUDING        │                    │
     │  │          │ HARDWARE ENVIRONMENT INFORMATION │                    │
     │  │          │ AND ERROR INFORMATION            │                    │
     │  │          └──────────┬───────────────────────┘                   │
     │  │                     │        ╭S130                              │
     │  │          ┌──────────▼──────────┐                                │
     │  │          │ TRANSMIT GENERATED   │                                │
     │  │          │ SIGNAL TO ASP SERVER │                                │
     │  │          │ 18000                │                                │
     │  │          └──────────┬──────────┘                                │
```

LAUNCH APPLICATION SOFTWARE — S122

ERROR OCCURRED? — S124

NEW ERROR OCCURRED? — S144

INSTRUCTION FOR TERMINATING APPLICATION SOFTWARE HAS BEEN RECEIVED? — S140

ERROR INDICATION — S126

GENERATE SIGNAL INCLUDING HARDWARE ENVIRONMENT INFORMATION AND ERROR INFORMATION — S128

TRANSMIT GENERATED SIGNAL TO ASP SERVER 18000 — S130

RECEIVE DISPLAY IMAGE DATA (DISPLAY ADVERTISEMENT DATA AND DISPLAY MESSAGE DATA) FROM ASP SERVER 18000 — S132

DISPLAY IMAGE THAT IS BASED ON DISPLAY IMAGE DATA, ON LIQUID CRYSTAL PANEL 240 — S134

DETECTED THAT INPUT FOR SELECTING ADVERTISEMENT DISPLAYED ON LIQUID CRYSTAL PANEL 240 HAS BEEN RECEIVED? — S136

INSTRUCTION FOR TERMINATING APPLICATION SOFTWARE HAS BEEN RECEIVED? — S142

TRANSMIT INFORMATION INDICATING THAT ADVERTISEMENT HAS BEEN SELECTED AND IDENTIFICATION INFORMATION OF LIQUID CRYSTAL PANEL 240 TO ASP SERVER 18000 — S138

END

# FIG.44

```
                    ┌─────────┐
                    │  START  │
                    └─────────┘
                         │
                         ▼                        ⌐S152
    ┌──────────────────────────────────────────────┐
    │   RECEIVE ORIGINAL ADVERTISEMENT DATA         │
    │   FROM TERMINAL DEVICE 17000                  │
    └──────────────────────────────────────────────┘
                         │
                         ▼                        ⌐S154
    ┌──────────────────────────────────────────────┐
    │   FROM ELECTRONIC DEVICE 3600, RECEIVE        │
    │   SIGNAL INCLUDING HARDWARE ENVIRONMENT        │
    │   INFORMATION AND ERROR INFORMATION           │
    └──────────────────────────────────────────────┘
                         │
                         ▼                        ⌐S156
    ┌──────────────────────────────────────────────┐
    │  TRANSMIT ERROR INFORMATION TO SERVER 19000   │
    └──────────────────────────────────────────────┘
                         │
                         ▼                        ⌐S158
    ┌──────────────────────────────────────────────┐
    │   RECEIVE ORIGINAL MESSAGE DATA FROM          │
    │   SERVER 19000                                │
    └──────────────────────────────────────────────┘
                         │
                         ▼                        ⌐S160
    ┌──────────────────────────────────────────────┐
    │  FROM STORAGE DEVICE, READ OUT DEVICE         │
    │  INFORMATION ASSOCIATED WITH IDENTIFICATION   │
    │  INFORMATION OF LIQUID CRYSTAL PANEL 240,     │
    │  WHICH IS INCLUDED IN HARDWARE ENVIRONMENT     │
    │  INFORMATION.                                 │
    └──────────────────────────────────────────────┘
                         │
                         ▼                        ⌐S162
    ┌──────────────────────────────────────────────┐
    │  BASED ON DEVICE INFORMATION, GENERATE        │
    │  DISPLAY IMAGE DATA (DISPLAY ADVERTISEMENT     │
    │  DATA AND DISPLAY MESSAGE DATA) FROM          │
    │  ORIGINAL ADVERTISEMENT DATA AND ORIGINAL     │
    │  MESSAGE DATA                                 │
    └──────────────────────────────────────────────┘
                         │
                         ▼                        ⌐S164
    ┌──────────────────────────────────────────────┐
    │  TRANSMIT DISPLAY IMAGE DATA TO               │
    │  ELECTRONIC DEVICE 3600                       │
    └──────────────────────────────────────────────┘
                         │
                         ▼
                    ┌─────────┐
                    │  エンド  │
                    └─────────┘
```

# FIG.45

```
         ┌─────────┐
         │  START  │
         └────┬────┘
              │                              ┌S172
    ┌─────────▼──────────────────────────────────┐
    │ RECEIVE ERROR INFORMATION FROM ASP SERVER 18000 │
    └─────────┬──────────────────────────────────┘
              │                              ┌S174
    ┌─────────▼──────────────────────────────────┐
    │ FROM STORAGE DEVICE, READ OUT ORIGINAL MESSAGE  │
    │ DATA CORRESPONDING TO ERROR INFORMATION         │
    └─────────┬──────────────────────────────────┘
              │                              ┌S176
    ┌─────────▼──────────────────────────────────┐
    │      TRANSMIT ORIGINAL MESSAGE DATA             │
    └─────────┬──────────────────────────────────┘
              │
         ┌────▼────┐
         │   END   │
         └─────────┘
```

# FIG.46

```
         ┌─────────┐
         │  START  │
         └────┬────┘
              │                              ┌S182
    ┌─────────▼──────────────────────────────────┐
    │ TRANSMIT ORIGINAL ADVERTISEMENT DATA TO         │
    │ ASP SERVER 18000                                │
    └─────────┬──────────────────────────────────┘
              │                              ┌S184
    ┌─────────▼──────────────────────────────────┐
    │ RECEIVE RESULT DATA FROM ASP SERVER 18000       │
    └─────────┬──────────────────────────────────┘
              │
         ┌────▼────┐
         │   END   │
         └─────────┘
```

**FIG.47**

27000

1B

29000

28000

4900

FIG.48

FIG.49

EP 2 393 012 A1

FIG.50

ELECTRONIC
DEVICE — 4900

ASP SERVER — 29000

28000

CONTROL UNIT — 28010

RECEIVING
UNIT — 28011

TRANSMITTING
UNIT — 28012

TERMINAL
DEVICE — 27000

STORAGE DEVICE — 28090

EP 2 393 012 A1

FIG.51

ELECTRONIC DEVICE ~4900

SEARCH SERVER ~28000

29000

CONTROL UNIT ~29010

RECEIVING UNIT ~29012

TRANSMITTING UNIT ~29011

GENERATING UNIT ~29013

TERMINAL DEVICE ~27000

STORAGE DEVICE 29090

EP 2 393 012 A1

FIG.52

## FIG.53

## FIG.54

4900

140

YYY SEARCH

SEARCH

| WEATHER |
|---------|
| MAP |
| TRIP |
| RAILWAY |
| FOOD |

NEWS
· A, LTD. INTRODUCES NEW TELEVISION
· UPSURGE IN STOCK PRICE
· JAPANESE TEAM WON
· ASSUMPTION OF PRESIDENCY IN NATION B

PORTABLE PLAYER

1402

1411

PORTABLE PLAYER NOW ON SALE
· THICKNESS  0.5cm
· MEMORY  20GB
· LIQUID CRYSTAL  4 INCH
· BATTERY RUN TIME  15 HOURS    BUY

240        2403        2409

# FIG.55

| ELECTRONIC DEVICE 4900 | SEARCH SERVER 28000 | ASP SERVER 29000 | TERMINAL DEVICE 27000 |
|---|---|---|---|

S202 REQUEST SIGNAL

S204 WEB PAGE INFORMATION

S206 HARDWARE ENVIRONMENT INFORMATION

S208 HARDWARE ENVIRONMENT INFORMATION

S210 DETAILED ADVERTISEMENT IMAGE DATA

IDENTIFICATION INFORMATION OF LIQUID CRYSTAL PANEL 240

S212

S214 RESULT DATA

S216 REWARD DATA

S218 REWARD DATA

EP 2 393 012 A1

## FIG.56

START

S232
TRANSMIT REQUEST SIGNAL TO SEARCH SERVER 28000

S234
FROM SEARCH SERVER 28000, RECEIVE WEB PAGE INFORMATION INCLUDING ADVERTISEMENT

S236
FIRST ADVERTISEMENT SELECTED? — NO

YES

S238
TRANSMIT SIGNAL INCLUDING HARDWARE ENVIRONMENT INFORMATION TO SEARCH SERVER 28000

S240
RECEIVE DETAILED ADVERTISEMENT IMAGE DATA FROM ASP SERVER 29000

S242
DETAILED ADVERTISEMENT SELECTED? — NO

YES

S244
TO ASP SERVER 29000, TRANSMIT SIGNAL INCLUDING IDENTIFICATION INFORMATION OF LIQUID CRYSTAL PANEL 240

S246
INPUT FOR CLOSING WEB BROWSER RECEIVED? — NO

YES

END

## FIG.57

START

S252
RECEIVE REQUEST SIGNAL FROM
ELECTRONIC DEVICE 4900

S254
TRANSMIT WEB PAGE INFORMATION
INCLUDING ADVERTISEMENT TO
ELECTRONIC DEVICE 4900

S256
FROM ELECTRONIC DEVICE 4900,
RECEIVE SIGNAL INCLUDING HARDWARE
ENVIRONMENT INFORMATION

S258
TRANSFER HARDWARE ENVIRONMENT
INFORMATION TO ASP SERVER 29000

S260
RECEIVE REWARD DATA FROM
TERMINAL DEVICE 27000

END

FIG.58

START

FROM SEARCH SERVER 28000, RECEIVE
SIGNAL INCLUDING HARDWARE ENVIRONMENT
INFORMATION — S272

IDENTIFICATION
INFORMATION OF SUB LIQUID
CRYSTAL PANEL
EXISTS? — S274

NO

YES

GENERATE DETAILED ADVERTISEMENT
IMAGE DATA BASED ON DEVICE INFORMATION
OF LIQUID CRYSTAL PANEL 240 — S276

TRANSMIT GENERATED IMAGE DATA
TO ELECTRONIC DEVICE 4900 — S278

RECEIVE IDENTIFICATION INFORMATION
OF LIQUID CRYSTAL PANEL 240 FROM
ELECTRONIC DEVICE 4900 — S280

TRANSMIT RESULT DATA TO TERMINAL
DEVICE 27000 — S282

END

FIG.59

START

RECEIVE RESULT DATA FROM ASP SERVER 29000 — S292

TRANSMIT REWARD DATA TO SERVERS 28000, 29000 — S294

END

FIG.60

EP 2 393 012 A1

# FIG.61

EP 2 393 012 A1

# FIG.62

EP 2 393 012 A1

# FIG.63

```
START
```

S322
TRANSMIT REQUEST SIGNAL INCLUDING
HARDWARE ENVIRONMENT INFORMATION
TO SEARCH SERVER 28000

S324
RECEIVE WEB PAGE INFORMATION
FROM SEARCH SERVER 28000

S326
RECEIVE DETAILED ADVERTISEMENT
IMAGE DATA FROM ASP SERVER 29000

S328
FIRST ADVERTISEMENT
SELECTED?
— NO

YES

S334
INPUT FOR
CLOSING WEB BROWSER
RECEIVED?
— NO

YES

S330
DETAILED
ADVERTISEMENT
SELECTED?
— NO

YES

S332
TRANSMIT SIGNAL INCLUDING
IDENTIFICATION INFORMATION
OF LIQUID CRYSTAL PANEL 240
TO ASP SERVER 29000

```
END
```

## FIG.64

SERVER — 6401

ADVERTISEMENT

ADVERTISER — 6402

CONTENT + ADVERTISEMENT

6500

HOMEPAGE A  1412

NEWS   SPORT   WEATHER   TELEVISION   BBS

SERVICE
SHOPPING
AUCTION
TRIP
NEWS
WEATHER
SPORT
FINANCE
TELEVISION
MAP
RAILWAY
GOURMET

NEWSFLASH
● △△△△△△△
● ○○○
● △△
● ×××
● ○○○○○

140
1410
100A
100C
191
177
2441
240
100B

# FIG.65

6500

1002

1001

| | |
|---|---|
| OPERATION SYSTEM ⌐1021 | OPERATION SYSTEM ⌐1011 |
| COMMUNICATION APPLICATION ⌐1022 | COMMUNICATION APPLICATION ⌐1012 |
| SOURCE DESCRIPTION GENERATING APPLICATION ⌐1023 | SUB-SCREEN COOPERATION APPLICATION ⌐1013 |
| APPLICATION P (WEB BROWSER) ⌐1024 | APPLICATION A (WEB BROWSER) ⌐1014 |
| APPLICATION Q ⌐1025 | APPLICATION B ⌐1015 |
| APPLICATION R ⌐1026 | APPLICATION C ⌐1016 |

## FIG.66

```
      ┌─────────────────────────┐
      │      SUB-SCREEN          │
      │ ADVERTISEMENT DISPLAY    │
      └─────────────────────────┘
                   │
                   ▼          ┌─SA10
              ◇ ADVERTISEMENT ◇  NO
              ◇ INFORMATION    ◇ ───┐
              ◇ EXISTS?        ◇
                   │ YES
                   ▼              ┌─SA20
      ┌─────────────────────────────────────┐
      │ TRANSMIT ADVERTISEMENT DISPLAY SOURCE│
      │ DESCRIPTION GENERATING COMMAND       │
      └─────────────────────────────────────┘
                   │
                   ▼
              ┌─────────┐
              │   END   │
              └─────────┘
```

## FIG.67

```
<html><head><title>ENTIRE</title>
<meta http-equiv="Content-Type" content="text/html;
charset=Shift_JIS"></head>
<body bgcolor="#FFFFFF" text="#000000">
......
......
<!-- start ad #nnnn -->
<a herf="http://ad.address/" border="0">
<img src="http://ad.address/img/ad.jpg" width="xxx" height="yyy">
</a>
<!-- end ad #nnnn -->
......
......
</body></html>
```

DE01

FIG.68

| TYPE | NUMBER | FIELD NAME | VALUE | DEFINITION | MEANING |
|---|---|---|---|---|---|
| 110 | 1 | WINDOW IDENTIFICATION INFORMATION | | WINDOW NUMBER | SPECIFY EACH APPLICATION EXECUTED |
| | 2 | INSIDE-WINDOW IDENTIFICATION INFORMATION | | ADVERTISEMENT NUMBER | SPECIFY EACH ADVERTISEMENT IN WINDOW |
| | 3 | ADVERTISEMENT DATA | | ADVERTISEMENT DATA | DATA BETWEEN TAGS FOR ADVERTISEMENT |

EP 2 393 012 A1

## FIG.69

```
         ( ADVERTISEMENT DISPLAY )
                     │
                     ▼
              ╱─────────────╲        SB10
            ╱  ADVERTISEMENT  ╲
           ╱ DISPLAY SOURCE DESCRIPTION ╲──── NO ──┐
           ╲  GENERATING COMMAND       ╱          │
            ╲    RECEIVED?            ╱            │
              ╲─────────────╱                      │
                     │ YES                         │
                     ▼              SB20           │
        ┌───────────────────────────────┐         │
        │ GENERATE ADVERTISEMENT DISPLAY │         │
        │      SOURCE DESCRIPTION        │         │
        └───────────────────────────────┘         │
                     │              SB30           │
                     ▼                             │
        ┌───────────────────────────────┐         │
        │ EXECUTE ACCORDING TO ADVERTISEMENT │     │
        │   DISPLAY SOURCE DESCRIPTION   │         │
        └───────────────────────────────┘         │
                     │                             │
                     ▼         SB40                │
              ╱─────────────╲       NO             │
            ╱    TOUCHED?     ╲──────┐             │
              ╲─────────────╱        │             │
                     │ YES                         
                     ▼              SB50
        ┌───────────────────────────────┐
        │ TRANSMIT MAIN SCREEN DISPLAY COMMAND │
        └───────────────────────────────┘
                     │
                     ▼
                ( END )
```

## FIG.70

```
<html><head><title>SUB SCREEN</title>
<meta http-equiv="Content-Type" content="text/html;
charset=Shift_JIS"></head>
<body bgcolor="#FFFFFF" text="#000000">
<a herf="http://ad.address/" border="0" whichtarget="main">
<img src="http://ad.address/img/ad.jpg" width="xxx1" height="yyy1">
</a>
</body></html>
```

DE11

128

FIG.71

| TYPE | NUMBER | FIELD NAME | VALUE | DEFINITION | MEANING |
|------|--------|------------|-------|------------|---------|
| 111 | 1 | LINKED PAGE | | LINKED PAGE | URL ADDRESS OF LINKED PAGE |

## FIG.72

(A)

HOMEPAGE A

NEWS    SPORT    WEATHER    TELEVISION    BBS

SERVICE
SHOPPING
AUCTION
TRIP
NEWS
WEATHER
SPORT
FINANCE
TELEVISION
MAP
RAILWAY
GOURMET

6500
140
1410
1412
100A
1413
100C
191
177
2441
240
100B

(B)

2441                2443

# FIG.73

6500

140

1420

100A

100C

191

177

2441

240

100B

FIG.74

1420

| | A | B | C | D | E | F |
|---|---|---|---|---|---|---|
| 1 | | | | | | |
| 2 | | | | | | |
| 3 | | | | | | |
| 4 | | | | | | |
| 5 | | | | | | |
| 6 | | | | | | |
| 7 | | | | | | |
| 8 | | | | | | |
| 9 | | | | | | |
| 10 | | | | | | |
| 11 | | | | | | |
| 12 | | | | | | |
| 13 | | | | | | |

FILE(F) EDIT(E) VIEW(V) INSERT(I) FORMAT(O) TOOL(T) DATA(D) WINDOW(W) HELP(H)

Sheet1 Sheet2 Sheet3

START

1410

AGE A

1412

TELEVISION    BBS

SERVICE
SHOPPING
AUCTION
TRIP
NEWS
WEATHER
SPORT
FINANCE
TELEVISION
MAP
RAILWAY
GOURMET

NEWSFLASH
● △△△△△△△△
● ○○○
● △△
● ×××
● ○○○○○

EP 2 393 012 A1

## FIG.75

140

1410

NEWS S|

| SERVICE |
| SHOPPING |
| AUCTION |
| TRIP |
| NEWS |
| WEATHER |
| SPORT |
| FINANCE |
| TELEVISION |
| MAP |
| RAILWAY |
| GOURMET |

● △△△△△△△
● ○○○
● △△
● × × ×
● ○○○○○

1420

## FIG.76

140

1410A

| SPORT |
| FINANCE |
| TELEVISION |
| MAP |
| RAILWAY |
| GOURMET |
| TRAVEL |
| FORTUNE TELLING |
| COOKING |
| PARTY INFORMATION |
| PRESENT |
| MEMO |

NEWSFLASH

● △△△△△△△
● ○○○
● △△
● × × ×
● ○○○○○
● ※※※
● ＊＊＊＊＊
● □□！！
● △△□□□□
● ○○○○○
● ！！！！！！

FIG.77

```
         ┌─────────────────────────┐
         │        SUB-SCREEN       │
         │   ADVERTISEMENT DISPLAY │
         └─────────────────────────┘
                      │
                      ▼         ┌─SA10
              ╱───────────────╲
             ╱  ADVERTISEMENT   ╲  NO
             ╲ INFORMATION EXISTS?╱──────┐
              ╲───────────────╱          │
                      │ YES              │
                      ▼    ┌─SA11        │
         ┌─────────────────────────┐     │
         │ GENERATE ADVERTISEMENT  │     │
         │ DISPLAY SOURCE          │     │
         │ DESCRIPTION             │     │
         └─────────────────────────┘     │
                      │    ┌─SA12        │
                      ▼                  │
         ┌─────────────────────────┐     │
         │ TRANSMIT ADVERTISEMENT  │     │
         │ DISPLAY SOURCE          │     │
         │ DESCRIPTION             │     │
         └─────────────────────────┘     │
                      │    ┌─SA13        │
                      ▼                  │
         ┌─────────────────────────┐     │
         │ INSTRUCTING TO DETECT   │     │
         │ EVENT                   │     │
         └─────────────────────────┘     │
                      │                  │
                      ▼         ┌─SA14    │
              ╱───────────────╲          │
             ╱   TOUCH EVENT    ╲  NO     │
             ╲  TAKES PLACE?    ╱─────────┘
              ╲───────────────╱
                      │ YES
                      ▼    ┌─SA15
         ┌─────────────────────────┐
         │   ACCESS LINKED PAGE    │
         └─────────────────────────┘
                      │
                      ▼
         ┌─────────────────────────┐
         │           END           │
         └─────────────────────────┘
```

FIG.78

78000

78100

140

100A

100C

191

177

100B

100D

78200

240

## INTERNATIONAL SEARCH REPORT

International application No.

PCT/JP2010/051117

### A. CLASSIFICATION OF SUBJECT MATTER
G06F13/00(2006.01)i

According to International Patent Classification (IPC) or to both national classification and IPC

### B. FIELDS SEARCHED

Minimum documentation searched (classification system followed by classification symbols)
G06F13/00

Documentation searched other than minimum documentation to the extent that such documents are included in the fields searched
Jitsuyo Shinan Koho    1922-1996    Jitsuyo Shinan Toroku Koho    1996-2010
Kokai Jitsuyo Shinan Koho    1971-2010    Toroku Jitsuyo Shinan Koho    1994-2010

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2004-127048 A  (Toshiba Corp.), 22 April 2004 (22.04.2004), paragraphs [0033] to [0048]; fig. 1 & US 2005/0040999 A1    & EP 1411414 A2 | 1-73 |
| Y | JP 2003-108654 A  (Kabushiki Kaisha CS Plan), 11 April 2003 (11.04.2003), paragraphs [0032] to [0073]; fig. 1 (Family: none) | 1-73 |
| A | JP 2004-334788 A  (Minoru IKEDA), 25 November 2004 (25.11.2004), paragraphs [0053] to [0161]; fig. 20 (Family: none) | 5,26,47,70 |

☒ Further documents are listed in the continuation of Box C.    ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
09 April, 2010 (09.04.10)

Date of mailing of the international search report
20 April, 2010 (20.04.10)

Name and mailing address of the ISA/
Japanese Patent Office

Authorized officer

Facsimile No.

Telephone No.

Form PCT/ISA/210 (second sheet) (July 2009)

136

**INTERNATIONAL SEARCH REPORT**

| International application No. |
| --- |
| PCT/JP2010/051117 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2004-038535 A (Sumisho Computer Systems Corp.),<br>05 February 2004 (05.02.2004),<br>paragraphs [0049] to [0052]; fig. 3<br>(Family: none) | 9,17,21-41 |
| Y | JP 2002-092469 A (Yugen Kaisha Kureba Corp.),<br>29 March 2002 (29.03.2002),<br>paragraphs [0060] to [0064]; fig. 12<br>(Family: none) | 42-64 |
| Y | JP 2003-006097 A (Kabushiki Kaisha Nappu Digital Communications),<br>10 January 2003 (10.01.2003),<br>paragraphs [0021] to [0035]; fig. 3<br>(Family: none) | 65-73 |

Form PCT/ISA/210 (continuation of second sheet) (July 2009)

**EP 2 393 012 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003087420 A
- JP 2003108282 A
- JP 2007150946 A
- JP 2007164710 A
- JP 2002197361 A
- JP 2008009950 A
- JP 2008090499 A